# EUROPEAN PATENT APPLICATION

(11) **EP 1 821 176 A1**
(43) Date of publication of application: **22.08.2007**
(21) Application number: 05806020.3
(22) Date of filing: 14.11.2005
(51) Int. Cl.: G06F 3/00

(54) **DATA PROCESSING DEVICE AND DATA PROCESSING METHOD**

(30) Priority: 12.11.2004 JP 2004328513
(71) Applicant: JustSystems Corporation, Tokushima-shi, Tokushima 771-0189 (JP)
(72) Inventor: HIRONIWA, Masakazu JustSystem Corporation, Tokushima-shi Tokushima 771-0189 (JP)
(74) Representative: Palmer, Jonathan R.
(86) International application number: PCT/JP2005/020889
(87) International publication number: WO 2006/051962

(57) **Abstract**

An undo technique with improved ease-of-use is provided.
A document processing apparatus executes editing, printing, and storage for a document file. An undo manager records the operation history of the document processing apparatus in an undo stack. The undo manager compresses the operation history stored in the undo stack according to a predetermined condition at a predetermined timing, e.g., at the time of storing the document or the like. For example, in a case that there are multiple branching operation histories, the undo manager compresses a part of the operation history between the state at which the branching occurred and the state at which the branch ends, with the branching start state and the branching end state maintained without being compressed.

## Description

### Technical Field

The present invention relates to a document processing technique, and particularly to a document processing apparatus and a document processing method for processing a document described in a markup language.

### Background Art

XML has been attracting attention as a format that allows the user to share data with other users via a network. This encourages the development of applications for creating, displaying, and editing XML documents (see Patent document 1, for example). The XML documents are created based upon a vocabulary (tag set) defined according to a document type definition.
[Patent Document 1]
   Japanese Patent Application Laid-open No. 2001-290804

### Disclosure of Invention

### [Problems to be Solved by the Invention]

The XML technique allows the user to define vocabularies as desired. In theory, this allows a limitless number of vocabularies to be created. It does not serve any practical purpose to provide dedicated viewer/editor environments for such a limitless number of vocabularies. Conventionally, when a user edits a document described in a vocabulary for which there is no dedicated editing environment, the user is required to directly edit the text-based source file of the document.

The present invention has been made in view of such a situation. Accordingly, it is a general purpose of the present invention to provide a technique for processing data structured by a markup language with improved ease-of-use for the user.

### [Means for Solving the Problems]

An aspect according to the present invention relates to a data processing apparatus. The data processing apparatus comprises: processing means which processes data; storage means which stores a history of the operation of the processing means; and means which compresses an unimportant part of the history according to a predetermined condition.

Also, the compressing means may compress the history at the time of storing the data. Also, an arrangement may be made in which, in a case that there are multiple branching operation histories, the compressing means compresses a part of the operation history that consists of the process from a first state at which branching occurred up to a second state at which the branch ends, and wherein the first state and the second state are maintained without being compressed.

Another aspect according to the present invention relates to a data processing apparatus. The data processing apparatus creates and holds a processing object that represents the data processing content according to an instruction from the user every time the apparatus executes the data processing according to the instruction.
With such an apparatus, in a case that the same kind of data processing is consecutively executed, the data processing apparatus arranges multiple processing objects created in such processing executing steps such that they are reduced to a single processing object, thereby reducing the amount of data required for holding the processing objects.

Also, such an apparatus may create the processing object in the form of an object that represents the processing content which is to be executed according to the user's editing operation for a document file. With such an arrangement, in a case that characters are consecutively input or deleted, the data processing apparatus may arrange multiple processing objects created at the time of inputting or deleting these characters such that they are reduced to a new processing object that corresponds to the input or deletion of the character string, thereby reducing the amount of data required for holding the processing objects.

Also, the data processing apparatus may create the processing object in the form of an object that represents the data processing content according to a document object model defined in order to provide an access method for handling a document as data.

Yet another aspect according to the present invention also relates to a data processing apparatus. The data processing apparatus creates and holds a processing object that represents the data processing content according to an instruction from the user every time the data processing apparatus executes the data processing according to the instruction.
With such an apparatus, upon reception of an instruction to execute the reverse data processing for returning the state to the state before the data processing was executed from the state after the data processing was executed, the data processing apparatus executes the reverse data processing with reference to the processing object that corresponds to the data processing already executed.
With such an apparatus, in a case that the data processing involved branching state transition, the data processing apparatus arranges multiple processing objects created in steps that constitute a process from a first state at which the branching occurred to a second state at which the branch ends such that they are reduced to a single processing object, thereby reducing the amount of data.

Also, the processing object may include the information that indicates the content of data processing and the information that indicates the content of the reverse data processing, which is the reverse of the former data processing.

Yet another aspect according to the present invention also relates to a data processing apparatus. The data processing apparatus executes data processing according to an instruction from a user, and acquires and holds state data that indicates the state that occurred as a result of the data processing executed by the instruction.
With such an apparatus, in a case that the data processing involved branching state transition, the data processing apparatus arranges multiple state data sets acquired in steps that constitute a process from a first state at which the branching occurred to a second state at which the branch ends such that they are reduced to a single state data set, thereby reducing the amount of data required for holding the processing objects.

Note that any combination of the aforementioned components or any manifestation of the present invention realized by modification of a method, device, system, and so forth, is effective as an embodiment of the present invention.

### [Advantages]

The present invention provides a technique for processing data structured by a markup language with improved ease-of-use for the user.

### Brief Description of the Drawings

FIG. 1 is a diagram which shows a configuration of a document processing apparatus according to the background technique.
FIG. 2 is a diagram which shows an example of an XML document which is a processing target.
FIG. 3 is a diagram which shows an example in which the XML document shown in FIG. 2 is mapped to a table described in HTML.
FIG. 4(a) is a diagram which shows an example of a definition file used for mapping the XML document shown in FIG. 2 to the table shown in FIG. 3.
FIG. 4(b) is a diagram which shows an example of a definition file used for mapping the XML document shown in FIG. 2 to the table shown in FIG. 3.
FIG. 5 is a diagram which shows an example of a screen on which the XML document, which has been described in a marks managing vocabulary and which is shown in FIG. 2, is displayed after having been mapped to HTML according to the correspondence shown in FIG. 3.
FIG. 6 is a diagram which shows an example of a graphical user interface provided by a definition file creating unit, which allows the user to create a definition file.
FIG. 7 is a diagram which shows another example of a screen layout created by the definition file creating unit.
FIG. 8 is a diagram which shows an example of an editing screen for an XML document, as provided by the document processing apparatus.
FIG. 9 is a diagram which shows another example of an XML document which is to be edited by the document processing apparatus.
FIG. 10 is a diagram which shows an example of a screen on which the document shown in FIG. 9 is displayed.
Fig. 11(a) is a diagram which shows a basic configuration of a document processing system.
Fig. 11(b) is a block diagram which shows an overall block configuration of a document processing system.
Fig. 11(c) is a block diagram which shows an overall block configuration of a document processing system.
Fig. 12 is a diagram which shows a document management unit in detail.
Fig. 13 is a diagram which shows a vocabulary connection sub-system in detail.
Fig. 14 is a diagram which shows a relation between a program invoker and other components in detail.
Fig. 15 is a diagram which shows a structure of an application service loaded to the program invoker in detail.
Fig. 16 is a diagram which shows a core component in detail.
Fig. 17 is a diagram which shows a document management unit in detail.
Fig. 18 is a diagram which shows an undo framework and an undo command in detail.
Fig. 19 is a diagram which shows the operation in which a document is loaded to the document processing system.
Fig. 20 is a diagram which shows an example of a document and a representation of the document.
Fig. 21 is a diagram which shows a relation between a model and a controller.
Fig. 22 is a diagram which shows a plug-in sub-system, a vocabulary connection, and a connector, in detail.
Fig. 23 is a diagram which shows an example of a VCD file.
Fig. 24 is a diagram which shows a procedure for loading a compound document to the document processing system.
Fig. 25 is a diagram which shows a procedure for loading a compound document to the document processing system.
Fig. 26 is a diagram which shows a procedure for loading a compound document to the document processing system.
Fig. 27 is a diagram which shows a procedure for loading a compound document to the document processing system.
Fig. 28 is a diagram which shows a procedure for loading a compound document to the document processing system.
Fig. 29 is a diagram which shows a command flow.
Fig. 30 is a diagram which shows a configuration of a document processing apparatus according to an embodiment.
Fig. 30(a) is a diagram which shows branching operation histories.
Fig. 30(b) is a diagram which shows branching operation histories in a tree form.
Fig. 32 is a diagram which shows an example of a screen displayed by the document processing apparatus.
Fig. 33 is a diagram for describing an example of the embodiment.
Fig. 34 is a detailed functional block diagram for an undo manager shown in Fig. 30.
Fig. 35 is a schematic diagram for describing the management of history information with respect to a document file.
Fig. 36 is a diagram which shows the state transitions shown in Fig. 35, which have been arranged in a time series manner.
Fig. 37 is a schematic diagram for describing the operation history management for a case in which the branch state S₄ has been removed in Fig. 35 or Fig. 36.
Fig. 38 is a diagram which shows a screen that allows the user to edit a document with reference to the processing objects.
Fig. 39 is a diagram which shows a screen of a user interface for selecting parts of a personal computer shown in Fig. 33.
Fig. 40 is a diagram which shows a screen that displays the state transition with respect to page switching of a Web browser.
Fig. 41 is a diagram which shows a screen for managing the state transition on a time basis.

### Reference Numerals

- 20: document processing apparatus
- 22: main control unit
- 24: editing unit
- 30: DOM unit
- 32: DOM provider
- 34: DOM builder
- 36: DOM writer
- 40: CSS unit
- 42: CSS parser
- 44: CSS provider
- 46: rendering unit
- 50: HTML unit
- 52, 62: control unit
- 54, 64: editing unit
- 56, 66: display unit
- 60: SVG unit
- 70: annotation unit
- 72: annotation detection unit
- 74: annotation display unit
- 76: annotation adding unit
- 78: acquisition unit
- 80: VC unit
- 82: mapping unit
- 84: definition file acquisition unit
- 86: definition file creating unit
- 3000: document processing apparatus
- 3120: undo manager
- 3140: undo stack
- 3020: data processing unit
- 3040: user interface processing unit
- 3042: display unit
- 3044: input unit
- 3060: history processing unit
- 3062: state data acquisition unit
- 3064: object creating unit
- 3068: compressing unit

### Best Mode for Carrying Out the Invention

### (Background technique)

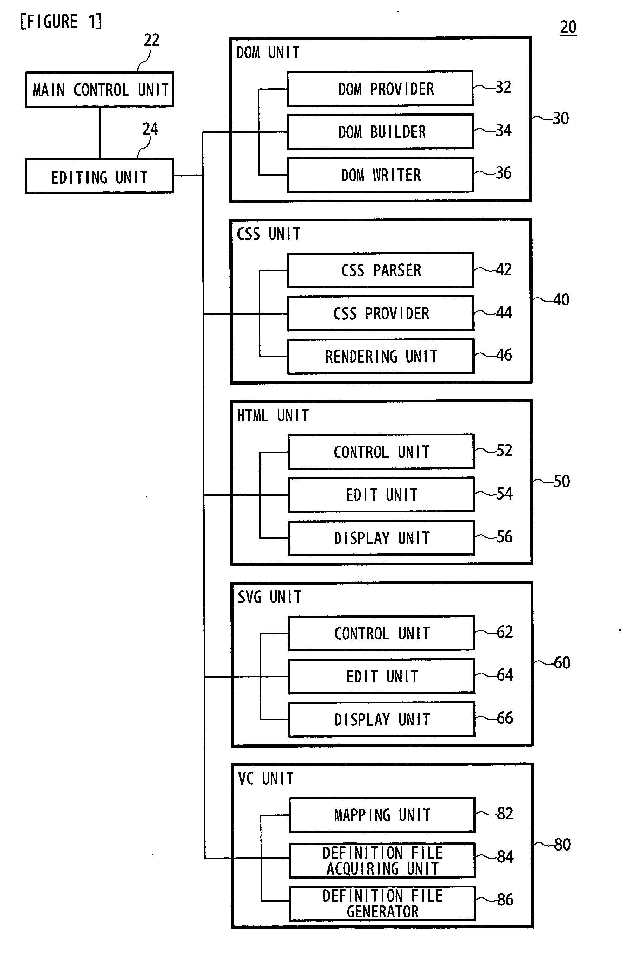

FIG. 1 illustrates a structure of a document processing apparatus 20 according to the background technique. The document processing apparatus 20 processes a structured document where data in the document are classified into a plurality of components having a hierarchical structure. Represented in the background technique is an example in which an XML document, as one type of a structured document, is processed. The document processing apparatus 20 is comprised of a main control unit 22, an editing unit 24, a DOM unit 30, a CSS unit 40, an HTML unit 50, an SVG unit 60 and a VC unit 80 which serves as an example of a conversion unit. In terms of hardware components, these unit structures may be realized by any conventional processing system or equipment, including a CPU or memory of any computer, a memory-loaded program, or the like. Here, the drawing shows a functional block configuration which is realized by cooperation between the hardware components and software components. Thus, it would be understood by those skilled in the art that these function blocks can be realized in a variety of forms by hardware only, software only or the combination thereof.

The main control unit 22 provides for the loading of a plug-in or a framework for executing a command. The editing unit 24 provides a framework for editing XML documents. Display and editing functions for a document in the document processing apparatus 20 are realized by plug-ins, and the necessary plug-ins are loaded by the main control unit 22 or the editing unit 24 according to the type of document under consideration. The main control unit 22 or the editing unit 24 determines which vocabulary or vocabularies describes the content of an XML document to be processed, by referring to a name space of the document to be processed, and loads a plug-in for display or editing corresponding to the thus determined vocabulary so as to execute the display or the editing. For instance, an HTML unit 50, which displays and edits HTML documents, and an SVG unit 60, which displays and edits SVG documents, are implemented in the document processing apparatus 20. That is, a display system and an editing system are implemented as plug-ins for each vocabulary (tag set), so that when an HTML document and an SVG document are edited, the HTML unit 50 and the SVG unit 60 are loaded, respectively. As will be described later, when compound documents, which contain both the HTML and SVG components, are to be processed, both the HTML unit 50 and the SVG unit 60 are loaded.

By implementing the above structure, a user can select so as to install only necessary functions, and can add or delete a function or functions at a later stage, as appropriate. Thus, the storage area of a recording medium, such as a hard disk, can be effectively utilized, and the wasteful use of memory can be prevented at the time of executing programs. Furthermore, since the capability of this structure is highly expandable, a developer can deal with new vocabularies in the form of plug-ins, and thus the development process can be readily facilitated. As a result, the user can also add a function or functions easily at low cost by adding a plug-in or plug-ins.

The editing unit 24 receives an event, which is an editing instruction, from the user via the user interface. Upon reception of such an event, the editing unit 24 notifies a suitable plug-in or the like of this event, and controls the processing such as redoing this event, canceling (undoing) this event, etc.

The DOM unit 30 includes a DOM provider 32, a DOM builder 34 and a DOM writer 36. The DOM unit 30 realizes functions in compliance with a document object model (DOM), which is defined to provide an access method used for handling data in the form of an XML document. The DOM provider 32 is an implementation of a DOM that satisfies an interface defined by the editing unit 24. The DOM builder 34 generates DOM trees from XML documents. As will be described later, when an XML document to be processed is mapped to another vocabulary by the VC unit 80, a source tree, which corresponds to the XML document in a mapping source, and a destination tree, which corresponds to the XML document in a mapping destination, are generated. At the end of editing, for example, the DOM writer 36 outputs a DOM tree as an XML document.

The CSS unit 40, which provides a display function conforming to CSS, includes a CSS parser 42, a CSS provider 44 and a rendering unit 46. The CSS parser 42 has a parsing function for analyzing the CSS syntax. The CSS provider 44 is an implementation of a CSS object and performs CSS cascade processing on the DOM tree. The rendering unit 46 is a CSS rendering engine and is used to display documents, described in a vocabulary such as HTML, which are laid out using CSS.

The HTML unit 50 displays or edits documents described in HTML. The SVG unit 60 displays or edits documents described in SVG. These display/editing systems are realized in the form of plug-ins, and each system is comprised of a display unit (also designated herein as a "canvas") 56 and 66, which displays documents, a control unit (also designated herein as an "editlet") 52 and 62, which transmits and receives events containing editing commands, and an edit unit (also designated herein as a "zone") 54 and 64, which edits the DOM according to the editing commands. Upon the control unit 52 or 62 receiving a DOM tree editing command from an external source, the edit unit 54 or 64 modifies the DOM tree and the display unit 56 or 66 updates the display. These units have a structure similar to the framework of the so-called MVC (Model-View-Controller). With such a structure, in general, the display units 56 and 66 correspond to "View". On the other hand, the control units 52 and 62 correspond to "Controller", and the edit units 54 and 64 and DOM instance corresponds to "Model". The document processing apparatus 20 according to the background technique allows an XML document to be edited according to each given vocabulary, as well as providing a function of editing the HTML document in the form of tree display. The HTML unit 50 provides a user interface for editing an HTML document in a manner similar to a word processor, for example. On the other hand, the SVG unit 60 provides a user interface for editing an SVG document in a manner similar to an image drawing tool.

The VC unit 80 includes a mapping unit 82, a definition file acquiring unit 84 and a definition file generator 86. The VC unit 80 performs mapping of a document, which has been described in a particular vocabulary, to another given vocabulary, thereby providing a framework that allows a document to be displayed and edited by a display/editing plug-in corresponding to the vocabulary to which the document is mapped. In the background technique, this function is called a vocabulary connection (VC). In the VC unit 80, the definition file acquiring unit 84 acquires a script file in which the mapping definition is described. Here, the definition file specifies the correspondence (connection) between the nodes for each node. Furthermore, the definition file may specify whether or not editing of the element values or attribute values is permitted. Furthermore, the definition file may include operation expressions using the element values or attribute values for the node. Detailed description will be made later regarding these functions. The mapping unit 82 instructs the DOM builder 34 to generate a destination tree with reference to the script file acquired by the definition file acquiring unit 84. This manages the correspondence between the source tree and the destination tree. The definition file generator 86 offers a graphical user interface which allows the user to generate a definition file.

The VC unit 80 monitors the connection between the source tree and the destination tree. Upon reception of an editing instruction from the user via a user interface provided by a plug-in that handles a display function, the VC unit 80 first modifies a relevant node of the source tree. As a result, the DOM unit 30 issues a mutation event indicating that the source tree has been modified. Upon reception of the mutation event thus issued, the VC unit 80 modifies a node of the destination tree corresponding to the modified node, thereby updating the destination tree in a manner that synchronizes with the modification of the source tree. Upon reception of a mutation event that indicates that the destination tree has been modified, a plug-in having functions of displaying/editing the destination tree, e.g., the HTML unit 50, updates a display with reference to the destination tree thus modified. Such a structure allows a document described in any vocabulary, even a minor vocabulary used in a minor user segment, to be converted into a document described in another major vocabulary. This enables such a document described in a minor vocabulary to be displayed, and provides an editing environment for such a document.

An operation in which the document processing apparatus 20 displays and/or edits documents will be described herein below. When the document processing apparatus 20 loads a document to be processed, the DOM builder 34 generates a DOM tree from the XML document. The main control unit 22 or the editing unit 24 determines which vocabulary describes the XML document by referring to a name space of the XML document to be processed. If the plug-in corresponding to the vocabulary is installed in the document processing apparatus 20, the plug-in is loaded so as to display/edit the document. If, on the other hand, the plug-in is not installed in the document processing apparatus 20, a check shall be made to see whether a mapping definition file exists or not. And if the definition file exits, the definition file acquiring unit 84 acquires the definition file and generates a destination tree according to the definition, so that the document is displayed/edited by the plug-in corresponding to the vocabulary which is to be used for mapping. If the document is a compound document containing a plurality of vocabularies, relevant portions of the document are displayed/edited by plug-ins corresponding to the respective vocabularies, as will be described later. If the definition file does not exist, a source or tree structure of a document is displayed and the editing is carried out on the display screen.

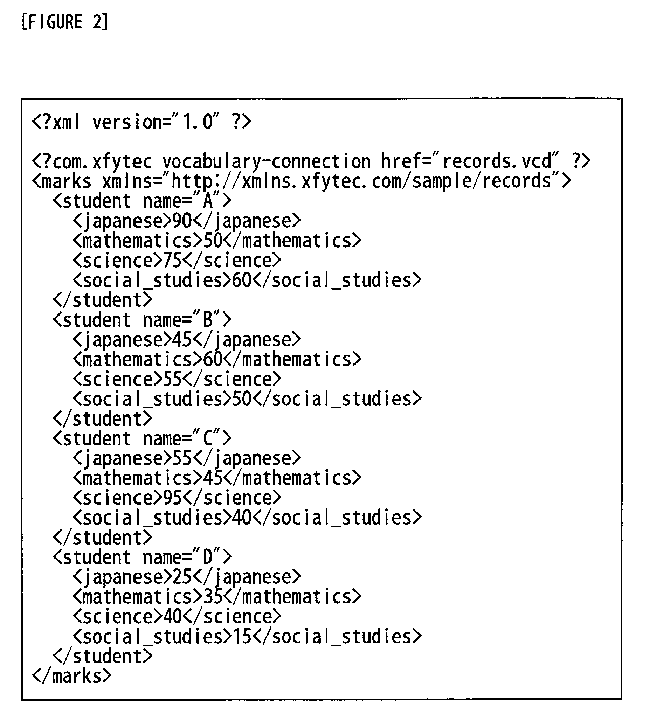

FIG. 2 shows an example of an XML document to be processed. According to this exemplary illustration, the XML document is used to manage data concerning grades or marks that students have earned. A component "marks", which is the top node of the XML document, includes a plurality of components "student" provided for each student under "marks". The component "student" has an attribute "name" and contains, as child elements, the subjects "japanese", "mathematics", "science", and "social_studies". The attribute "name" stores the name of a student. The components "japanese", "mathematics", "science" and "social_studies" store the test scores for the subjects Japanese, mathematics, science, and social studies, respectively. For example, the marks of a student whose name is "A" are "90" for Japanese, "50" for mathematics, "75" for science and "60" for social studies. Hereinafter, the vocabulary (tag set) used in this document will be called "marks managing vocabulary".

Here, the document processing apparatus 20 according to the background technique does not have a plug-in which conforms to or handles the display/editing of marks managing vocabularies. Accordingly, before displaying such a document in a manner other than the source display manner or the tree display manner, the above-described VC function is used. That is, there is a need to prepare a definition file for mapping the document, which has been described in the marks managing vocabulary, to another vocabulary, which is supported by a corresponding plug-in, e.g., HTML or SVG. Note that description will be made later regarding a user interface that allows the user to create the user's own definition file. Now, description will be made below regarding a case in which a definition file has already been prepared.

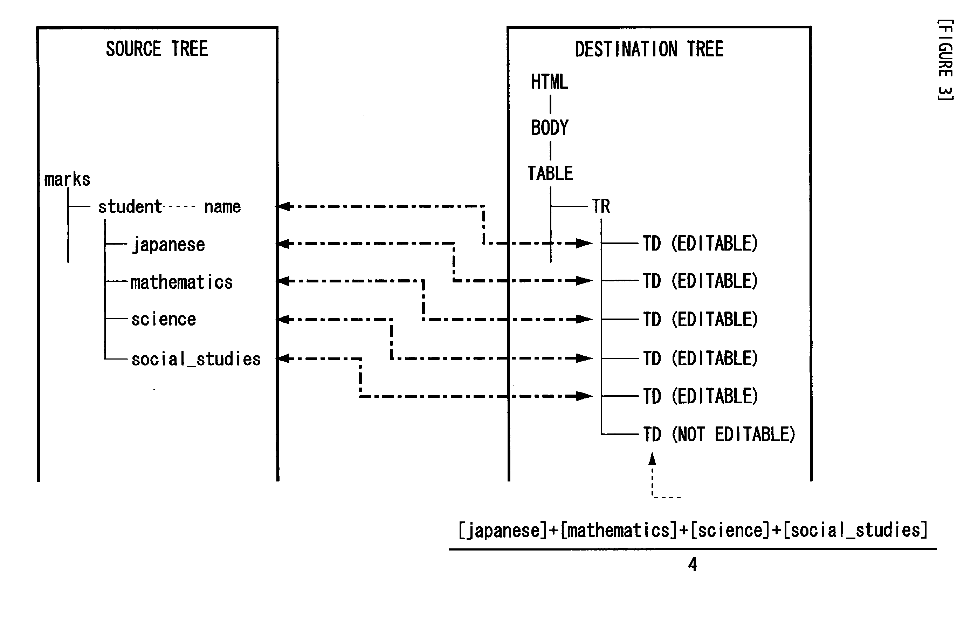

FIG. 3 shows an example in which the XML document shown in FIG. 2 is mapped to a table described in HTML. In an example shown in FIG. 3, a "student" node in the marks managing vocabulary is associated with a row ("TR" node) of a table ("TABLE" node) in HTML. The first column in each row corresponds to an attribute value "name", the second column to a "japanese" node element value, the third column to a "mathematics" node element value, the fourth column to a "science" node element value and the fifth column to a "social_studies" node element value. As a result, the XML document shown in FIG. 2 can be displayed in an HTML tabular format. Furthermore, these attribute values and element values are designated as being editable, so that the user can edit these values on a display screen using an editing function of the HTML unit 50. In the sixth column, an operation expression is designated for calculating a weighted average of the marks for Japanese, mathematics, science and social studies, and average values of the marks for each student are displayed. In this manner, more flexible display can be effected by making it possible to specify the operation expression in the definition file, thus improving the users' convenience at the time of editing. In this example shown in FIG. 3, editing is designated as not being possible in the sixth column, so that the average value alone cannot be edited individually. Thus, in the mapping definition it is possible to specify editing or no editing so as to protect the users against the possibility of performing erroneous operations.

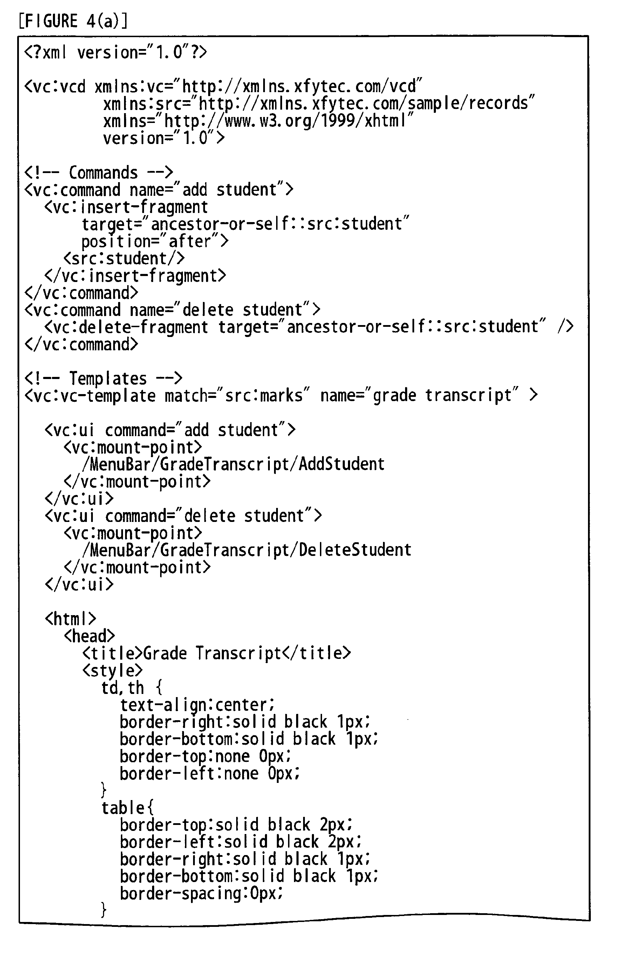

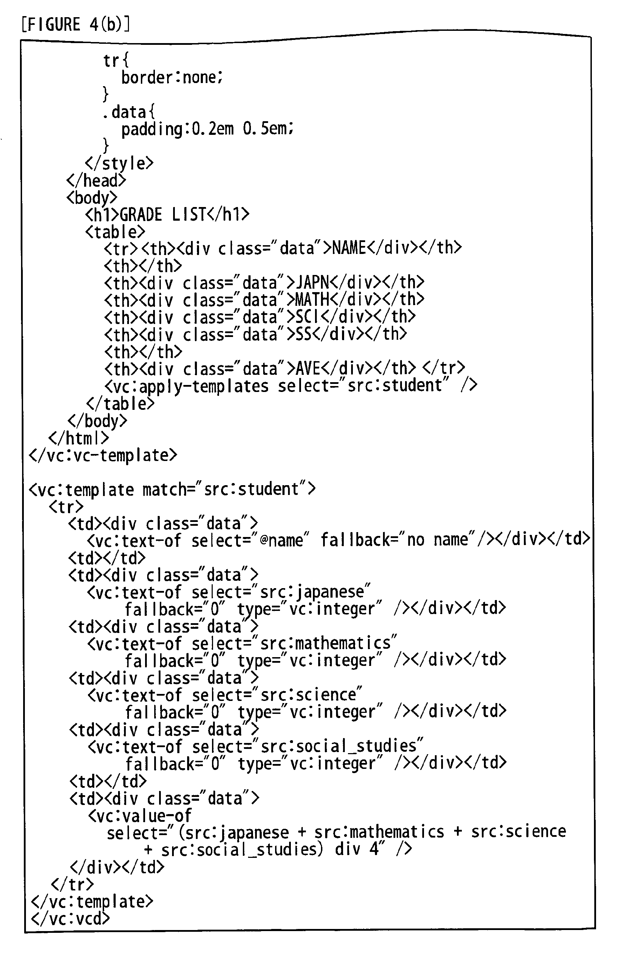

FIG. 4 (a) and FIG. 4 (b) illustrate an example of a definition file to map the XML document shown in FIG. 2 to the table shown in FIG. 3. This definition file is described in script language defined for use with definition files. In the definition file, definitions of commands and templates for display are described. In the example shown in FIG. 4(a) and FIG. 4(b), "add student" and "delete student" are defined as commands, and an operation of inserting a node "student" into a source tree and an operation of deleting the node "student" from the source tree, respectively, are associated with these commands. Furthermore, the definition file is described in the form of a template, which describes that a header, such as "name" and "japanese", is displayed in the first row of a table and the contents of the node "student" are displayed in the second and subsequent rows. In the template displaying the contents of the node "student", a term containing "text-of" indicates that editing is permitted, whereas a term containing "value-of" indicates that editing is not permitted. Among the rows where the contents of the node "student" are displayed, an operation expression "(src:japanese + src:mathematics + scr:science + scr:social studies) div 4" is described in the sixth row. This means that the average of the student's marks is displayed.

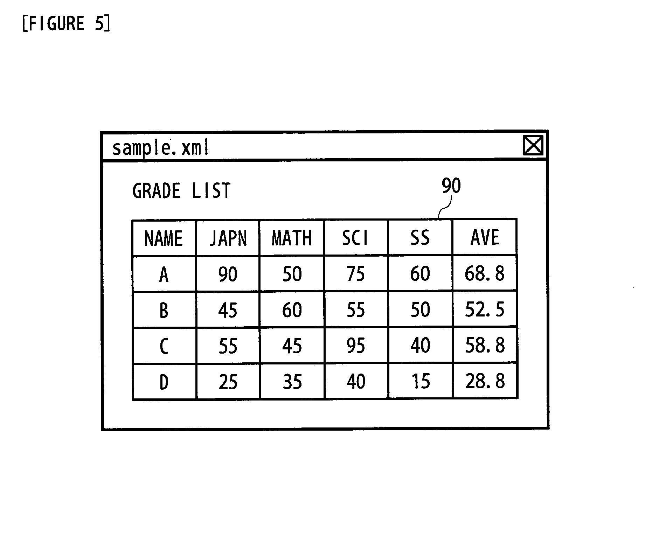

FIG. 5 shows an example of a display screen on which an XML document described in the marks managing vocabulary shown in FIG. 2 is displayed by mapping the XML document to HTML using the correspondence shown in Fig. 3. Displayed from left to right in each row of a table 90 are the name of each student, marks for Japanese, marks for mathematics, marks for science, marks for social studies and the averages thereof. The user can edit the XML document on this screen. For example, when the value in the second row and the third column is changed to "70", the element value in the source tree corresponding to this node, that is, the marks of student "B" for mathematics are changed to "70". At this time, in order to have the destination tree follow the source tree, the VC unit 80 changes a relevant portion of the destination tree accordingly, so that the HTML unit 50 updates the display based on the destination tree thus changed. Hence, the marks of student "B" for mathematics are changed to "70", and the average is changed to "55" in the table on the screen.

On the screen as shown in FIG. 5, commands like "add student" and "delete student" are displayed in a menu as defined in the definition file shown in FIG. 4(a) and FIG. 4(b). When the user selects a command from among these commands, a node "student" is added or deleted in the source tree. In this manner, with the document processing apparatus 20 according to the background technique, it is possible not only to edit the element values of components in a lower end of a hierarchical structure but also to edit the hierarchical structure. An edit function for editing such a tree structure may be presented to the user in the form of commands. Furthermore, a command to add or delete rows of a table may, for example, be linked to an operation of adding or deleting the node "student". A command to embed other vocabularies therein may be presented to the user. This table may be used as an input template, so that marks data for new students can be added in a fill-in-the-blank format. As described above, the VC function allows a document described in the marks managing vocabulary to be edited using the display/editing function of the HTML unit 50.

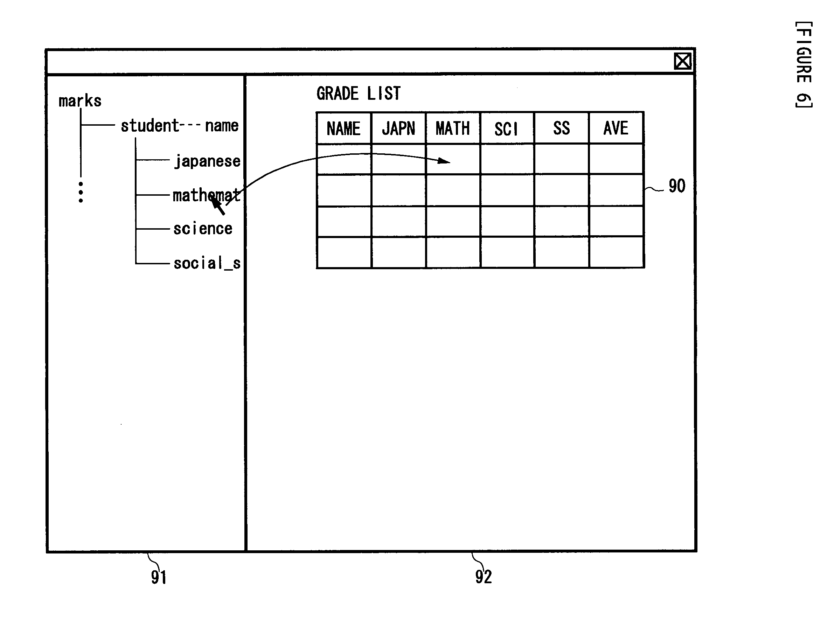

FIG. 6 shows an example of a graphical user interface, which the definition file generator 86 presents to the user, in order for the user to generate a definition file. An XML document to be mapped is displayed in a tree in a left-hand area 91 of a screen. The screen layout of an XML document after mapping is displayed in a right-hand area 92 of the screen. This screen layout can be edited by the HTML unit 50, and the user creates a screen layout for displaying documents in the right-hand area 92 of the screen. For example, a node of the XML document which is to be mapped, which is displayed in the left-hand area 91 of the screen, is dragged and dropped into the HTML screen layout in the right-hand area 92 of the screen using a pointing device such as a mouse, so that a connection between a node at a mapping source and a node at a mapping destination is specified. For example, when "mathematics," which is a child element of the element "student," is dropped to the intersection of the first row and the third column in a table 90 on the HTML screen, a connection is established between the "mathematics" node and a "TD" node in the third column. Either editing or no editing can be specified for each node. Moreover, the operation expression can be embedded in a display screen. When the screen editing is completed, the definition file generator 86 generates definition files, which describe connections between the screen layout and nodes.

Viewers or editors which can handle major vocabularies such as XHTML, MathML and SVG have already been developed. However, it does not serve any practical purpose to develop dedicated viewers or editors for such documents described in the original vocabularies as shown in FIG. 2. If, however, the definition files for mapping to other vocabularies are created as mentioned above, the documents described in the original vocabularies can be displayed and/or edited utilizing the VC function without the need to develop a new viewer or editor.

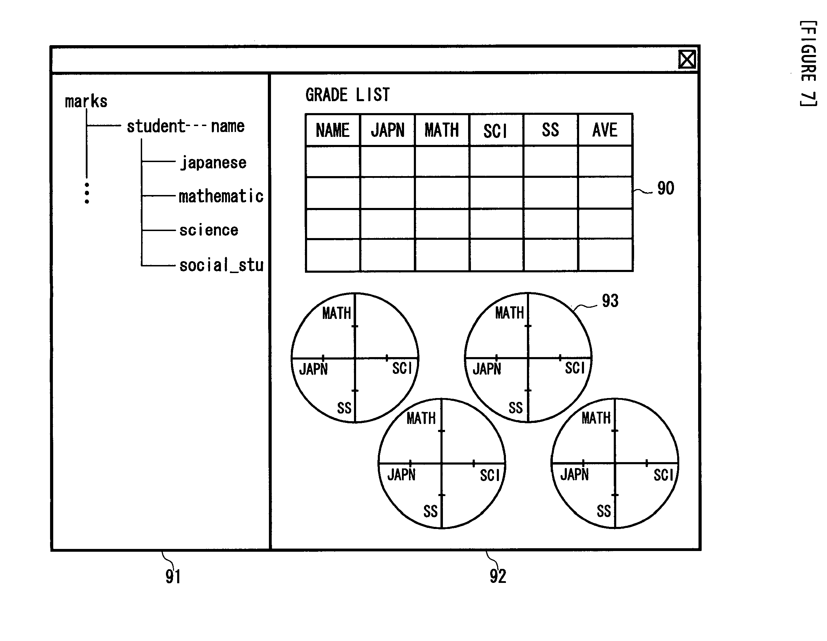

FIG. 7 shows another example of a screen layout generated by the definition file generator 86. In the example shown in FIG. 7, a table 90 and circular graphs 93 are created on a screen for displaying XML documents described in the marks managing vocabulary. The circular graphs 93 are described in SVG. As will be discussed later, the document processing apparatus 20 according to the background technique can process a compound document described in the form of a single XML document according to a plurality of vocabularies. That is why the table 90 described in HTML and the circular graphs 93 described in SVG can be displayed on the same screen.

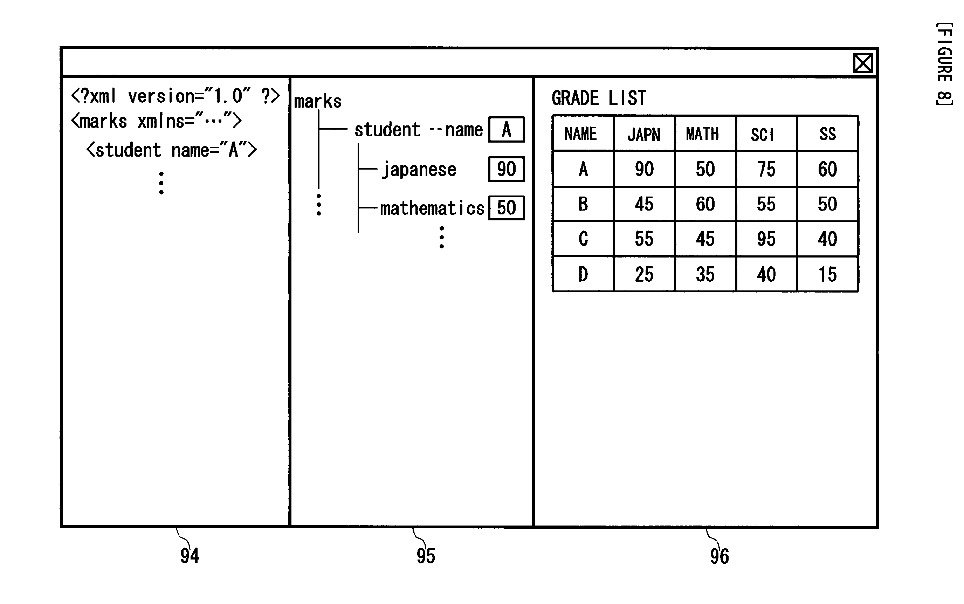

FIG. 8 shows an example of a display medium, which in a preferred but non-limiting embodiment is an edit screen, for XML documents processed by the document processing apparatus 20. In the example shown in FIG. 8, a single screen is partitioned into a plurality of areas and the XML document to be processed is displayed in a plurality of different display formats at the respective areas. The source of the document is displayed in an area 94, the tree structure of the document is displayed in an area 95, and the table shown in FIG. 5 and described in HTML is displayed in an area 96. The document can be edited in any of these areas, and when the user edits content in any of these areas, the source tree will be modified accordingly, and then each plug-in that handles the corresponding screen display updates the screen so as to effect the modification of the source tree. Specifically, display units of the plug-ins in charge of displaying the respective edit screens are registered in advance as listeners for mutation events that provide notice of a change in the source tree. When the source tree is modified by any of the plug-ins or the VC unit 80, all the display units, which are displaying the edit screen, receive the issued mutation event(s) and then update the screens. At this time, if the plug-in is executing the display through the VC function, the VC unit 80 modifies the destination tree following the modification of the source tree. Thereafter, the display unit of the plug-in modifies the screen by referring to the destination tree thus modified.

For example, when the source display and tree-view display are implemented by dedicated plug-ins, the source-display plug-in and the tree-display plug-in execute their respective displays by directly referring to the source tree without involving the destination tree. In this case, when the editing is done in any area of the screen, the source-display plug-in and the tree-display plug-in update the screen by referring to the modified source tree. Also, the HTML unit 50 in charge of displaying the area 96 updates the screen by referring to the destination tree, which has been modified following the modification of the source tree.

The source display and the tree-view display can also be realized by utilizing the VC function. That is to say, an arrangement may be made in which the source and the tree structure are laid out in HTML, an XML document is mapped to the HTML structure thus laid out, and the HTML unit 50 displays the XML document thus mapped. In such an arrangement, three destination trees in the source format, the tree format and the table format are generated. If the editing is carried out in any of the three areas on the screen, the VC unit 80 modifies the source tree and, thereafter, modifies the three destination trees in the source format, the tree format and the table format. Then, the HTML unit 50 updates the three areas of the screen by referring to the three destination trees.

In this manner, a document is displayed on a single screen in a plurality of display formats, thus improving a user's convenience. For example, the user can display and edit a document in a visually easy-to-understand format using the table 90 or the like while understanding the hierarchical structure of the document by the source display or the tree display. In the above example, a single screen is partitioned into a plurality of display formats, and they are displayed simultaneously. Also, a single display format may be displayed on a single screen so that the display format can be switched according to the user's instructions. In this case, the main control unit 22 receives from the user a request for switching the display format and then instructs the respective plug-ins to switch the display.

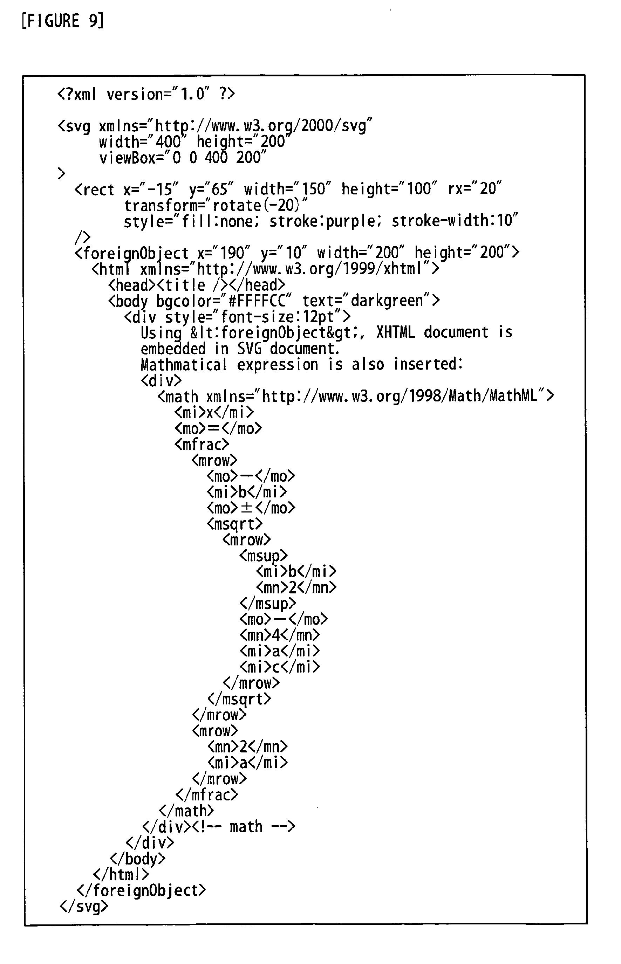

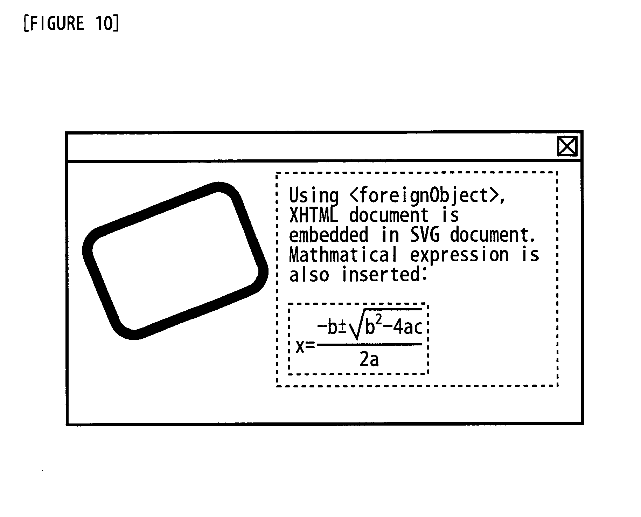

FIG. 9 illustrates another example of an XML document edited by the document processing apparatus 20. In the XML document shown in FIG. 9, an XHTML document is embedded in a "foreignObject" tag of an SVG document, and the XHTML document contains an equation described in MathML. In this case, the editing unit 24 assigns the rendering job to an appropriate display system by referring to the name space. In the example illustrated in FIG. 9, first, the editing unit 24 instructs the SVG unit 60 to render a rectangle, and then instructs the HTML unit 50 to render the XHTML document. Furthermore, the editing unit 24 instructs a MathML unit (not shown) to render an equation. In this manner, the compound document containing a plurality of vocabularies is appropriately displayed. FIG. 10 illustrates the resulting display.

The displayed menu may be switched corresponding to the position of the cursor (carriage) during the editing of a document. That is, when the cursor lies in an area where an SVG document is displayed, the menu provided by the SVG unit 60, or a command set which is defined in the definition file for mapping the SVG document, is displayed. On the other hand, when the cursor lies in an area where the XHTML document is displayed, the menu provided by the HTML unit 50, or a command set which is defined in the definition file for mapping the HTML document, is displayed. Thus, an appropriate user interface can be presented according to the editing position.

In a case that there is neither a plug-in nor a mapping definition file suitable for any one of the vocabularies according to which the compound document has been described, a portion described in this vocabulary may be displayed in source or in tree format. In the conventional practice, when a compound document is to be opened where another document is embedded in a particular document, their contents cannot be displayed without the installation of an application to display the embedded document. According to the background technique, however, the XML documents, which are composed of text data, may be displayed in source or in tree format so that the contents of the documents can be ascertained. This is a characteristic of the text-based XML documents or the like.

Another advantageous aspect of the data being described in a text-based language, for example, is that, in a single compound document, a part of the compound document described in a given vocabulary can be used as reference data for another part of the same compound document described in a different vocabulary. Furthermore, when a search is made within the document, a string of characters embedded in a drawing, such as SVG, may also be search candidates.

In a document described in a particular vocabulary, tags belonging to other vocabularies may be used. Though such an XML document is generally not valid, it can be processed as a valid XML document as long as it is well-formed. In such a case, the tags thus inserted that belong to other vocabularies may be mapped using a definition file. For instance, tags such as "Important" and "Most Important" may be used so as to display a portion surrounding these tags in an emphasized manner, or may be sorted out in the order of importance.

When the user edits a document on an edit screen as shown in FIG. 10, a plug-in or a VC unit 80, which is in charge of processing the edited portion, modifies the source tree. A listener for mutation events can be registered for each node in the source tree. Normally, a display unit of the plug-in or the VC unit 80 conforming to a vocabulary that belongs to each node is registered as the listener. When the source tree is modified, the DOM provider 32 traces toward a higher hierarchy from the modified node. If there is a registered listener, the DOM provider 32 issues a mutation event to the listener. For example, referring to the document shown in FIG. 9, if a node which lies lower than the <html> node is modified, the mutation event is notified to the HTML unit 50, which is registered as a listener to the <html> node. At the same time, the mutation event is also notified to the SVG unit 60, which is registered as a listener in an <svg> node, which lies upper to the <html> node. At this time, the HTML unit 50 updates the display by referring to the modified source tree. Since the nodes belonging to the vocabulary of the SVG unit 60 itself are not modified, the SVG unit 60 may disregard the mutation event.

Depending on the contents of the editing, modification of the display by the HTML unit 50 may change the overall layout. In such a case, the layout is updated by a screen layout management mechanism, e.g., the plug-in that handles the display of the highest node, in increments of display regions which are displayed according to the respective plug-ins. For example, in a case of expanding a display region managed by the HTML unit 50, first, the HTML unit 50 renders a part managed by the HTML unit 50 itself, and determines the size of the display region. Then, the size of the display area is notified to the component that manages the screen layout so as to request the updating of the layout. Upon receipt of this notice, the component that manages the screen layout rebuilds the layout of the display area for each plug-in. Accordingly, the display of the edited portion is appropriately updated and the overall screen layout is updated.

Then, further detailed description will be made regarding functions and components for providing the document processing 20 according to the background technique. In the following description, English terms are used for the class names and so forth.

### A. Outline

The advent of the Internet has resulted in a nearly exponential increase in the number of documents processed and managed by users. The Web (World Wide Web), which serves as the core of the Internet, provides a massive storage capacity for storing such document data. The Web also provides an information search system for such documents, in addition to the function of storing the documents. In general, such a document is described in a markup language. HTML (HyperText Markup Language) is an example of a popular basic markup language. Such a document includes links, each of which links the document to another document stored at another position on the Web. XML (extensible Markup Language) is a popular further improved markup language. Simple browsers which allow the user to access and browse such Web documents have been developed using object-oriented programming languages such as Java (trademark).

In general, documents described in markup languages are represented in a browser or other applications in the form of a tree data structure. This structure corresponds to a tree structure obtained as a result of parsing a document. The DOM (Document Object Model) is a well-known tree-based data structure model, which is used for representing and processing a document. The DOM provides a standard object set for representing documents, examples of which include an HTML document, an XML document, etc. The DOM includes two basic components, i.e., a standard model which shows how the objects that represent the respective components included in a document are connected to one another, and a standard interface which allows the user to access and operate each object.

Application developers can support the DOM as an interface for handling their own data structure and API (Application Program Interface). On the other hand, application providers who create documents can use the standard interface of the DOM, instead of using the DOM as an interface for handling their own API. The capacity of the DOM to provide such a standard interface has been effective in promoting document sharing in various environments, particularly on the Web. Several versions of the DOM have been defined, which are used in different environments and applications.

A DOM tree is a hierarchical representation of the structure of a document, which is based upon the content of a corresponding DOM. A DOM tree includes a "root", and one or more "nodes" branching from the root. In some cases, an entire document is represented by a root alone. An intermediate node can represent an element such as a table, or a row or a column of the table, for example. A "leaf" of a DOM tree generally represents data which cannot be further parsed, such as text data, image data, etc. Each of the nodes of the DOM tree may be associated with an attribute that specifies a parameter of the element represented by the node, such as a font, size, color, indent, etc.

HTML is a language which is generally used for creating a document. However, HTML is a language that provides formatting and layout capabilities, and it is not meant to be used as a data description language. The node of the DOM tree for representing an HTML document is defined beforehand as an HTML formatting tag, and in general, HTML does not provide detailed data description and data tagging/labeling functions. This leads to a difficulty in providing a query format for the data included in an HTML document.

The goal of network designers is to provide a software application which allows the user to make a query for and to process a document provided on the Web. Such a software application should allow the user to make a query for and to process a document, regardless of the display method, as long as the document is described in a hierarchically structured language. A markup language such as XML (extensible Markup Language) provides such functions.

Unlike HTML, XML has a well-known advantage of allowing the document designer to label each data element using a tag which can be defined by the document designer as desired. Such data elements can form a hierarchical structure. Furthermore, an XML document can include a document type definition that specifies a "grammar" which specifies the tags used in the document and the relations between the tags. Also, in order to define the display method of such a structured XML document, CSS (Cascading Style Sheets) or XSL (XML Style Language) is used. Additional information with respect to the features of the DOM, HTML, XML, CSS, XSL, and the related languages can be acquired via the Web, for example, from "http://www.w3.org/TR/".

XPath provides common syntax and semantics which allow the position of a portion of an XML document to be specified. Examples of such functions include a function of traversing a DOM tree that corresponds to an XML document. This provides basic functions for operating character strings, values, and Boolean variables, which are related to the function of displaying an XML document in various manners. XPath does not provide a syntax for how the XML document is displayed, e.g., a grammar which handles a document in the form of text in increments of lines or characters. Instead of such a syntax, XPath handles a document in the form of an abstract and logical structure. The use of XPath allows the user to specify a position in an XML document via the hierarchical structure of a DOM tree of the XML document, for example. Also, XPath has been designed so as to allow the user to test whether or not the nodes included in a DOM tree match a given pattern. Detailed description of XPath can be obtained from http://www.w3.org/TR/xpath.

There is a demand for an effective document processing system based upon the known features and advantages of XML, which provides a user-friendly interface which handles a document described in a markup language (e.g., XML), and which allows the user to create and modify such a document.

Some of the system components as described here will be described in a well-known GUI (Graphical User Interface) paradigm which is called the MVC (Model-View-Controller) paradigm. The MVC paradigm divides a part of an application or an interface of an application into three parts, i.e., "model", "view", and "controller". In the GUI field, the MVC paradigm has been developed primarily for assigning the roles of "input", "processing", and "output".

[input] → [processing] → [output]

[controller] → [model] → [view]

The MVC paradigm separately handles modeling of external data, visual feedback for the user, and input from the user, using a model object (M), a view object (V), and a controller object (C). The controller object analyzes the input from the user input via a mouse and a keyboard, and maps such user actions to a command to be transmitted to the model object and/or the view object. The model object operates so as to manage one or more data elements. Furthermore, the model object makes a response to a query with respect to the state of the data elements, and operates in response to an instruction to change the state of the data elements. The view object has a function of presenting data to the user in the form of a combination of graphics and text.

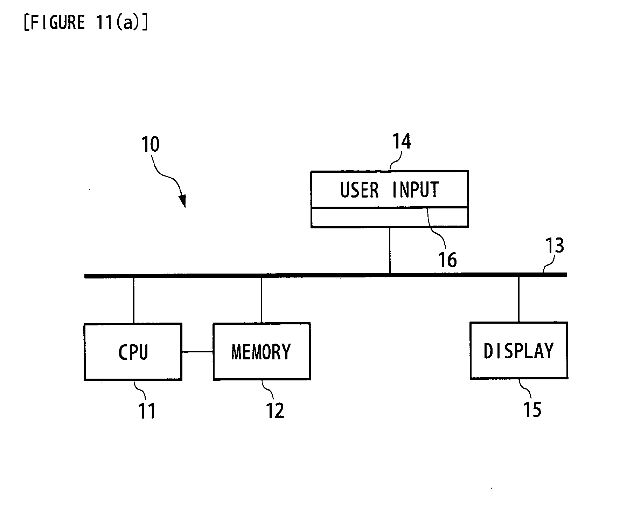

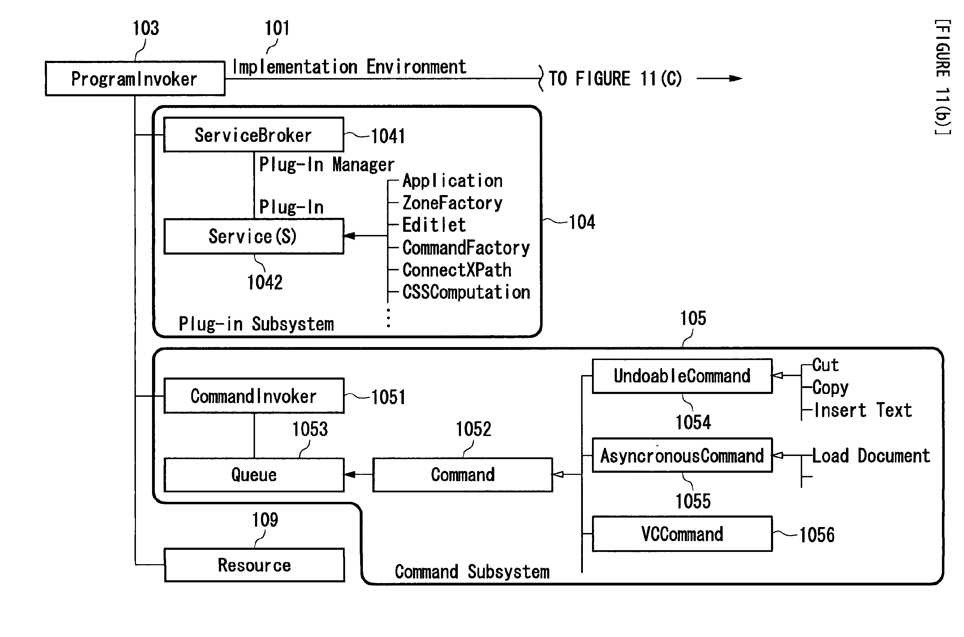

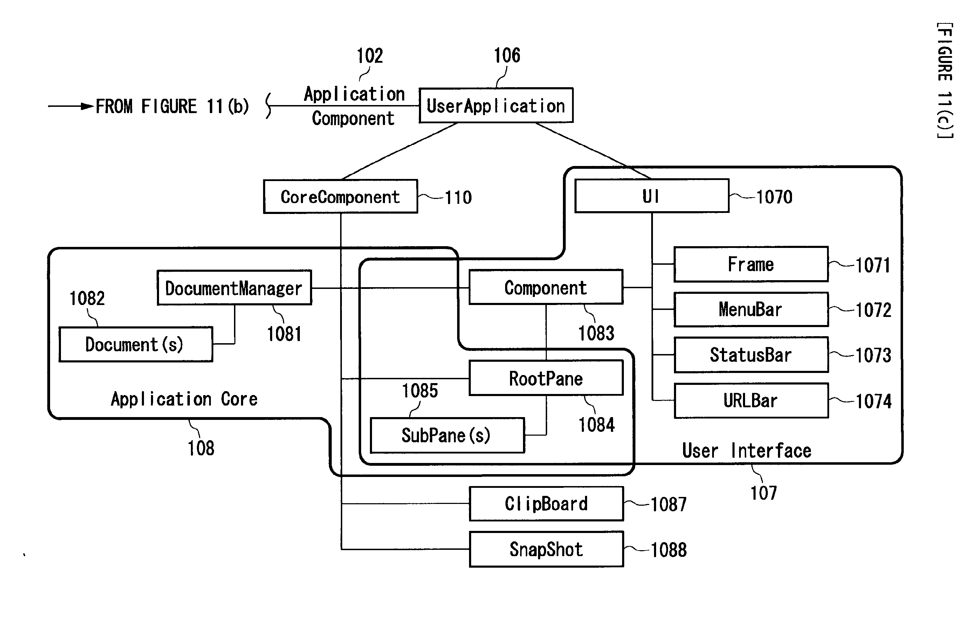

B. Overall configuration of the document processing system
In order to make clear an embodiment of the document processing system, description will be made with reference to Figs. 11 through 29.

Fig. 11(a) shows an example of a configuration comprising components that provide the basic functions of a kind of document processing system according to a conventional technique as will be mentioned later. A configuration 10 includes a processor in the form of a CPU or a microprocessor 11 connected to memory 12 via a communication path 13. The memory 12 may be provided in the form of any kind of ROM and/or RAM that is currently available or that may be available in the future. In a typical case, the communication path 13 is provided in the form of a bus. An input/output interface 16 for user input devices such as a mouse, a keyboard, a speech recognition system, etc., and a display device 15 (or other user interfaces) is connected to the bus that provides communication with the processor 11 and the memory 12. Such a configuration may be provided in the form of a standalone device. Also, such a configuration may be provided in the form of a network which includes multiple terminals and one or more servers connected to one another. Also, such a configuration may be provided in any known form. The present invention is not restricted to a particular layout of the components, a particular architecture, e.g., a centralized architecture or a distributed architecture, or a particular one of various methods of communication between the components.

Furthermore, description will be made below regarding the present system and the embodiment regarding an arrangement including several components and sub-components that provide various functions. In order to provide desired functions, the components and the sub-components can be realized by hardware alone, or by software alone, in addition to various combination of hardware and software. Furthermore, the hardware, the software, and the various combinations thereof can be realized by general purpose hardware, dedicated hardware, or various combinations of general purpose and dedicated hardware. Accordingly, the configuration of the component or the sub-component includes a general purpose or dedicated computation device for executing predetermined software that provides a function required for the component or the sub-component.

Fig. 11 (b) is a block diagram which shows an overall configuration of an example of the document processing system. Such a document processing system allows a document to be created and edited. Such a document may be described in a desired language that has the functions required of a markup language, such as XML etc. Note that some terms and titles will be defined here for convenience of explanation. However, the general scope of the disclosure according to the present invention is not intended to be restricted by such terms and titles thus defined here.

The document processing system can be classified into two basic configurations. A first configuration is an "execution environment" 101 which provides an environment that allows the document processing system to operate. For example, the execution environment provides basic utilities and functions that support both the system and the user during the processing and management of a document. A second configuration is an "application" 102 that comprises applications that run under an execution environment. These applications include the documents themselves and various representations of the documents.

### 1. Execution environment

The key component of the execution environment 101 is the ProgramInvoker (program invoking unit) 103. The ProgramInvoker 103 is a basic program, which is accessed in order to start up the document processing system. For example, upon the user logging on and starting up the document processing system, the ProgramInvoker 103 is executed. The ProgramInvoker 103 has: a function of reading out and executing a function added to the document processing system in the form of a plug-in; a function of starting up and executing an application; and a function of reading out the properties related to a document, for example. However, the functions of the ProgramInvoker 103 are not restricted to these functions. Upon the user giving an instruction to start up an application to be executed under the execution environment, the ProgramInvoker 103 finds and starts up the application, thereby executing the application.

Also, several components are attached to the ProgramInvoker 103, examples of which include a plug-in sub-system 104, a command sub-system 105, and a resource module 109. Detailed description will be made below regarding the configurations of such components.

### a) Plug-in sub-system

The plug-in sub-system is used as a highly flexible and efficient configuration which allows an additional function to be added to the document processing system. Also, the plug-in sub-system 104 can be used for modifying or deleting functions included in the document processing system. Also, various kinds of functions can be added or modified using the plug-in sub-system. For example, the plug-in sub-system 104 allows an Editlet (editing unit) to be added, which supports functions of allowing the user to edit via the screen. Also, the Editlet plug-in supports the functions of allowing the user to edit a vocabulary added to the system.

The plug-in sub-system 104 includes a ServiceBroker (service broker unit) 1041. The ServiceBroker 1041 manages a plug-in added to the document processing system, thereby mediating between the service thus added and the document processing system.

Each of the desired functions is added in the form of a Service 1042. Examples of the available types of Services 1042 include: an Application Service; a ZoneFactory (zone creating unit) Service; an Editlet (editing unit) Service; a CommandFactory (command creating unit) Service; a ConnectXPath (XPath management unit) Service; a CSSComputation (CSS calculation unit) Service; etc. However, the Service 1042 is not restricted to such services. Detailed description will be made below regarding these Services, and regarding the relation between these Services and other components of the system, in order to facilitate understanding of the document processing system.

Description will be made below regarding the relation between a plug-in and a Service. The plug-in is a unit capable of including one or more ServiceProviders (service providing units). Each ServiceProvider has one or more classes for corresponding Services. For example, upon using a plug-in having an appropriate software application, one or more Services are added to the system, thereby adding the corresponding functions to the system.

### b) Command sub-system

The command sub-system 105 is used for executing a command relating to the processing of a document. The command sub-system 105 allows the user to execute the processing of the document by executing a series of commands. For example, the command sub-system 105 allows the user to edit an XML DOM tree that corresponds to an XML document stored in the document processing system, and to process the XML document, by issuing a command. These commands may be input by key-strokes, mouse-clicks, or actions via other valid user interfaces. In some cases, when a single command is input, one or more sub-commands are executed. In such a case, these sub-commands are wrapped in a single command, and the sub-commands are consecutively executed. For example, let us consider a case in which the user has given an instruction to replace an incorrect word with a correct word. In this case, a first sub-command is an instruction to detect an incorrect word in the document. Then, a second sub-command is an instruction to delete the incorrect word. Finally, a third function is an instruction to insert a correct word. These three sub-commands may be wrapped in a single command.

Each command may have a corresponding function, e.g., an "undo" function described later in detail. Such a function may also be assigned to several basic classes used for creating an object.

The key component of the command sub-system 105 is a CommandInvoker (command invoking unit) 1051 which operates so as to allow the user to selectively input and execute the commands. Fig. 11(b) shows an arrangement having a single CommandInvoker. Also, one or more CommandInvokers may be used. Also, one or more commands may be executed at the same time. The CommandInvoker 1051 holds the functions and classes required for executing the command. In the operation, the Command 1052 is loaded in a Queue 1053. Then, the CommandInvoker 1051 creates a command thread for executing the commands in sequence. In a case that no Command is currently being executed by the CommandInvoker, the Command 1052 provided to be executed by the CommandInvoker 1051 is executed. In a case that a command is currently being executed by the CommandInvoker, the new Command is placed at the end of the Queue 1053. However, each CommandInvoker 1051 executes only a single command at a time. In a case of failure in executing the Command thus specified, the CommandInvoker 1051 performs exception handling.

Examples of the types of Commands executed by the CommandInvoker 1051 include: an UndoableCommand (undoable command) 1054; an AsynchronousCommand (asynchronous command) 1055; and a VCCommand (VC command) 1056. However, the types of commands are not restricted to those examples. The UndoableCommand 1054 is a command which can be undone according to an instruction from the user. Examples of UndoableCommands include a deletion command, a copy command, a text insertion command, etc. Let us consider a case in which, in the course of operation, the user has selected a part of a document, following which the deletion command is applied to the part thus selected. In this case, the corresponding UndoableCommand allows the deleted part to be restored to the state that it was in before the part was deleted.

The VCCommand 1056 is stored in a Vocabulary Connection Descriptor (VCD) script file. The VCCommand 1056 is a user specified Command defined by a programmer. Such a Command may be a combination of more abstract Commands, e.g., a Command for adding an XML fragment, a Command for deleting an XML fragment, a Command for setting an attribute, etc. In particular, such Commands are provided with document editing in mind.

The AsynchronousCommand 1055 is a command primarily provided for the system, such as a command for loading a document, a command for storing a document, etc. AsynchronousCommands 1055 are executed in an asynchronous manner, independently of UndoableCommands and VCCommands. Note that the AsynchronousCommand does not belong to the class of undoable commands (it is not an UndoableCommand). Accordingly, an AsynchronousCommand cannot be undone.

### c) Resource

The Resource 109 is an object that provides several functions to various classes. Examples of such system Resources include string resources, icon resources, and default key bind resources.

### 2. Application component

The application component 102, which is the second principal component of the document processing system, is executed under the execution environment 101. The application component 102 includes actual documents and various kinds of logical and physical representations of the documents included in the system. Furthermore, the application component 102 includes the configuration of the system used for management of the documents. The application component 102 further includes a UserApplication (user application) 106, an application core 108, a user interface 107, and a CoreComponent (core component) 110.

### a) User application

The UserApplication 106 is loaded in the system along with the ProgramInvoker 103. The UserApplication 106 serves as an binding agent that connects a document, the various representations of the document, and the user interface required for communicating with the document. For example, let us consider a case in which the user creates a document set which is a part of a project. Upon loading the document set, an appropriate representation of the document is created. The user interface function is added as a part of the UserApplication 106. In other words, with regard to a document that forms a part of a project, the UserApplication 106 holds both the representation of the document that allows the user to communicate with the document, and various other document conditions. Once the UserApplication 106 has been created, such an arrangement allows the user to load the UserApplication 106 under the execution environment in a simple manner every time there is a need to communicate with a document that forms a part of a project.

### b) Core component

The CoreComponent 110 provides a method which allows a document to be shared over multiple panes. As described later in detail, the Pane displays a DOM tree, and provides a physical screen layout. For example, a physical screen is formed of multiple Panes within a screen, each of which displays a corresponding part of the information. With such an arrangement, a document displayed on the screen for the user can be displayed in one or more Panes. Also, two different documents may be displayed on the screen in two different Panes.

As shown in Fig. 11(c), the physical layout of the screen is provided in a tree form. The Pane can be a RootPane (root pane) 1084. Also, the Pane can be a SubPane (sub-pane) 1085. The RootPane 1084 is a Pane which is positioned at the root of a Pane tree. The SubPanes 1085 are other Panes that are distinct from the RootPane 1084.

The CoreComponent 110 provides a font, and serves as a source that provides multiple functional operations for a document. Examples of the tasks executed by the CoreComponent 110 include movement of a mouse cursor across the multiple Panes. Other examples of the tasks thus executed include a task whereby a part of the document displayed on a Pane is marked, and the part thus selected is duplicated on another Pane.

### c) Application core

As described above, the application component 102 has a structure that comprises documents to be processed and managed by the system. Furthermore, the application component 102 includes various kinds of logical and physical representations of the documents stored in the system. The application core 108 is a component of the application component 102. The application core 108 provides a function of holding an actual document along with all the data sets included in the document. The application core 108 includes a DocumentManager (document manager, document managing unit) 1081 and a Document (document) 1082 itself.

Detailed description will be made regarding various embodiments of the DocumentManager 1081. The DocumentManager 1081 manages the Document 1082. The DocumentManager 1081 is connected to the RootPane 1084, the SubPane 1085, a ClipBoard (clipboard) utility 1087, and a SnapShot (snapshot) utility 1088. The ClipBoard utility 1087 provides a method for holding a part of the document which is selected by the user as a part to be added to the clipboard. For example, let us consider a case in which the user deletes a part of a document, and stores the part thus deleted in a new document as a reference document. In this case, the part thus deleted is added to the ClipBoard.

Next, description will also be made regarding the SnapShot utility 1088. The SnapShot utility 1088 allows the system to store the current state of an application before the state of the application changes from one particular state to another state.

### d) User interface

The user interface 107 is another component of the application component 102, which provides a method that allows the user to physically communicate with the system. Specifically, the user interface allows the user to upload, delete, edit, and manage a document. The user interface includes a Frame (frame) 1071, a MenuBar (menu bar) 1072, a StatusBar (status bar) 1073, and a URLBar (URL bar) 1074.

The Frame 1071 serves as an active region of a physical screen, as is generally known. The Menubar 1072 is a screen region including a menu that provides selections to the user. The StatusBar 1073 is a screen region that displays the status of the application which is being executed. The URLBar 1074 provides a region which allows the user to input a URL address for Internet navigation.

### C. Document management and corresponding data structure

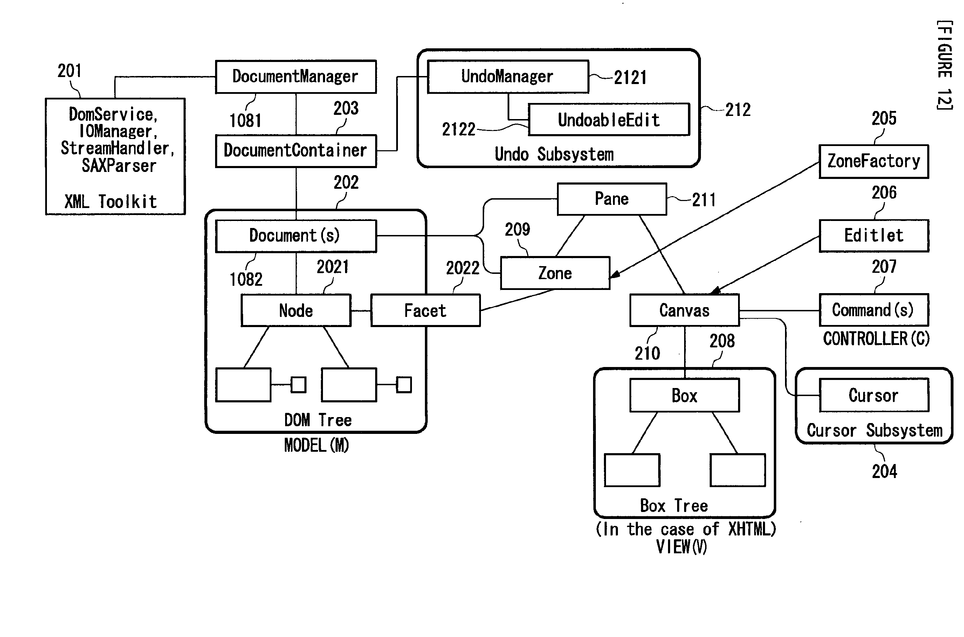

Fig. 12 shows a configuration of the DocumentManager 1081 in detail. The DocumentManager 1081 includes a data structure and components used for representing a document in the document processing system. Description will be made regarding such components in this sub-section using the MVC paradigm for convenience of explanation.

The DocumentManager 1081 includes a DocumentContainer (document container) 203 which holds all the documents stored in the document processing system, and which serves as a host machine. A tool kit 201 attached to the DocumentManager 1081 provides various tools used by the DocumentManager 1081. For example, the tool kit 201 provides a DomService (DOM service) which provides all the functions required for creating, holding, and managing a DOM that corresponds to a document. Also, the tool kit 201 provides an IOManager (input/output management unit) which is another tool for managing the input to/output from the system. Also, a StreamHandler (stream handler) is a tool for handling uploading a document in the form of a bit stream. The tool kit 201 includes such tools in the form of components, which are not shown in the drawings in particular, and are not denoted by reference numerals.

With the system represented using the MVC paradigm, the model (M) includes a DOM tree model 202 of a document. As described above, each of all the documents is represented by the document processing system in the form of a DOM tree. Also, the document forms a part of the DocumentContainer 203.

### 1. DOM model and zone

The DOM tree which represents a document has a tree structure having Nodes (nodes) 2021. A Zone (zone) 209, which is a subset of the DOM tree, includes a region that corresponds to one or more Nodes within the DOM tree. For example, a part of a document can be displayed on a screen. In this case, the part of the document that is visually output is displayed using the Zone 209. The Zone is created, handled, and processed using a plug-in which is so-called ZoneFactory (Zone Factory = Zone creating unit) 205. While the Zone represents a part of the DOM, the Zone can use one or more "namespaces". It is well known that a namespace is a set that consists of unique names, each of which differs from every other name in the namespace. In other words, the namespace does not include the same names repeated.

### 2. Facets and the relation between Facets and Zones

A Facet 2022 is another component included in the model (M) component of the MVC paradigm. The Facet is used for editing the Node in the Zone. The Facet 2022 allows the user to access the DOM using a procedure that can be executed without affecting the content of the Zone. As described below, such a procedure executes an important and useful operation with respect to the Node.

Each node has a corresponding Facet. With such an arrangement, the facet is used for executing the operation instead of directly operating the Node in the DOM, thereby maintaining the integrity of the DOM. On the other hand, let us consider an arrangement in which an operation is performed directly on the Node. With such an arrangement, multiple plug-ins can change the DOM at the same time, leading to a problem that the integrity of the DOM cannot be maintained.

The DOM standard stipulated by the World Wide Web Consortium (W3C) defines a standard interface for operating a Node. In practice, unique operations particular to each vocabulary or each Node are required. Accordingly, such unique operations are preferably provided in the form of an API. The document processing system provides such an API particular to each Node in the form of a Facet which is attached to the Node. Such an arrangement allows a useful API to be attached to the DOM according to the DOM standard. Furthermore, with such an arrangement, after a standard DOM has been installed, unique APIs are attached to the DOM, instead of installing a unique DOM for each vocabulary. This allows various kinds of vocabularies to be uniformly handled. Furthermore, such an arrangement allows the user to properly process a document described using a desired combination of multiple vocabularies.

Each vocabulary is a set of tags (e.g., XML tags), which belong to a corresponding namespace. As described above, each namespace has a set of unique names (in this case, tags). Each vocabulary is handled as a sub-tree of the DOM tree which represents an XML document. The sub-tree includes the Zone. In particular cases, the boundary between the tag sets is defined by the Zone. The Zone 209 is created using a Service which is called a ZoneFactory 205. As described above, the Zone 209 is an internal representation of a part of the DOM tree which represents a document. In order to provide a method that allows the user to access a part of such a document, the system requires a logical representation of the DOM tree. The logical representation of the DOM allows the computer to be informed of how the document is logically represented on a screen. A Canvas (canvas) 210 is a Service that operate so as to provide a logical layout that corresponds to the Zone.

On the other hand, a Pane 211 is a physical screen layout that corresponds to a logical layout provided by the Canvas 210. In practice, the user views only a rendering of the document, through text or images displayed on a screen. Accordingly, there is a need to use a process for drawing text and images on a screen to display the document on a screen. With such an arrangement, the document is displayed on a screen by the Canvas 210 based upon the physical layout provided from the Pane 211.

The Canvas 210 that corresponds to the Zone 209 is created using an Editlet 206. The DOM of the document is edited using the Editlet 206 and the Canvas 210. In order to maintain the integrity of the original document, the Editlet 206 and the Canvas 210 use the Facet that corresponds to one or more Nodes included in the Zone 209. The Facet is operated using a Command 207.

In general, the user communicates with a screen by moving a cursor on a screen or typing a command. The Canvas 210, which provides a logical layout on a screen, allows the user to input such cursor operations. The Canvas 210 instructs the Facet to execute a corresponding action. With such a relation, the cursor sub-system 204 serves as a controller (C) according to the MVC paradigm with respect to the DocumentManager 1081. The Canvas 210 also provides a task for handling an event. Examples of such events handled by the canvas 210 include: a mouse click event; a focus movement event; and a similar action event occurring in response to the user operation.

### 3. Outline of the relation between Zone, Facet, Canvas, and Pane.

The document in the document processing system can be described from at least four points of view. That is to say, it can be seen as: 1) a data structure for maintaining the content and structure of a document in the document processing system, 2) means by which the user can edit the content of the document while maintaining the integrity of the document, 3) a logical layout of the document on a screen, and 4) a physical layout of the document on the screen. The components of the document processing system that correspond to the aforementioned four points of view are the Zone, Facet, Canvas, and Pane, respectively.

### 4. Undo sub-system

As described above, all modifications made to the document (e.g., document editing procedures) are preferably undoable. For example, let us consider a case in which the user executes an editing operation, and then determines that the modification thus made to the document should be undone. Referring to Fig. 12, the undo subsystem 212 provides an undo component of a document management unit. With such an arrangement, an UndoManager (undo manager = undo management unit) 2121 holds all the undoable operations for the document which the user can select to be undone.

Let us consider a case in which the user executes a command for replacing a word in a document by another word, following which the user determines that, on reflection, the replacement of the word thus effected should be undone. The undo sub-system supports such an operation. The UndoManager 2121 holds such an operation of an UndoableEdit (undoable edit) 2122.

### 5. Cursor sub-system

As described above, the controller unit of the MVC may include the cursor sub-system 204. The cursor sub-system 204 receives the input from the user. In general, such an input provides command input and/or edit operation. Accordingly, with respect to the DocumentManager 1081, the cursor sub-system 204 serves as the controller (C) component according to the MVC paradigm.

### 6. View

As described above, the Canvas 210 represents the logical layout of a document to be displayed on a screen. In a case that the document is an XHTML document, the Canvas 210 may include a box tree 208 that provides a logical representation of a document, which indicates how the document is displayed on a screen. With respect to the DocumentManager 1081, the box tree 208 may be included in the view (V) component according to the MVC paradigm.

### D. Vocabulary connection

The important feature of the document processing system is that the document processing system provides an environment which allows the user to handle an XML document via other representations to which the document has been mapped. With such an environment, upon the user editing a representation to which the source XML document has been mapped, the source XML document is modified according to the edit operation while maintaining the integrity of the XML document.

A document described in a markup language, e.g., an XML document is created based upon a vocabulary defined by a document type definition. The vocabulary is a set of tags. The vocabulary can be defined as desired. This allows a limitless number of vocabularies to be created. It does not serve any practical purpose to provide dedicated viewer/editor environments for such a limitless number of vocabularies. The vocabulary connection provides a method for solving this problem.

For example, a document can be described in two or more markup languages. Specific examples of such markup languages used for describing a document include: XHTML (extensible HyperText Markup Language), SVG (Scalable Vector Graphics), MathML (Mathematical Markup Language), and other markup languages. In other words, such a markup language can be handled in the same way as is the vocabulary or the tag set in XML.

A vocabulary is processed using a vocabulary plug-in. In a case that the document has been described in a vocabulary for which there is no available plug-in in the document processing system, the document is mapped to a document described in another vocabulary for which a plug-in is available, thereby displaying the document. Such a function enables a document to be properly displayed even if the document has been described in a vocabulary for which there is no available plug-in.

The vocabulary connection has a function of acquiring a definition file, and a function of mapping from one vocabulary to another different vocabulary based upon the definition file thus acquired. With such an arrangement, a document described in one vocabulary can be mapped to a document described in another vocabulary. As described above, the vocabulary connection maps a document described in one vocabulary to another document described in another vocabulary for which there is a corresponding display/editing plug-in, thereby allowing the user to display and edit the document.

As described above, in general, each document is described by the document processing system in the form of a DOM tree having multiple nodes. The "definition file" describes the relations among the different nodes. Furthermore, the definition file specifies whether or not the element values and the attribute values can be edited for each node. Also, the definition file may specify an expression using the element values and the attribute values of the nodes.

Using the mapping function by applying the definition file, a destination DOM tree can be created. As described above, the relation between the source DOM tree and the destination DOM tree is created and held. The vocabulary connection monitors the relation between the source DOM tree and the destination DOM tree. Upon reception of an editing instruction from the user, the vocabulary connection modifies the corresponding node included in the source DOM tree. Subsequently, a "mutation event" is issued, which gives notice that the source DOM tree has been modified. Then, the destination DOM tree is modified in response to the mutation event.

The use of the vocabulary connection allows a relatively minor vocabulary used by a small number of users to be converted into another major vocabulary. Thus, such an arrangement provides a desirable editing environment, which allows a document to be properly displayed even if the document is described in a minor vocabulary used by a small number of users.

As described above, the vocabulary connection sub-system which is a part of the document processing system provides a function that allows a document to be represented in multiple different ways.

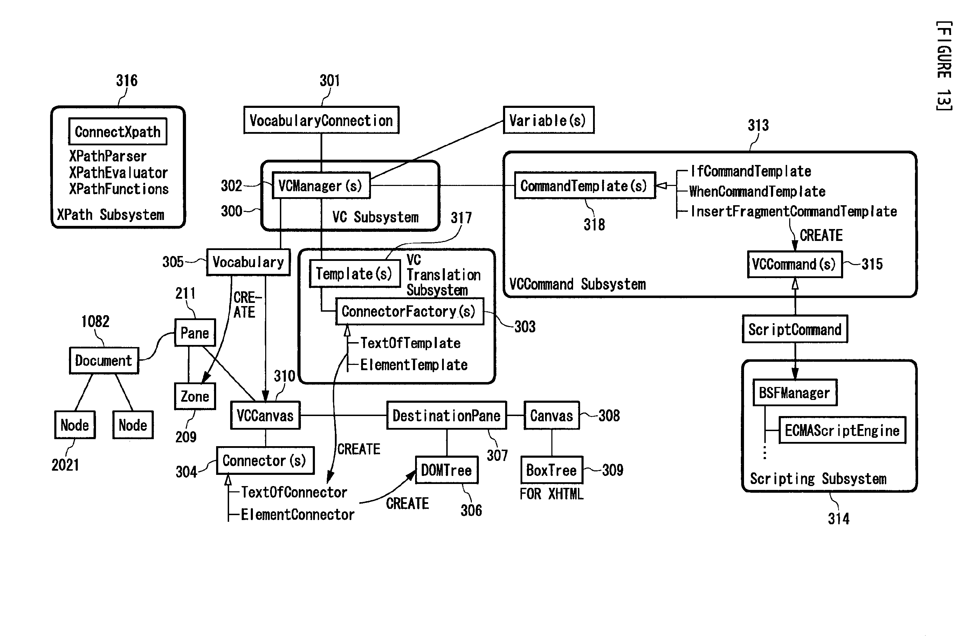

Fig. 13 shows a vocabulary connection (VC) sub-system 300. The VC sub-system 300 provides a method for representing a document in two different ways while maintaining the integrity of the source document. For example, a single document may be represented in two different ways using two different vocabularies. Also, one representation may be a source DOM tree, and the other representation may be a destination DOM tree, as described above.

### 1. Vocabulary connection sub-system

The functions of the vocabulary connection sub-system 300 are provided to the document processing system using a plug-in which is called a VocabularyConnection 301. With such an arrangement, a corresponding plug-in is requested for each Vocabulary 305 used for representing the document. For example, let us consider a case in which a part of the document is described in HTML, and the other part is described in SVG. In this case, the vocabulary plug-in that corresponds to HTML and the vocabulary plug-in that corresponds to SVG are requested.

The VocabularyConnection plug-in 301 creates a proper VCCanvas (vocabulary connection canvas) 310 that corresponds to a document described in a proper Vocabulary 305 for the Zone 209 or the Pane 211. Using the VocabularyConnection 301, a modification made to the Zone 209 within the source DOM tree is transmitted to the corresponding Zone within another DOM tree 306 according to a conversion rule. The conversion rule is described in the form of a vocabulary connection descriptor (VCD). Furthermore, a corresponding VCManager (vocabulary connection manager) 302 is created for each VCD file that corresponds to such a conversion between the source DOM and the destination DOM.

### 2. Connector

A Connector 304 connects the source node included within the source DOM tree and the destination node included within the destination DOM tree. The Connector 304 operates so as to monitor modifications (changes) made to the source node included within the source DOM tree and the source document that corresponds to the source node. Then, the Connector 304 modifies the corresponding node of the destination DOM tree. With such an arrangement, the Connector 304 is the only object which is capable of modifying the destination DOM tree. Specifically, the user can modify only the source document and the corresponding source DOM tree. With such an arrangement, the Connector 304 modifies the destination DOM tree according to the modification thus made by the user.

The Connectors 304 are logically linked to each other so as to form a tree structure. The tree structure formed of the Connectors 304 is referred to as a ConnectorTree (connector tree). The connector 304 is created using a Service which is called a Connector Factory (connector factory = connector generating unit) 303. The ConnectorFactory 303 creates the Connectors 304 based upon a source document, and links the Connectors 304 to each other so as to create a ConnectorTree. The VocabularyConnectionManager 302 holds the ConnectorFactory 303.

As described above, a vocabulary is a set of tags for a namespace. As shown in the drawing, the VocabularyConnection 301 creates the Vocabulary 305 for a document. Specifically, the Vocabulary 305 is created by analyzing the document file, and then creating a proper VocabularyConnectionManager 302 for mapping between the source DOM and the destination DOM. Furthermore, a proper relation is created between the ConnectorFactory 303 for creating the Connectors, the ZoneFactory 205 for creating the Zones 209, and the Editlet 206 for creating the Canvases. In a case that the user has discarded or deleted a document stored in the system, the corresponding VocabularyConnectionManager 302 is deleted.

The Vocabulary 305 creates the VCCanvas 310. Furthermore, the connectors 304 and the destination DOM tree 306 are created corresponding to the creation of the VCCanvas 310.

The source DOM and the Canvas correspond to the Model (M) and the View (V), respectively. However, such a representation is useful only in a case that the target vocabulary allows a document to be displayed on a screen. With such an arrangement, the display is performed by the vocabulary plug-in. Such a vocabulary plug-in is provided for each of the principal vocabularies, e.g., XHTML, SVG, and MathML. Such a vocabulary plug-in is used for the target vocabulary. Such an arrangement provides a method for mapping a vocabulary to another vocabulary using a vocabulary connection descriptor.

Such mapping is useful only in a case that the target vocabulary can be mapped, and a method has been defined beforehand for displaying such a document thus mapped on a screen. Such a rendering method is defined in the form of a standard defined by an authority such as the W3C.

In a case that the processing requires vocabulary connection, the VCCanvas is used. In this case, the view for the source cannot be directly created, and accordingly, the Canvas for the source is not created. In this case, the VCCanvas is created using the ConnectorTree. The VCCanvas handles only the conversion of the event, but does not support display of the document on a screen.

### 3. DestinationZone, Pane, and Canvas

As described above, the purpose of the vocabulary connection sub-system is to create and hold two representations of a single document at the same time. With such an arrangement, the second representation is provided in the form of a DOM tree, which has been described as the destination DOM tree. The display of the document in the form of the second representation requires the DestinationZone, Canvas, and Pane.

When the VCCanvas is created, a corresponding DestinationPane 307 is also created. Furthermore, a corresponding DestinationCanvas 308 and a corresponding BoxTree 309 are created. Also, the VCCanvas 310 is associated with the Pane 211 and the Zone 209 for the source document.

The DestinationCanvas 308 provides a logical layout of a document in the form of the second representation. Specifically, the DestinationCanvas 308 provides user interface functions such as a cursor function and a selection function, for displaying a document in the form of a destination representation of the document. The event occurring at the DestinationCanvas 308 is supplied to the Connector. The DestinationCanvas 308 notifies the Connector 304 of the occurrence of a mouse event, a keyboard event, a drag-and-drop event, and events particular to the destination representation (second representation).

### 4. Vocabulary connection command sub-system

The vocabulary connection (VC) sub-system 300 includes a vocabulary connection (VC) command sub-system 313 in the form of a component. The vocabulary connection command sub-system 313 creates a VCCommand (vocabulary connection command) 315 used for executing a command with respect to the vocabulary connection sub-system 300. The VCCommand can be created using a built-in CommandTemplate (command template) and/or created from scratch using a script language supported by a script sub-system 314.

Examples of such command templates include an "If" command template, "When" command template, "Insert" command template, etc. These templates are used for creating a VCCommand .

### 5. XPath sub-system

An XPath sub-system 316 is an important component of the document processing system, and supports the vocabulary connection. In general, the Connector 304 includes XPath information. As described above, one of the tasks of the vocabulary connection is to modify the destination DOM tree according to the change in the source DOM tree. The XPath information includes one or more XPath representations used for determining a subset of the source DOM tree which is to be monitored to detect changes and/or modifications.

### 6. Outline of source DOM tree, destination DOM tree, and ConnectorTree

The source DOM tree is a DOM tree or a Zone of a document described in a vocabulary before vocabulary conversion. The source DOM tree node is referred to as the source node.

On the other hand, the destination DOM tree is a DOM tree or a Zone of the same document as that of the source DOM tree, and which is described in another vocabulary after having been converted by mapping, as described above in connection with the vocabulary connection. Here, the destination DOM tree node is referred to as the destination node.

The ConnectorTree is a hierarchical representation which is formed based upon the Connectors that represent the relation between the source nodes and the destination nodes. The Connectors monitor the source node and the modifications applied to the source document, and modify the destination DOM tree. The Connector is the only object that is permitted to modify the destination DOM tree.

### E. Event flow in the document processing system

In practice, the program needs to respond to the commands input from the user. The "event" concept provides a method for describing and executing the user action executed on a program. Many high-level languages, e.g., Java (trademark) require events, each of which describes a corresponding user action. On the other hand, conventional programs need to actively collect information for analyzing the user's actions, and for execution of the user's actions by the program itself. This means that, after initialization of the program, the program enters loop processing for monitoring the user's actions, which enables appropriate processing to be performed in response to any user action input by the user via the screen, keyboard, mouse, or the like. However, such a process is difficult to manage. Furthermore, such an arrangement requires a program which performs loop processing in order to wait for the user's actions, leading to a waste of CPU cycles.

Many languages employ distinctive paradigms in order to solve such problems. One of these paradigms is event-driven programming, which is employed as the basis of all current window-based systems. In this paradigm, all user actions belong to sets of abstract phenomena which are called "events". An event provides a sufficiently detailed description of a corresponding user action. With such an arrangement, in a case that an event to be monitored has occurred, the system notifies the program to that effect, instead of an arrangement in which the program actively collects events occurring according to the user's actions. A program that communicates with the user using such a method is referred to as an "event-driven" program.

In many cases, such an arrangement handles an event using a "Event" class that acquires the basic properties of all the events which can occur according to the user's actions.

Before the use of the document processing system, the events for the document processing system itself and a method for handling such events are defined. With such an arrangement, several types of events are used. For example, a mouse event is an event that occurs according to the action performed by the user via a mouse. The user action involving the mouse is transmitted to the mouse event by the Canvas 210. As described above, it can be said that the Canvas is the foremost level of interaction between the user and the system. As necessary, this foremost Canvas level hands over the event content to the child levels.

On the other hand, a keystroke event is issued from the Canvas 210. The keystroke event acquires a real-time focus. That is to say, a keystroke event always involves an operation. The keystroke event input to the Canvas 210 is also transmitted to the parent of the Canvas 210. Key input actions are processed via other events that allows the user to insert a character string. The event for handling the insertion of a character string occurs according to the user action in which a character is input via the keyboard. Examples of "other events" include other events which are handled in the same way as a drag event, a drop event, and a mouse event.

### 1. Handling of an event outside of the vocabulary connection

An event is transmitted using an event thread. The state of the Canvas 210 is modified upon reception of an event. As necessary, the Canvas 210 posts the Command 1052 to the CommandQueue 1053.

### 2. Handling of an event within the vocabulary connection

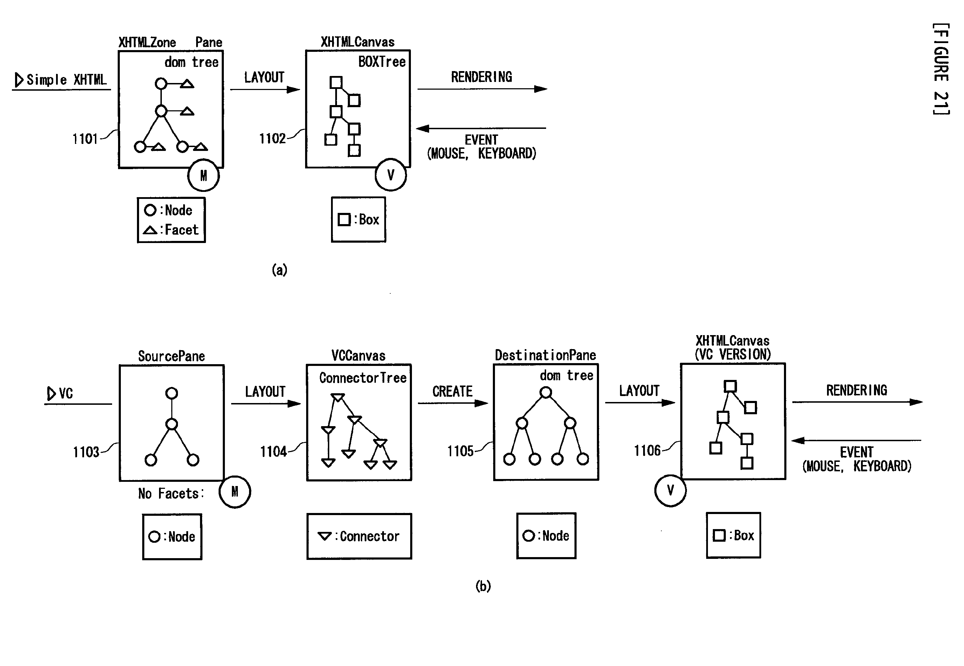

An XHTMLCanvas 1106, which is an example of the DestinationCanvas, receives events that occur, e.g., a mouse event, a keyboard event, a drag-and-drop event, and events particular to the vocabulary, using the VocabularyConnection plug-in 301. The connector 1104 is notified of these events. More specifically, the event passes through a SourcePane 1103, a VCCanvas 1104, a DestinationPane 1105, a DestinationCanvas 1106 which is an example of the DestinationCanvas, a destination DOM tree, and a ConnectorTree, within the VocabularyConnection plug-in, as shown in Fig. 21(b).

### F. ProgramInvoker and the relation between ProgramInvoker and other components

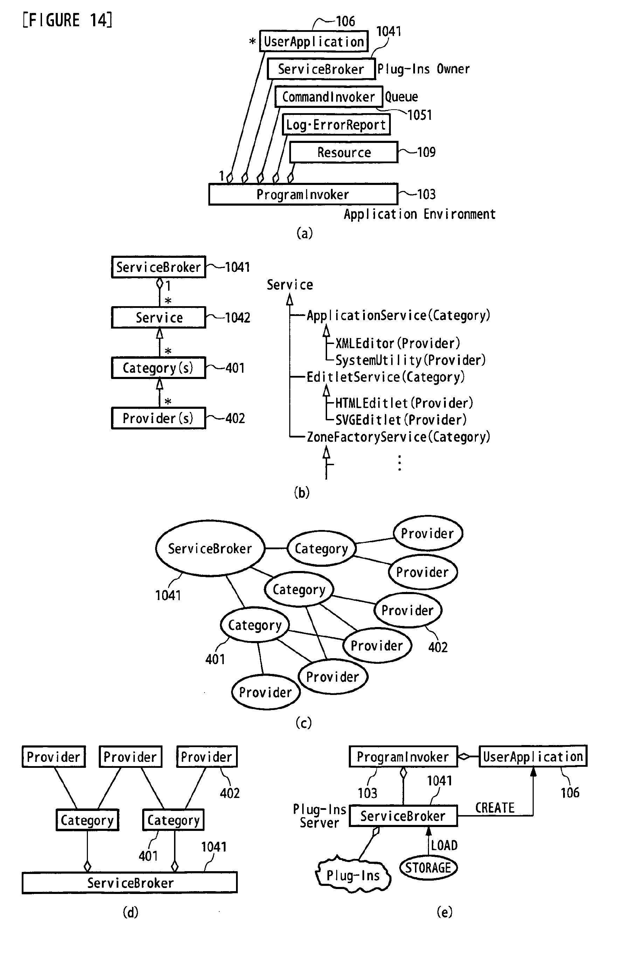

Fig. 14(a) shows the ProgramInvoker 103 and the relation between the ProgramInvoker 103 and other components in more detail. The ProgramInvoker 103 is a basic program executed under the execution environment, which starts up the document processing system. As shown in Fig. 11(b) and Fig. 11(c), the UserApplication 106, the ServiceBroker 1041, the CommandInvoker 1051, and the Resource 109 are each connected to the ProgramInvoker 103. As described above, the application 102 is a component executed under the execution environment. Also, the ServiceBroker 1041 manages the plug-ins, which provide various functions to the system. On the other hand, the CommandInvoker 1051 executes a command provided from the user, and holds the classes and functions for executing the command.

### 1. Plug-in and Service

A more detailed description will be made regarding the ServiceBroker 1041 with reference to Fig. 14(b). As described above, the CommandInvoker 1041 manages the plug-ins (and corresponding services), which allows various functions to be added to the system. The Service 1042 is the lowermost layer, having a function of adding the features to the document processing system, and a function of modifying the features of the document processing system. A "Service" consists of two parts, i.e., a part formed of ServiceCategories 401 and another part formed of ServiceProviders 402. As shown in Fig. 14(c), one ServiceCategory 401 may include multiple corresponding ServiceProviders 402. Each ServiceProvider operates a part of, or the entire functions of, the corresponding ServiceCategory. Also, the ServiceCategory 401 defines the type of Service.

The Services can be classified into three types, i.e., a "feature service" which provides predetermined features to the document processing system, an "application service" which is an application executed by the document processing system, and an "environment" service that provides the features necessary throughout the document processing system.

Fig. 14(d) shows an example of a Service. In this example, with respect to the Category of the application Service, the system utility corresponds to the ServiceProvider. In the same way, the Editlet 206 is the Category, and an HTMLEditlet and the SVGEditlet are the corresponding ServiceProviders. Also, the Zone Factory 205 is another Service Category, and has a corresponding ServiceProvider (not shown).

As described above, a plug-in adds functions to the document processing system. Also, a plug-in can be handled as a unit that comprises several ServiceProviders 402 and the classes that correspond to the ServiceProviders 402. Each plug-in has dependency specified in the definition file and a ServiceCategory 401.

### 2. Relation between the ProgramInvoker and the application

Fig. 14(e) shows the relation between the ProgramInvoker 103 and the UserApplication 106 in more detail. The required documents and data are loaded from the storage. All the required plug-ins are loaded in the ServiceBroker 1041. The ServiceBroker 1041 holds and manages all the plug-ins. Each plug-in is physically added to the system. Also, the functions of the plug-in can be loaded from the storage. When the content of a plug-in is loaded, the ServiceBroker 1041 defines the corresponding plug-in. Subsequently, a corresponding UserApplication 106 is created, and the UserApplication 106 thus created is loaded in the execution environment 101, thereby attaching the plug-in to the ProgramInvoker 103.

### G. The relation between the application service and the environment

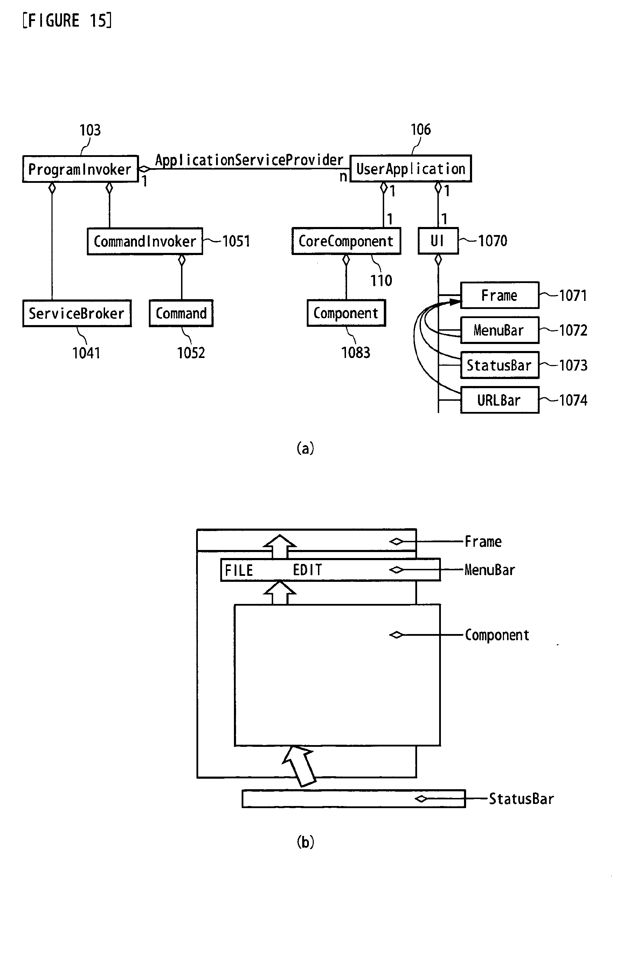

Fig. 15(a) shows the configuration of the application service loaded in the ProgramInvoker 103 in more detail. The CommandInvoker 1051, which is a component of the command sub-system 105, starts up or executes the Command 1052 in the ProgramInvoker 103. With such a document processing system, the Command 1052 is a command used for processing a document such as an XML document, and editing the corresponding XML DOM tree. The CommandInvoker 1051 holds the classes and functions required to execute the Command 1052.

Also, the ServiceBroker 1041 is executed within the ProgramInvoker 103. The UserApplication 106 is connected to the user interface 107 and the CoreComponent 110. The CoreComponent 110 provides a method which allows all the Panes to share a document. Furthermore, the CoreComponent 110 provides a font, and serves as a tool kit for the Pane.

Fig. 15(b) shows the relation between the Frame 1071, the MenuBar 1072, and the StatusBar 1073.

### H. Application core

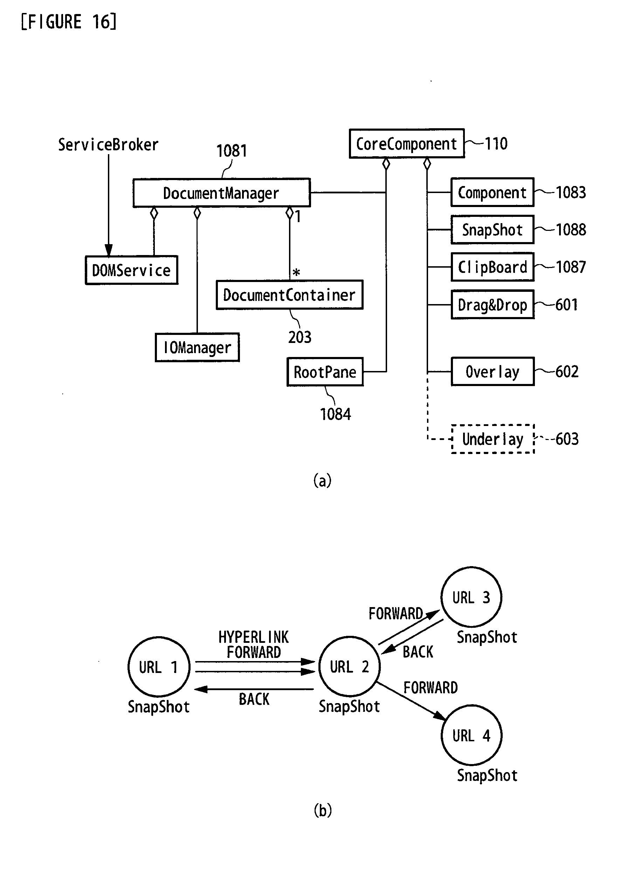

Fig. 16(a) provides a more detailed description of the application core 108, which holds the whole document, and a part of the document, and the data of the document. The CoreComponent 110 is attached to the DocumentManager 1081 for managing the documents 1082. The DocumentManager 1081 is the owner of all the documents 1082 stored in memory in association with the document processing system.

In order to display a document on a screen in a simple manner, the DocumentManager 1081 is also connected to the RootPane 1084. Also, the functions of the Clipboard 1087, a Drag&Drop 601, and an Overlay 602 are attached to the CoreComponent 110.

The SnapShot 1088 is used for restoring the application to a given state. Upon the user executing the SnapShot 1088, the current state of the application is detected and stored. Subsequently, when the application state changes, the content of the application state thus stored is maintained. Fig. 16(b) shows the operation of the SnapShot 1088. With such an arrangement, upon the application switching from one URL to another, the SnapShot 1088 stores the previous state. Such an arrangement allows operations to be performed forward and backward in a seamless manner.

### I. Document structure within the DocumentManager

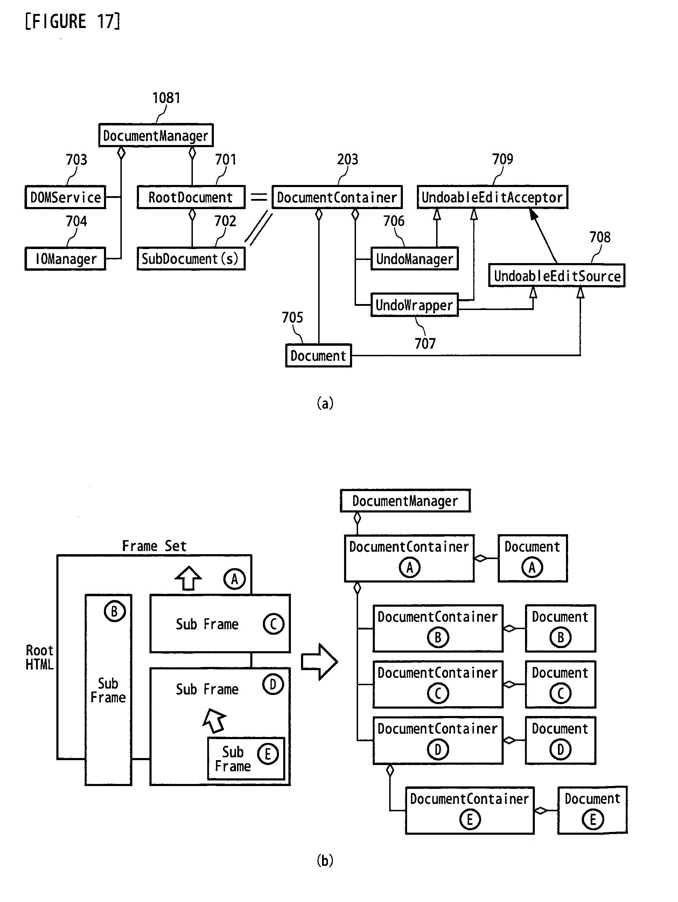

Fig. 17(a) provides a more detailed description of the DocumentManager 1081, and shows the DocumentManager holding documents according to a predetermined structure. As shown in Fig. 11(b), the DocumentManager 1081 manages the documents 1082. With an example shown in Fig. 17(a), one of the multiple documents is a RootDocument (root document) 701, and the other documents are SubDocuments (sub-documents) 702. The DocumentManager 1081 is connected to the RootDocument 701. Furthermore, the RootDocument 701 is connected to all the SubDocuments 702.

As shown in Fig. 12 and Fig. 17(a), the DocumentManager 1081 is connected to the DocumentContainer 203, which is an object for managing all the documents 1082. The tools that form a part of the tool kit 201 (e.g., XML tool kit) including a DOMService 703 and an IOManager 704 are supplied to the DocumentManager 1081. Referring to Fig. 17(a) again, the DOM service 703 creates a DOM tree based upon a document managed by the DocumentManager 1081. Each document 705, whether it is a RootDocument 701 or a SubDocument 702, is managed by a corresponding DocumentContainer 203.

Fig. 17(b) shows the documents A through E managed in a hierarchical manner. The document A is a RootDocument. On the other hand, the documents B through D are the SubDocuments of the document A. The document E is the SubDocument of the document D. The left side in Fig. 17(b) shows an example of the documents displayed on a screen according to the aforementioned hierarchical management structure. In this example, the document A, which is the RootDocument, is displayed in the form of a base frame. On the other hand, the documents B through D, which are the SubDocuments of the document A, are displayed in the form of sub-frames included in the base frame A. On the other hand, the document E, which is the SubDocument of the document D, is displayed on a screen in the form of a sub-frame of the sub-frame D.

Referring to Fig. 17(a) again, an UndoManager (undo manager = undo management unit) 706 and an UndoWrapper (undo wrapper) 707 are created for each DocumentContainer 203. The UndoManager 706 and the UndoWrapper 707 are used for executing an undoable command. Such a feature allows the user to reverse a modification which has been applied to the document according to an editing operation. Here, the modification of the SubDocument significantly affects the RootDocument. The undo operation performed under such an arrangement gives consideration to the modification that affects other hierarchically managed documents, thereby preserving the document integrity over all the documents managed in a particular hierarchical chain, as shown in Fig. 17(b), for example.

The UndoWrapper 707 wraps undo objects with respect to the SubDocuments stored in the DocumentContainer 203. Then, the UndoWrapper 707 connects the undo objects thus wrapped to the undo object with respect to the RootDocument. With such an arrangement, the UndoWrapper 707 acquires available undo objects for an UndoableEditAcceptor (undoable edit acceptor = undoable edit reception unit) 709.

The UndoManager 706 and the UndoWrapper 707 are connected to the UndoableEditAcceptor 709 and an UndoableEditSource (undoable edit source) 708. Note that the Document 705 may be the UndoableEditSource 708 or a source of an undoable edit object, as can be readily understood by those skilled in this art.

### J. Undo command and undo framework

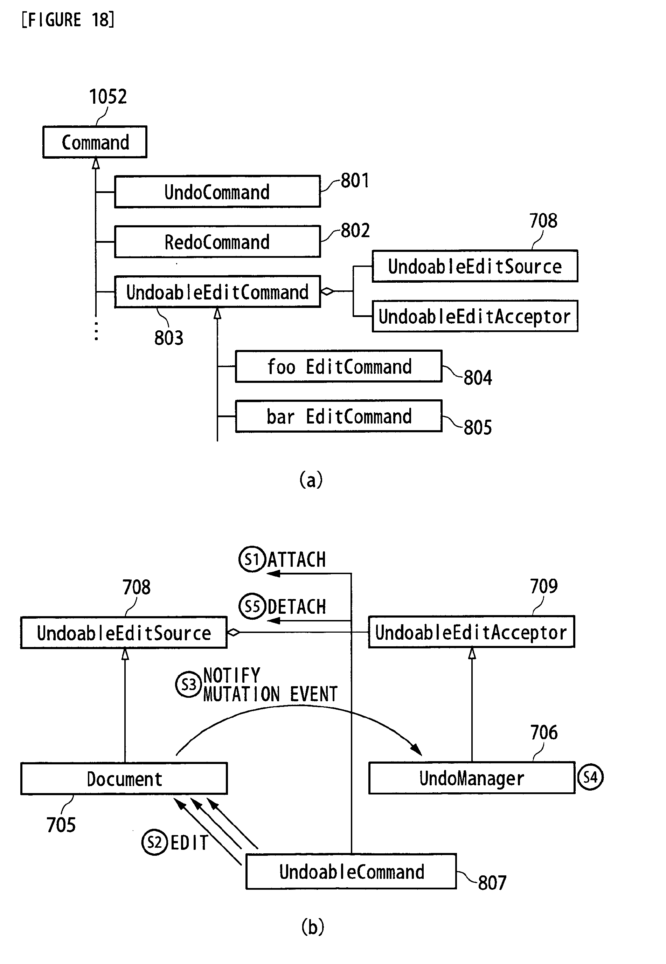

Fig. 18(a) and Fig. 18(b) provide a more detailed description with respect to an undo framework and an undo command. As shown in Fig. 18(a), an UndoCommand 801, RedoCommand 802, and an UndoableEditCommand 803 are commands that can be loaded in the CommandInvoker 1051, and which are serially executed. The UndoableEditCommand 803 is further attached to the UndoableEditSource 708 and the UndoableEditAcceptor 709. Examples of such undoableEditCommands include a "foo" EditCommand 804 and a "bar" EditCommand 805.

### 1. Execution of UndoableEditCommand

Fig. 18(b) shows execution of the UndoableEditCommand. First, let us consider a case in which the user edits the Document 705 using an edit command. In the first step S1, the UndoableEditAcceptor 709 is attached to the UndoableEditSource 708 which is a DOM tree of the Document 705. In the second step S2, the Document 705 is edited using an API for the DOM according to a command issued by the user. In the third step S3, a listener of the mutation event is notified of the modification. That is to say, in this step, the listener that monitors all modifications made to the DOM tree detects such an edit operation. In the fourth step S4, the UndoableEdit is stored as an object of the UndoManager 706. In the fifth step S5, the UndoableEditAcceptor 709 is detached from the UndoableEditSource 708. Here, the UndoableEditSource 708 may be the Document 705 itself.

### K. Procedure for loading a document to the system

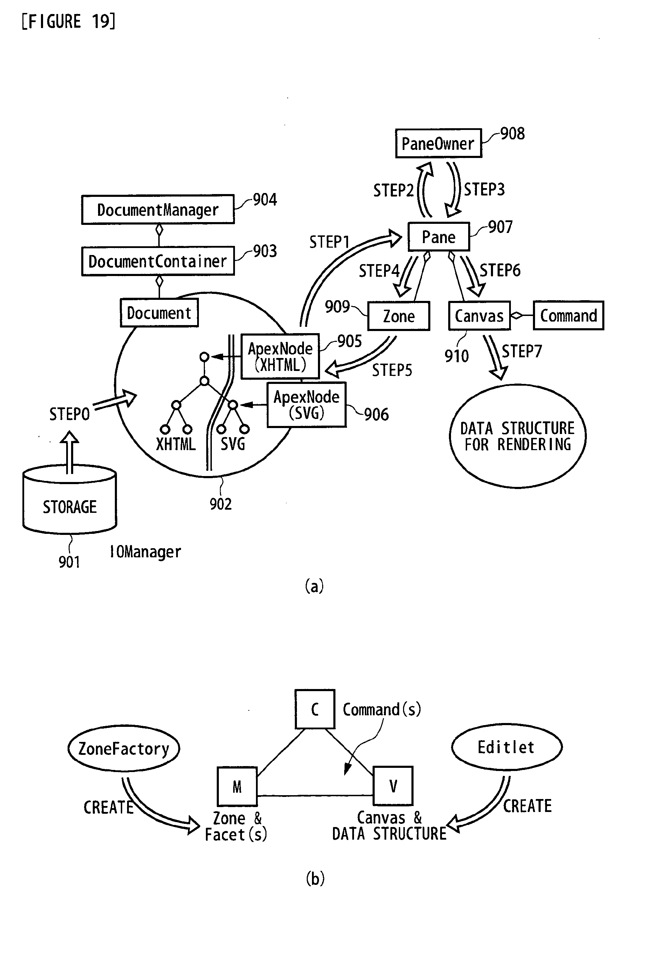

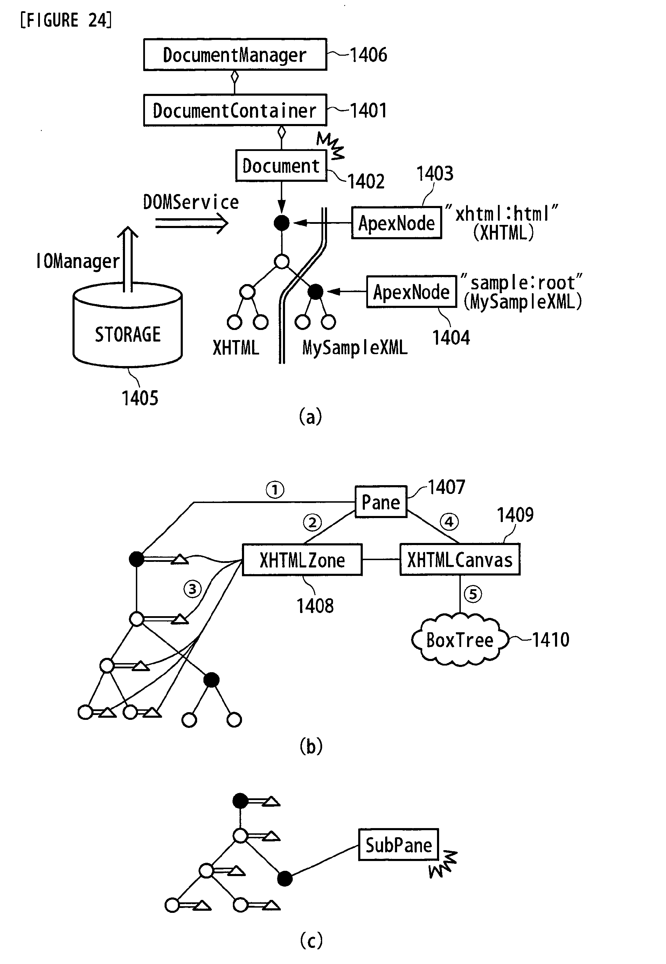

Description has been made in the aforementioned subsections regarding various components and sub-components of the system. Description will be made below regarding methods for using such components. Fig. 19(a) shows the outline of the operation for loading a document to the document processing system. Detailed description will be made regarding each step with reference to examples shown in Figs. 24 through 28.

In brief, the document processing system creates a DOM based upon the document data which is provided in the form of a binary data stream. First, an ApexNode (apex node = top node) is created for the targeted part of the document, which is a part of the document that belongs to the Zone. Subsequently, the corresponding Pane is identified. The Pane thus identified generates the Zone and Canvas from the ApexNode and the physical screen. Then, the Zone creates a Facet for each node, and provides the necessary information to the Facets. On the other hand, the Canvas creates a data structure for rendering the nodes based upon the DOM tree.

More specifically, the document is loaded from a storage 901. Then, a DOM tree 902 of the document is created. Subsequently, a corresponding DocumentContainer 903 is created for holding the document. The DocumentContainer 903 is attached to the DocumentManager 904. The DOM tree includes the root node, and in some cases includes multiple secondary nodes.

Such a document generally includes both text data and graphics data. Accordingly, the DOM tree may include an SVG sub-tree, in addition to an XHTML sub-tree. The XHTML sub-tree includes an ApexNode 905 for XHTML. In the same way, the SVG sub-tree includes an ApexNode 906 for SVG.

In Step 1, the ApexNode 906 is attached to a Pane 907 which is a logical layout of the screen. In Step 2, the Pane 907 issues a request for the CoreComponent which is the PaneOwner (pane owner = owner of the pane) 908 to provide a ZoneFactory for the ApexNode 906. In Step 3, in the form of a response, the PaneOwner 908 provides the ZoneFactory and the Editlet which is a CanvasFactory for the ApexNode 906.

In Step 4, the Pane 907 creates a Zone 909. The Zone 909 is attached to the Pane 907. In Step 5, the Zone 909 creates a Facet for each node, and attaches the Facets thus created to the respective nodes. In Step 6, the Pane 907 creates a Canvas 910. The Canvas 910 is attached to the Pane 907. The Canvas 910 includes various Commands. In Step 7, the Canvas 910 creates a data structure for rendering the document on a screen. In a case of XHTML, the data structure includes a box tree structure.

### 1. MVC of the Zone

Fig. 19(b) shows the outline of a structure of the Zone using the MVC paradigm. In this case, with respect to a document, the Zone and the Facets are the input, and accordingly the model (M) includes the Zone and the Facets. On the other hand, the Canvas and the data structure for rendering a document on a screen are the output, in the form of an image displayed on a screen for the user. Accordingly, the view (V) corresponds to the Canvas and the data structure. The Command executes control operations for the document and the various components that correspond to the document. Accordingly, the control (C) includes the Commands included in the Canvas.

### L. Representation of a document

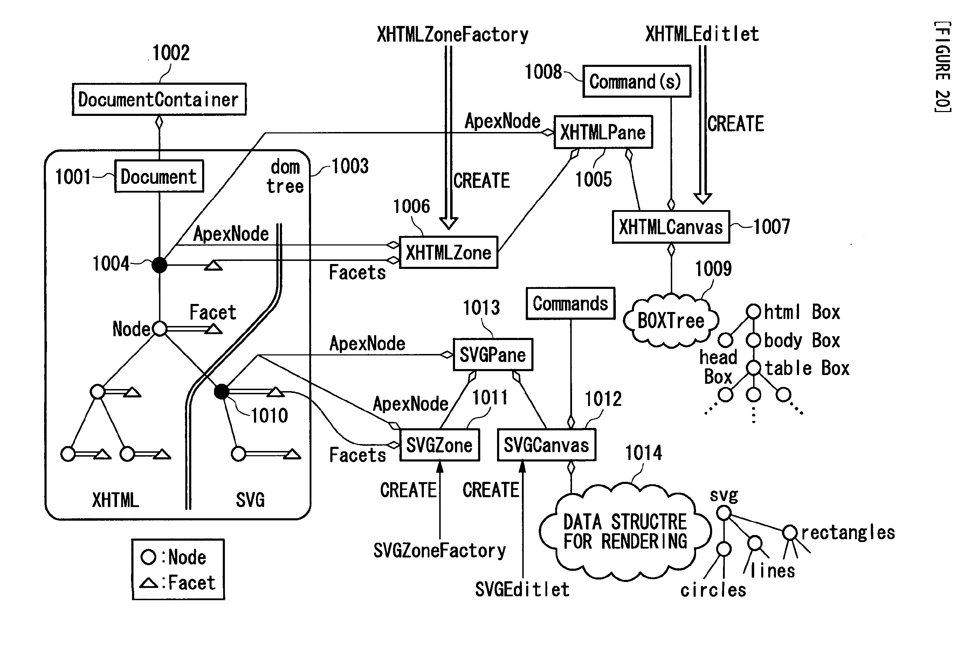

Description will be made below regarding an example of a document and various representations thereof. The document used in this example includes both text data and image data. The text data is represented using XHTML, and the image data is represented using SVG. Fig. 20 shows in detail the relation between the components of the document and the corresponding objects represented in the MVC. In this example, a Document 1001 is attached to a DocumentContainer 1002 for holding the Document 1001. The document is represented in the form of a DOM tree 1003. The DOM tree includes an ApexNode 1004.

The ApexNode is indicated by a solid circle. Each of the nodes other than the ApexNode is indicated by an empty circle. Each Facet used for editing the node is indicated by a triangle, and is attached to the corresponding node. Here, the document includes text data and image data. Accordingly, the DOM tree of the document includes an XHTML component and an SVG component. The ApexNode 1004 is the top node of the XHTML sub-tree. The ApexNode 1004 is attached to an XHTMLPane 1005 which is the top pane for physically representing the XHTML component of the document. Furthermore, the ApexNode 1004 is attached to an XHTMLZone 1006 which is a part of the DOM tree of the document.

Also, the Facet 1041 that corresponds to the Node 1004 is attached to the XHTMLZone 1006. The XHTMLZone 1006 is attached to the XHTMLPane 1005. The XHTMLEditlet creates a XHTMLCanvas 1007 which is a logical representation of the document. The XHTMLCanvas 1007 is attached to the XHTMLPane 1005. The XHTMLCanvas 1007 creates a BoxTree 1009 for the XHTML component of the Document 1001. Various commands 1008 necessary for holding and displaying the XHTML component of the document are added to the XHTMLCanvas 1007.

In the same way, an ApexNode 1010 of the SVG sub-tree of the document is attached to an SVGZone 1011 which is a part of the DOM tree of the document 1001, and which represents the SVG component of the document. The ApexNode 1010 is attached to an SVGPane 1013 which is the top Pane for physically representing the SVG part of the document. An SVGCanvas 1012 for logically representing the SVG component of the document is created by the SVGEditlet, and is attached to an SVGPane 1013. The data structure and the commands for rendering the SVG component of the document on a screen are attached to the SVGCanvas. For example, this data structure may include circles, lines, and rectangles, and so forth, as shown in the drawing.

While description has been made regarding the representation of a document with reference to Fig. 20, further description will be made regarding a part of such examples of the representations of the document using the above-described MVC paradigm with reference to Fig. 21(a). Fig. 21(a) shows a simplified relation between M and V (MV) with respect to the XHTML components of the document 1001. In this case, the model is the XHTMLZone 1101 for the XHTML component of the Document 1001. The tree structure of the XHTMLZone includes several Nodes and the corresponding Facets. With such an arrangement, the corresponding XHTMLZone and the Pane are a part of the model (M) component of the MVC paradigm. On the other hand, the view (V) component of the MVC paradigm corresponds to the XHTMLCanvas 1102 and the BoxTree that correspond to the XHTML component of the Document 1001. With such an arrangement, the XHTML component of the document is displayed on a screen using the Canvas and the Commands included in the Canvas. Note that the events occurring due to the keyboard action and the mouse input proceed in the opposite direction to that of the output.

The SourcePane provides an additional function, i.e., serves as a DOM owner. Fig. 21(b) shows the operation in which the vocabulary connection is provided for the components of the Document 1001 shown in Fig. 21(a). The SourcePane 1103 that serves as a DOM holder includes a source DOM tree of the document. The ConnectorTree 1104 is created by the ConnectorFactory, and creates the DestinationPane 1105 which also serves as an owner of the destination DOM. The DestinationPane 1105 is provided in the form of the XHTMLDestinationCanvas 1106 having a box tree layout.

### M. The relation between plug-in sub-system, vocabulary connection, and connector

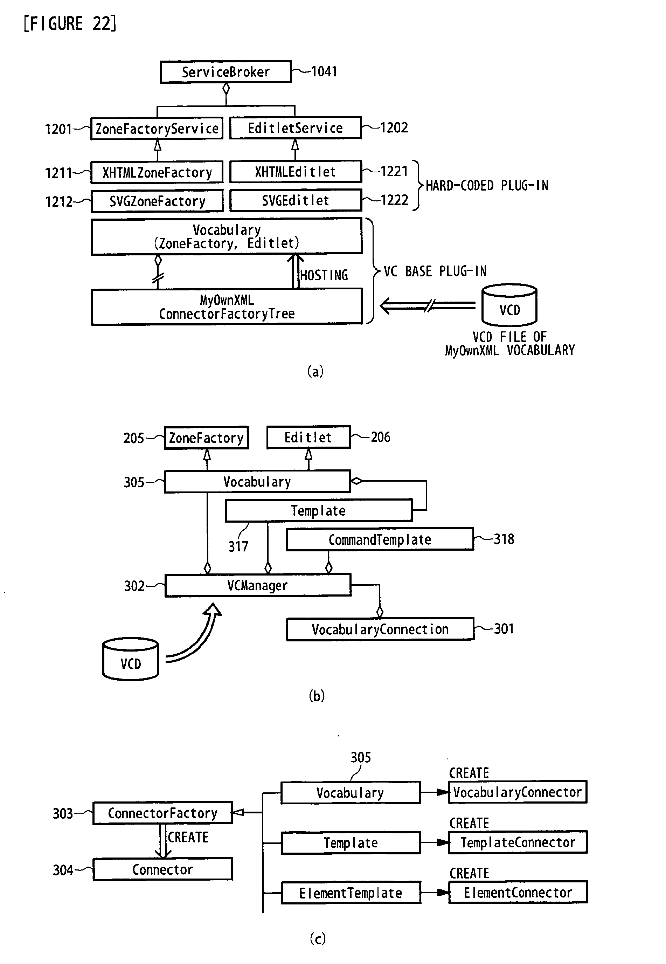

Figs. 22(a) through 22(c) provide further detailed description with respect to the plug-in sub-system, the vocabulary connection, and the Connector, respectively. The Plug-in sub-system is used for adding a function to the document processing system or for replacing a function of the document processing system. The plug-in sub-system includes the ServiceBroker 1041. A ZoneFactoryService 1201 attached to the ServiceBroker 1041 creates a Zone that corresponds to a part of the document. Also, an EditletService 1202 is attached to the ServiceBroker 1041. The EditletService 1202 creates a Canvas that corresponds to the Nodes included in the Zone.

Examples of the ZoneFactories include an XHTMLZoneFactory 1211 and an SVGZoneFactory 1212, which create an XHTMLZone and an SVGZone, respectively. As described above with reference to an example of the document, the text components of the document may be represented by creating an XHTMLZone. On the other hand, the image data may be represented using an SVGZone. Examples of the EditletService includes an XHTMLEditlet 1221 and an SVGEditlet 1222.

Fig. 22(b) shows the vocabulary connection in more detail. The vocabulary connection is an important feature of the document processing system, which allows a document to be represented and displayed in two different manners while maintaining the integrity of the document. The VCManager 302 that holds the ConnectorFactory 303 is a part of the vocabulary connection sub-system. The ConnectorFactory 303 creates the Connector 304 for the document. As described above, the Connector monitors the node included in the source DOM, and modifies the node included in the destination DOM so as to maintain the integrity of the connection between the two representations.

A Template 317 represents several node conversion rules. The vocabulary connection descriptor (VCD) file is a template list which represents several rules for converting a particular path, an element, or a set of elements that satisfies a predetermined rule into another element. All the Templates 317 and CommandTemplates 318 are attached to the VCManager 302. The VCManager is an object for managing all the sections included in the VCD file. A VCManager object is created for each VCD file.

Fig. 22(c) provides further detailed description with respect to the Connector. The ConnectorFactory 303 creates a Connector based upon the source document. The ConnectorFactory 303 is attached to the Vocabulary, the Template, and the ElementTemplate, thereby creating a VocabularyConnector, a TemplateConnector, and an ElementConnector, respectively.

The VCManager 302 holds the ConnectorFactory 303. In order to create a Vocabulary, the corresponding VCD file is read out. As described above, the ConnectorFactory 303 is created. The ConnectorFactory 303 corresponds to the ZoneFactory for creating a Zone, and the Editlet for creating a Canvas.

Subsequently, the EditletService for the target vocabulary creates a VCCanvas. The VCCanvas also creates the Connector for the ApexNode included in the source DOM tree or the Zone. As necessary, a Connector is created recursively for each child. The ConnectorTree is created using a set of the templates stored in the VCD file.

The template is a set of rules for converting elements of a markup language to other elements. For example, each template is matched to a source DOM tree or a Zone. In a case of a suitable match, an apex Connector is created. For example, a template "A/*/D" matches all the branches starting from the node A and ending with the node D. In the same way, a template "//B" matches all the "B" nodes from the root.

### N. Example of VCD file with respect to ConnectorTree

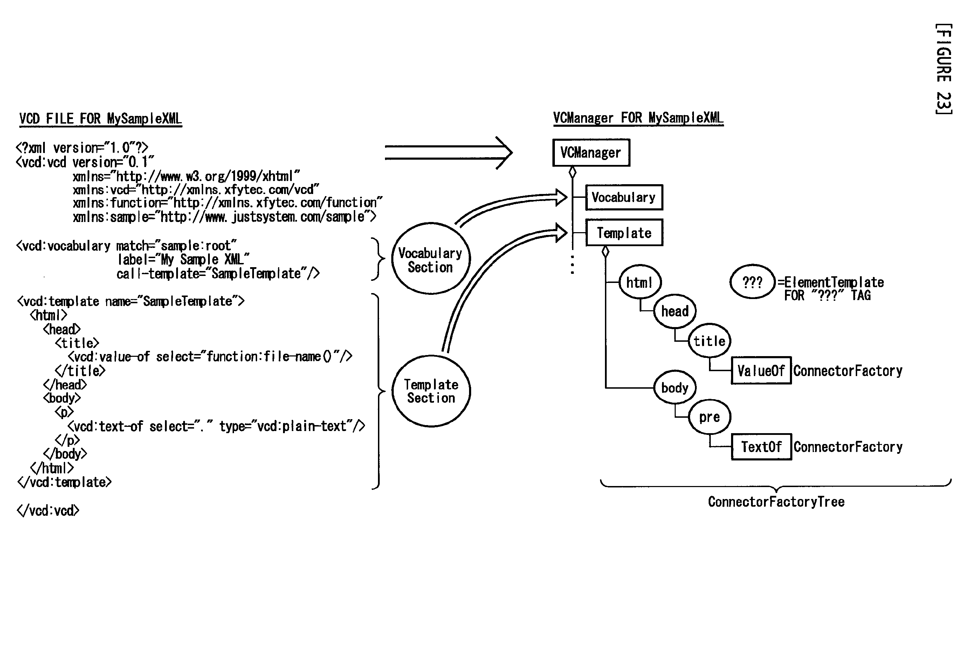

Further description will be made regarding an example of the processing with respect to a predetermined document. In this example, a document entitled "MySampleXML" is loaded in the document processing system. Fig. 23 shows an example of the VCD script for the "MySampleXML" file, which uses the VCManager and the ConnectorFactoryTree. In this example, the script file includes a vocabulary section, a template section, and a component that corresponds to the VCManager. With regard to the tag "vcd:vocabulary", the attribute "match" is set to "sample:root", the attribute "label" is set to "MySampleXML", and the attribute "call-template" is set to "sample template".

In this example, with regard to the VCManager for the document "MySampleXML", the Vocabulary includes the apex element "sample:root". The corresponding UI label is "MySampleXML". In the template section, the tag is "vcd:template", and the name is set to "sample:template".

### O. Detailed description of an example of a method for loading a file to the system

Figs. 24 through 28 provide a detailed description regarding loading the document "MySampleXML" in the system. In Step 1 shown in Fig. 24(a), the document is loaded from a storage 1405. The DOMService creates a DOM tree and a DocumentContainer 1401 that corresponds to the DocumentManager 1406. The DocumentContainer 1401 is attached to the DocumentManager 1406. The document includes an XHTML sub-tree and a MySampleXML sub-tree. With such a document, the ApexNode 1403 in the XHTML sub-tree is the top node of the XHTML sub-tree, to which the tag "xhtml:html" is assigned. On the other hand, the ApexNode 1404 in the "MySampleXML" sub-tree is the top node of the "MySampleXML" sub-tree, to which the tag "sample:root" is assigned.

In Step S2 shown in Fig. 24(b), the RootPane creates an XHTMLZone, Facets, and a Canvas. Specifically, a Pane 1407, an XHTMLZone 1408, an XHTMLCanvas 1409, and a BoxTree 1410 are created corresponding to the ApexNode 1403.

In Step S3 shown in Fig. 24(c), the tag "sample:root" that is not understood under the XHTMLZone sub-tree is detected, and a SubPane is created in the the XHTMLCanvas region.

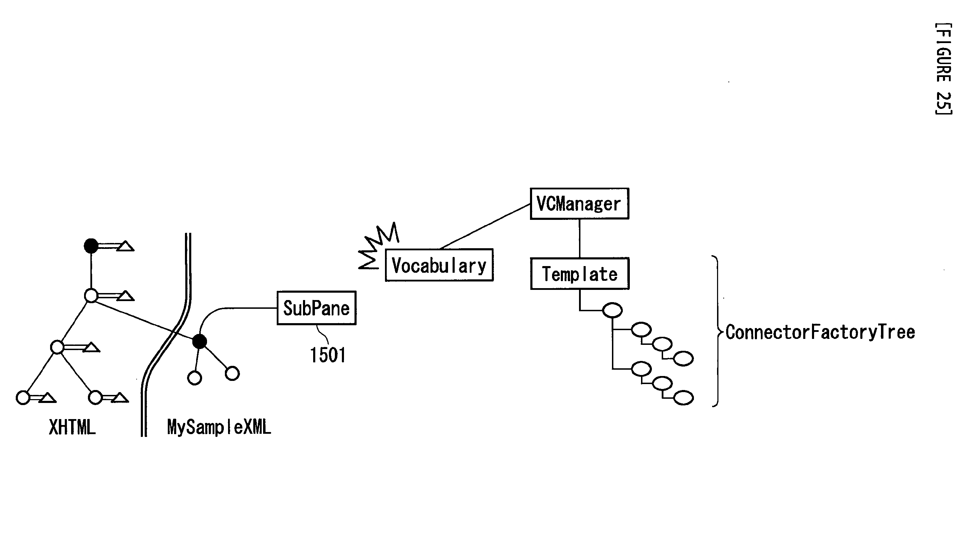

In Step 4 shown in Fig. 25, the SubPane can handle the "sample:root", thereby providing a ZoneFactory having a function of creating an appropriate zone. The ZoneFactory is included in the vocabulary, and the vocabulary can execute the ZoneFactory. The vocabulary includes the content of the VocabularySection specified in "MySampleXML".

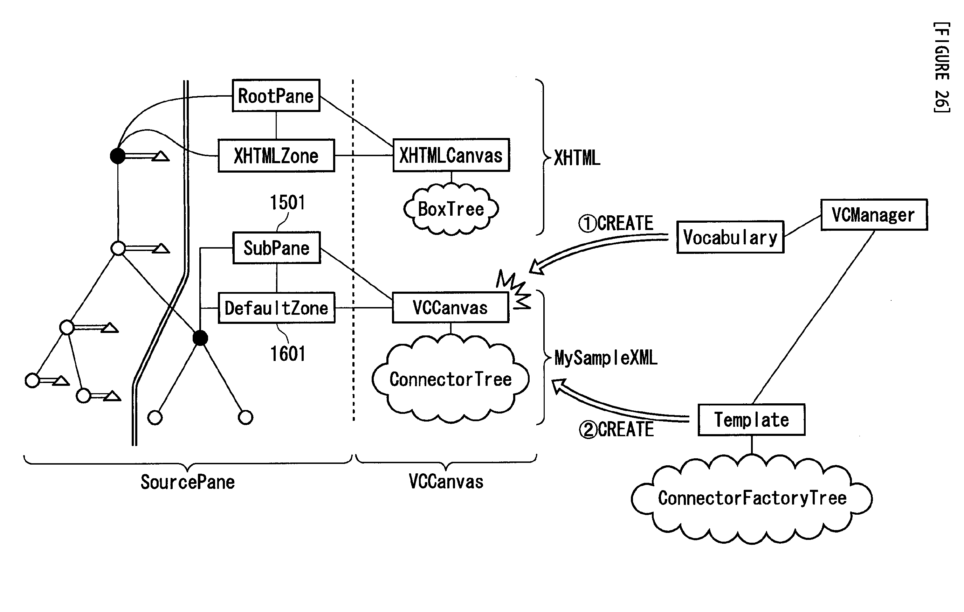

In Step 5 shown in Fig. 26, the Vocabulary that corresponds to "MySampleXML" creates a DefaultZone 1601. In order to create a corresponding Editlet for creating a corresponding Canvas, a SubPane 1501 is provided. The Editlet creates a VCCanvas. The VCCanvas calls the TemplateSection including a ConnectorFactoryTree. The ConnectorFactoryTree creates all the connectors that form the ConnectorTree.

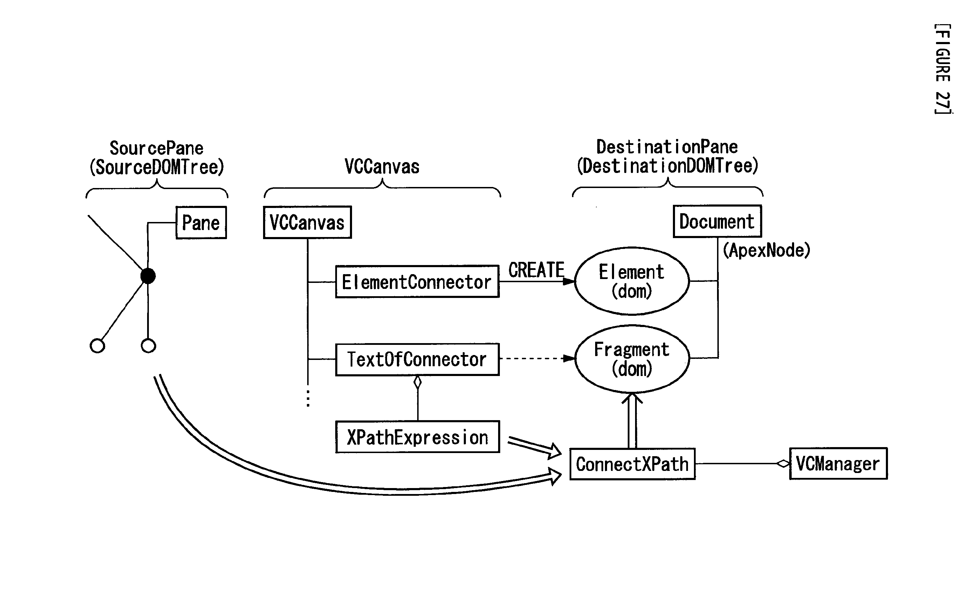

In Step S6 shown in Fig. 27, each Connector creates a corresponding destination DOM object. Some of the connectors include XPath information. Here, the XPath information includes one or more XPath representations used for determining a partial set of the source DOM tree which is to be monitored for changes and modifications.

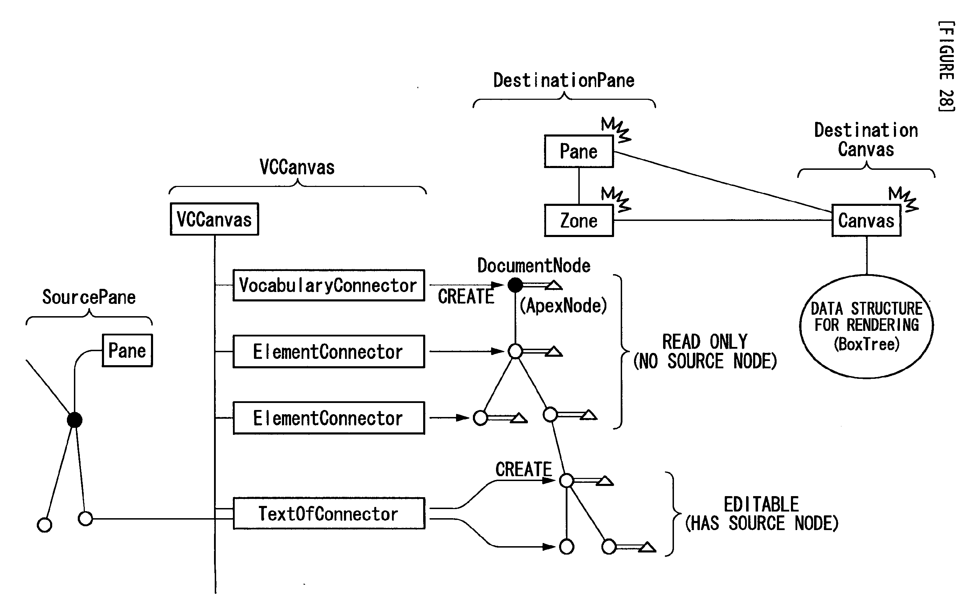

In Step S7 shown in Fig. 28, the vocabulary creates a DestinationPane for the destination DOM tree based upon the pane for the source DOM. Specifically, the DestinationPane is created based upon the SourcePane. The ApexNode of the destination tree is attached to the DestinationPane and the corresponding Zone. The DestinationPane creates a DestinationCanvas. Furthermore, the DestinationPane is provided with a data structure for rendering the document in a destination format and an Editlet for the DestinationPane itself.

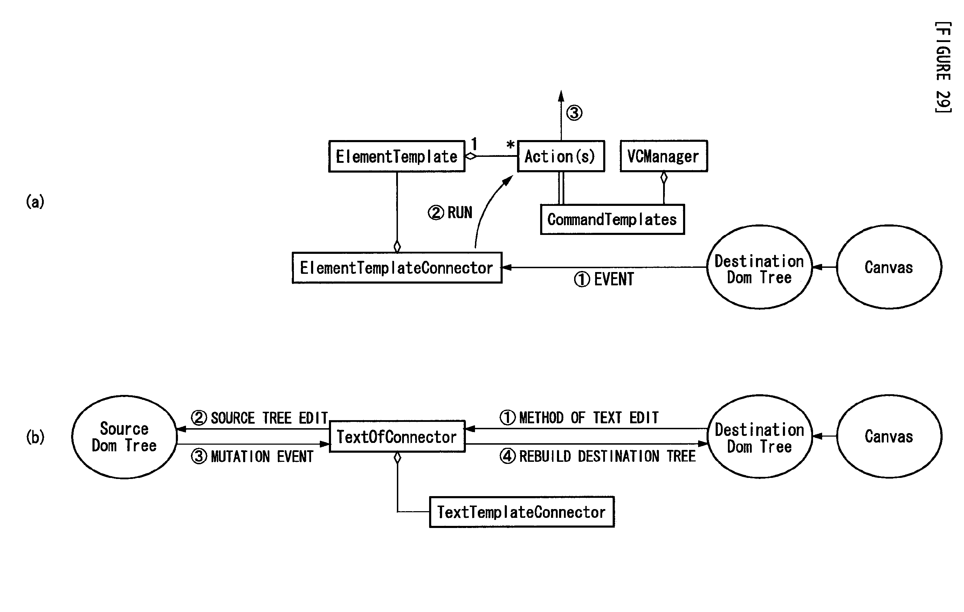

Fig. 29(a) shows a flow in a case in which an event has occurred at a node in the destination tree that has no corresponding source node. In this case, the event acquired by the Canvas is transmitted to an ElementTemplateConnector via the destination tree. The ElementTemplateConnector has no corresponding source node, and accordingly, the event thus transmitted does not involve an edit operation for the source node. In a case that the event thus transmitted matches any of the commands described in the CommandTemplate, the ElementTemplateConnector executes the Action that corresponds to the command. On the other hand, in a case that there is no corresponding command, the ElementTemplateConnector ignores the event thus transmitted.

Fig. 29(b) shows a flow in a case in which an event has occurred at a node in the destination tree that has been associated with a source node via a TextOfConnector. The TextOfConnector acquires the text node from the node in the source DOM tree specified by the XPath, and maps the text node to the corresponding node in the destination DOM tree. The event acquired by the Canvas, such as a mouse event, a keyboard event, or the like, is transmitted to the TextOfConnector via the destination tree. The TextOfConnector maps the event thus transmitted to a corresponding edit command for the corresponding source node, and the edit command thus mapped is loaded in the CommandQueue 1053. The edit commands are provided in the form of an API call set for the DOM executed via the Facet. When the command loaded in the queue is executed, the source node is edited. When the source node is edited, a mutation event is issued, thereby notifying the TextOfConnector, which has been registered as a listener, of the modification of the source node. Then, the TextOfConnector rebuilds the destination tree such that the destination node is modified according to the modification of the source node. In this stage, in a case that the template including the TextOfConnector includes a control statement such as "for each", "for loop", or the like, the ConnectorFactory reanalyzes the control statement. Furthermore, the TextOfConnector is rebuilt, following which the destination tree is rebuilt.

### (First embodiment)

The embodiment proposes a technique for holding the operation history for a document, thereby allowing the user to undo an operation so as to return to the operation state at a desired point in time, and also for allowing the user to reproduce the operation.

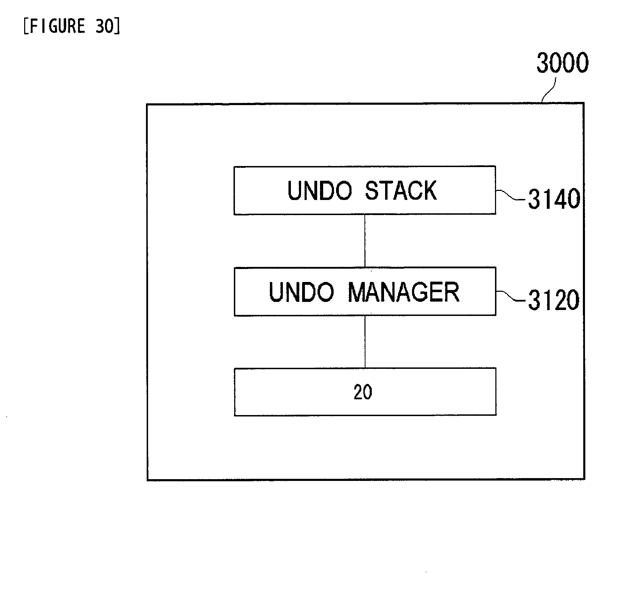

Fig. 30 shows a configuration of a document processing apparatus 3000 according to an embodiment. The document processing apparatus 3000 further includes an undo manager 3120 and an undo stack 3140, in addition to the configuration of the document processing apparatus 20 described in the background technique. The editing commands for the document processing apparatus 20 are provided in the form of a set of operations for a DOM tree formed from the document. Accordingly, the reverse operations of such DOM operations enable the user to easily perform the reverse operation of each editing command. Upon a functional block such as the HTML unit 150 or the like issuing an undoable command, the undo manager 3120 stacks in the undo stack 3140 a pair of commands that comprises a forward operation and a reverse operation. The undo function is provided by executing the reverse operations stacked in the undo stack 3140 in the reverse direction along the time axis in increments of commands. On the other hand, the redo function is provided by executing the forward operations stacked in the undo stack 3140 in the forward direction along the time axis in increments of commands. Such an arrangement enables the undo manager 3120 to manage all the undo functions for a functional block such as the HTML unit 150. Let us consider a case in which a new plug-in is developed. In this case, it is sufficient to develop the editing commands in increments of DOM operations. There is no need to develop dedicated undo commands.

Upon the document being closed and stored, the undo manager 3120 stores the operation history, stacked in the undo stack 3140, in a file or the like. That is to say, all the operations which were executed for the document are stored. Such an arrangement allows the user to restore the operation at a desired point in time by executing undo operations such that the operation state is returned to the state that corresponds to the desired point in time. Furthermore, after the operation state is returned to the operation state that corresponds to the desired point in time, the undo manager 3120 also allows the user to reproduce the operations starting from the desired point in time by repeatedly executing the redo operation.

Let us consider a case in which, during the editing a document, the user executes undo operations such that the operation state of the document is returned to the state that corresponds to a certain point in time, and subsequently executes operations that differ from those which were previously executed. In this case, the operation history branches from the point in time at which the reediting is performed. Let us consider a case in which operations are performed after the operation state is returned to the state that corresponds to a certain point in time by executing undo operations. In this case, with conventional and commonplace applications, the operation history is discarded for the operations that were previously performed. On the other hand, the undo manager 3120 according to the present embodiment holds all the operations including the undo operations in a time series manner. Such an arrangement allows the user to reproduce the branching of the operation history. For example, such an arrangement allows the user to restore the document to the state that corresponds to the point in time at which the user started reediting, and to restore the document to the state that corresponds to a point in time before the user started reediting.

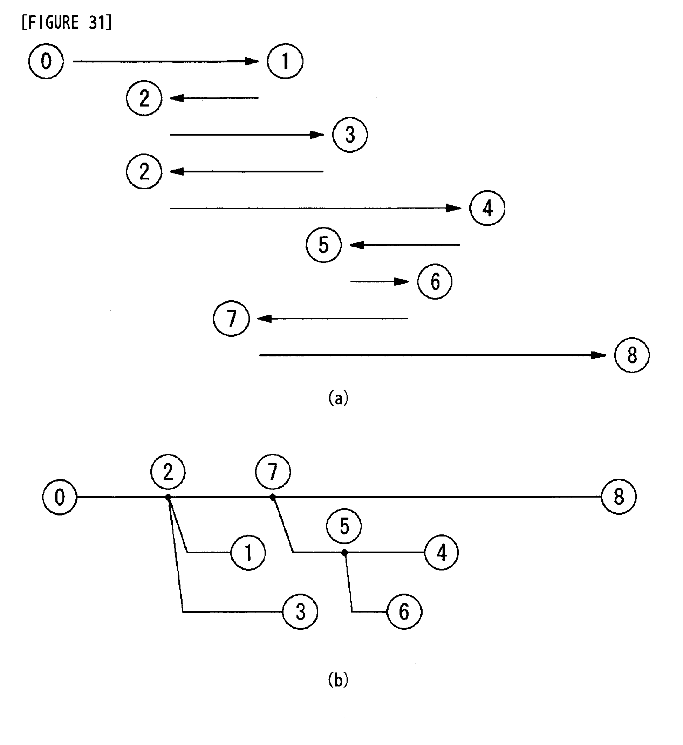

Fig. 31(a) shows the branching of the operation history. Fig. 31(b) shows the branching operation history displayed in a tree form. Specifically, Fig. 31(a) shows a case of the operation flow in which the user starts the operation from the state (0) where a new document has been created, performs operations so as to obtain the state (1), and executes undo operations so as to restore the state (2). Subsequently, the user restarts the operation from the state (2) so as to obtain the state (3). Then, the user executes the undo operations again to restore the state (2). Subsequently, the user performs operations as shown in Fig. 31(a). In this case, the undo stack 3140 stores the operations from the state (0) up to the state (8) in a time series manner.

Upon reception of a request from the user to output the operation history, the undo manager 3120 reads out the operation history stored in the undo stack 3140 or a file, and displays the operation history in a tree form as shown in Fig. 31(b). Fig. 31(b) shows an operation history in which branching is represented with the trunk being the process that connects the operation start point (0) and the current state (8). The undo manager 3120 may display the undo tree with critical states being highlighted. Examples of such critical states include the branching points, the points at which the document was stored, etc. For example, such a state may be displayed in a form of an icon. Also, the portion edited around such critical state may be displayed in a simple manner. Also, an arrangement may be made in which the date and time are stored for each operation, and the undo tree is displayed with the date and time attached to each critical state.

Also, an arrangement may be made in which, in a case that the user has specified a desired point on the undo tree via a mouse or the like, the undo manager 3120 executes undo operations so as to restore the state to the state that corresponds to the point in time thus specified, thereby reproducing the state that corresponds to the desired point in time. Also, an arrangement may be made which allows the user to display the state that corresponds to the desired point in time by single clicking the mouse on the undo tree. Also, an arrangement may be made which allows the user to execute undo operations so as to restore the state to the state that corresponds to the desired point in time by double clicking the mouse on the undo tree.

With the branching point as the start point, the undo manager 3120 may reproduce multiple operation processes and display the multiple branching operation processes for the user. For example let us consider a case in which the undo manager 3120 receives an instruction to reproduce an operation from the state (2). In this case, the operation process from the state (2) to the state (1) (first operation process), the operation process from the state (2) to the state (3) (second operation process), and the operation process from the state (2) to the state (4) (third operation process), may be reproduced concurrently.

### (Second embodiment)

A second embodiment proposes a technique for storing the operation history that has been described in the first embodiment, having a function whereby, while the critical states are stored as they are, the operation processes other than the critical states are compressed before the operation history is stored.

For example, let us consider a case in which, when text is being input, the user has deleted ten characters by pressing the backspace key ten times. In this case, it is sufficient to store the first state and the last state of the process of deleting the ten characters. That is to say, it is not particularly important to record the deletion of each character between the first character and the last character. Accordingly, the branching undo tree, which has been described in the first embodiment, may be stored in such a form that only the branching start point state (node) and the branching end state (leaf) are stored. With such an arrangement, the state transition represented by the branch is deleted. Such an arrangement suppresses the amount of data while maintaining the level of information regarding the operation history. Note that, in a case that such a transition operation state positioned in the branch corresponds to the critical point in time, e.g., the point in time at which the document is stored, such a transition operation state should not be deleted, and is preferably stored. Also, in a case that determination has been made that the node or the leaf is not important, such a node or leaf may be deleted. Also, an arrangement may be made which allows the user to set the conditions for determining whether or not a given state is to be deleted. For example, such an arrangement allows the user to set a condition in which all the states that correspond to the points in time at which the document is printed or stored are stored. With such an arrangement, the undo manager 3120 compresses the operation history stacked in the undo stack 3140 according to the conditions, and stores the operation history thus compressed in a file. With such an arrangement, a complex operation history in which the operation states are stored at a fine level of detail is reduced to a simple operation history in which the operation states are stored at a rougher level of detail. This offers an effective UI that presents the operation history to the user in a comprehensible form.

An arrangement may be made in which the undo manager 3120 compresses the operation history stacked in the undo stack 3140 before the document is stored. Also, an arrangement may be made in which, in a case that the remaining amount of storage space allocated to the undo stack 3140 has dropped below a predetermined threshold, the undo manager 3120 compresses the operation history, even when the document is being edited.

### (Third embodiment)

A third embodiment proposes a UI that displays along the time axis the operation history that has been described in the first embodiment.

When the operation history is stacked to the undo stack 3140, the undo manager 3120 stores the operation in association with the operation date and time. Upon reception of an instruction from the user to display the operation history, the undo manager 3120 reads out the operation history stored in the undo stack 3140 or a file, and displays the operation history along the time axis. The time axis may be displayed in a linear form or in the form of a curve. Also, the time axis may be displayed in any continuous form. The entire region of the time axis may be displayed. Also, a part of the time axis may be displayed in detail. Such an arrangement may include means for allowing the user to move the state currently displayed to other states along the time axis which had not been currently displayed. For example, a UI may be provided in which the operation history is presented as a scroll along the time axis. Such an arrangement allows the user to scroll through the states along the time axis. Examples of the means that allow the user to scroll through the states along the time axis include: an arrangement including a slider, which allows the user to scroll through the states by sliding the slider in the horizontal direction or the vertical direction; an arrangement that allows the user to scroll through the states by performing a dragging operation along the axis via the mouse; an arrangement in which points that serve as nodes are displayed, and the state is switched by clicking any one of these points; an arrangement in which a dial or the like is displayed, which allows the user to scroll through the states by rotating the dial or the like; and an arrangement which allows the user to scroll through the states by inputting an instruction via an input means that allows the user to input information that indicates the direction, such as direction keys, a joystick, a mouse, etc..

The undo manager 3120 may display all the operations thus stored along the time axis. Also, the undo manager 3120 may extract a part of the operations, and display the part of the operations thus extracted. For example, only the important states may be displayed as described in the second embodiment. In order to allow the user to easily identify the states, an arrangement may be made in which each state is displayed in a form of an icon or a graphic symbol, and information is displayed in the vicinity of each icon or graphic symbol, such as the date and time that corresponds to the state, the version number of the document, the operation content that corresponds to the state, and the character string edited at the point in time that corresponds to the state, or the like. The undo manager 3120 may set the length of the time axis so as to reflect the actual dates and times at which each operation was performed, so as to reflect the period of time required for the operations, or so as to reflect the amount of edited data, the number of characters, or the amount of change in the DOM.

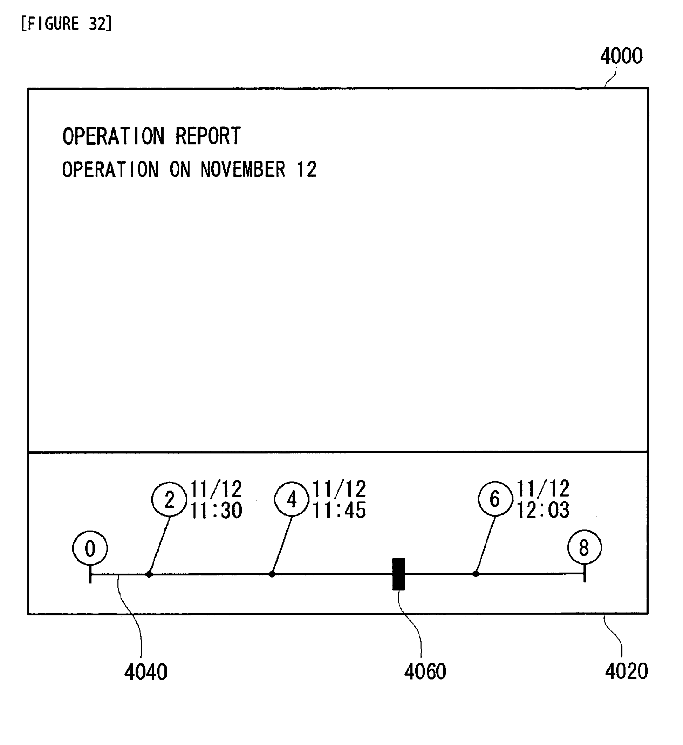

Fig. 32 shows an example of a screen 4000 displayed by the document processing apparatus 3000. The screen 4000 includes an undo UI screen 4020 at a lower portion thereof, which is displayed by the undo manager 3120. Furthermore, a time axis 4040 is displayed on the undo UI screen 4020. With such an arrangement, the operation history is displayed along the time axis 4040. A slider 4060 is displayed on the time axis 4040. With such an arrangement, upon the user moving the slider 4060 in the horizontal direction using a mouse, the operation process is displayed in a manner like that of the playback of a moving image. With an example shown in Fig. 32, the time axis is provided according to the date and time at which the operations were performed. Accordingly, the operation history is not displayed in a branching form. That is to say, the operation history that includes undo functions for restoring the state to a previous state is provided in a linear form in a time series manner. Also, with another example, the undo manager 3120 may display the time axis in a tree form as described in Fig. 31(b), for example.

An arrangement may be made in which the undo manager 3120 receives a request to search the operation history, and displays the search results along the time axis. For example, let us consider a case in which the user desires to know the date and time at which the document was printed by the user, or a case in which the user desires to return the state to the state that corresponds to the point in time at which the document was printed. In this case, the undo manager 3120 searches the operation history for the printing operation, and displays the search results along the time axis. Such an arrangement offers a UI that provides the operation history in a comprehensive form and with improved ease-of-use. Also, such an arrangement may display the storage history of a document, thereby offering a UI that allows the user to easily manage the versions of the document.

Description has been made in the aforementioned embodiment regarding a UI which displays the operation history of the document processing apparatus 3000 along the time axis. Also, the technique according to the present embodiment may be applied to general applications. With such an arrangement, the application holds the operation content performed according to an instruction from the user or the like in association with the date and time at which the operation was performed. Upon reception of a request from the user, the UI displays the operation history thus held along the time axis. Examples of such applications having a function of managing the operation history include a word processor for editing a document, an OS that serves as a platform for multiple applications, etc. In the latter case, the OS may store the operation histories of the multiple applications in increments of applications. With such an arrangement, the operation histories of the multiple applications may be displayed in parallel on multiple undo UI screens. Also, an undo UI screen for displaying the operation history of a particular application may display the operation history of a different application in the form of sub-information.

### (Fourth embodiment)

A technique is proposed using the techniques described in the first through third embodiments to provide a support environment for the user's decision-making.

The information structuring technique that uses XML can be applied to various applications. Accordingly, in order to solve various problems, a given state transition can be represented by the state transition in XML. With the present embodiment, such a state transition is held, and is displayed for the user using the techniques described in the first through third embodiments. Such an arrangement provides an environment that allows the user to easily examine the past state transition, and to easily restore the past state, thereby supporting the user's decision-making.

Let us consider a case in which the user selects desired parts for personal computers on a mail-order site, and decides on an optimum specification customized for the user's own purposes. In this case, the user decides on a combination of the parts by trial and error, and the desired combination finally decided on is ordered. The undo manager 3120 stores the trial and error process of decision-making in the undo stack 3140. In this step, as described in the second embodiment, while unimportant state transitions are omitted from storage, important state transitions are stored. That is to say, the state transitions are stored in the form of a tree, including the nodes and leaves but without the branches. For example, the parts combination candidates that are mutually incompatible are each represented by leaves. Accordingly, such parts combination candidates are stored, and are displayed as described in the first or the third embodiments. Such an arrangement allows the user to decide on the final combination while looking over the parts combination candidates. The undo manager 3120 may receive an instruction from the user to designate a particular state as being important. For example, let us consider a case in which, in the course of the trial and error process, the user desires to store a particular parts combination candidate. In this case, the undo manager 3120 may store the particular parts combination candidate according to an instruction from the user to store the particular parts combination candidate.

The states thus stored by the user may be provided in the form of a list with comments, thereby displaying the states in a more comprehensible form. Such an arrangement effectively supports the user's decision-making. Also, such an arrangement allows the user to start the user's next decision-making process from a state thus stored as the start point. Also, from the perspective of the mail-order site service provider, such an arrangement provides information with respect to the potential demand for a particular product, which is useful for marketing and so forth. Furthermore, based upon the results of statistical analysis, such an arrangement may provide a typical specification as an example state, which provides a recommendation engine function.

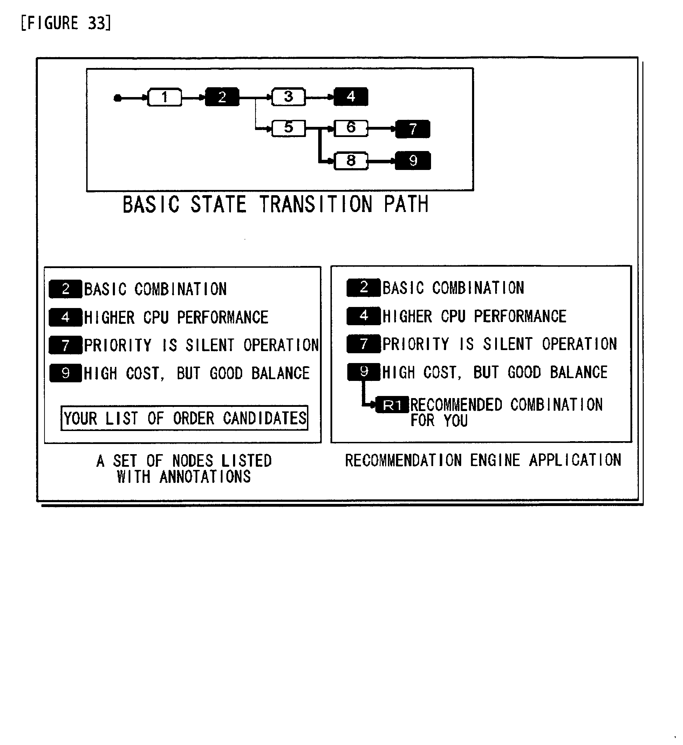

Fig. 33 is a diagram for describing the aforementioned example. The state transition path followed by the user is shown in an upper portion of Fig. 33. Furthermore, the important states (nodes), listed with annotations, are shown in the lower-left portion of Fig. 33. Such a display arrangement supports the user's decision-making. Also, the states displayed for the user, which are recommended by a recommendation engine based upon the state transitions made by the user, are shown in the lower-right portion of Fig. 33. As described above, an arrangement may be made in which the state transitions made by multiple users are integrated, and an example state is displayed for other users based upon the integration results.

The technique according to the present embodiment may be widely and generally applied to applications for processing data, Web browsers, etc., in addition to the aforementioned example. For applications for processing data such as a text editor, an image creating application, etc., an arrangement may be made in which commands that allow the user to store the current state as a node are prepared and a UI which allows the user to examine the operation history is provided. Also, for a Web browser that allows the user to follow hyperlinks or the like, and to browse Web pages, an arrangement may be made in which the page transition history is held in the form of a tree, and the page transition history thus stored is displayed for the user in a form including a thumbnail or the like. Such an arrangement provides a UI with improved ease-of-use for a case in which the user again browses a site which was browsed previously, and so forth.

Additional description will be made below regarding the first embodiment through the fourth embodiment.

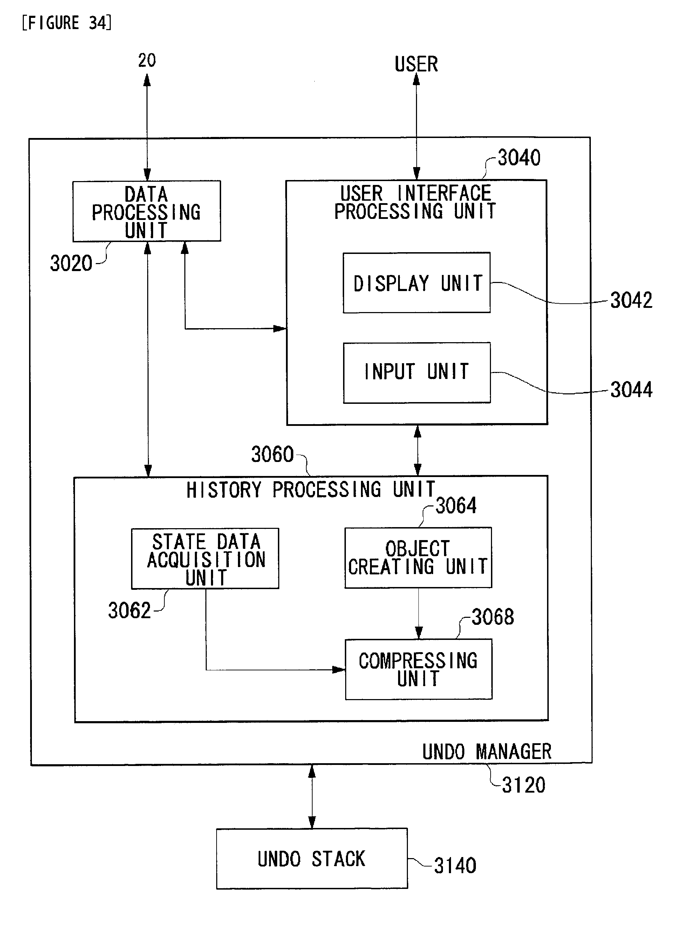

Fig. 34 is a detailed functional block diagram for describing the undo manager shown in Fig. 30.
Of the components of the document processing apparatus 3000, the undo manger 3120 and the undo stack 3140 provide a function of allowing the user to input editing operations, and a function of managing the data processing history for a document file.
The undo manager 3120 includes a data processing unit 3020, a user interface processing unit 3040, and a history processing unit 3060.
The user interface processing unit 3040 provides a function of performing general processing for the user interface. The data processing unit 3020 serves as an interface that allows data to be exchanged between the document processing apparatus 20, the user interface processing unit 3040, and the history processing unit 3060. With the present embodiment, the data processing unit 3020 transmits an instruction to the document processing apparatus 20 for the data processing. In practice, the document processing apparatus 20 executes the processing. For example, let us consider a case in which the user inputs characters. In this case, the data processing unit 3020 notifies the document processing apparatus 20 to the effect that the characters have been input. The document processing apparatus 20 executes the aforementioned various processing according to this notification. Furthermore, the user interface unit 3040 is notified of the processing results via the data processing unit 3020. The history processing unit 3060 manages the history information with respect to the data processing executed according to various operations received via the user interface processing unit 3040. The history information is stored in the undo stack 3140.

The user interface processing unit 3040 includes a display unit 3042 and an input unit 3044.
The display unit 3042 displays the data processing results on a screen. The input unit 3044 detects an input signal input from the user via an input device such as a keyboard, mouse, etc.

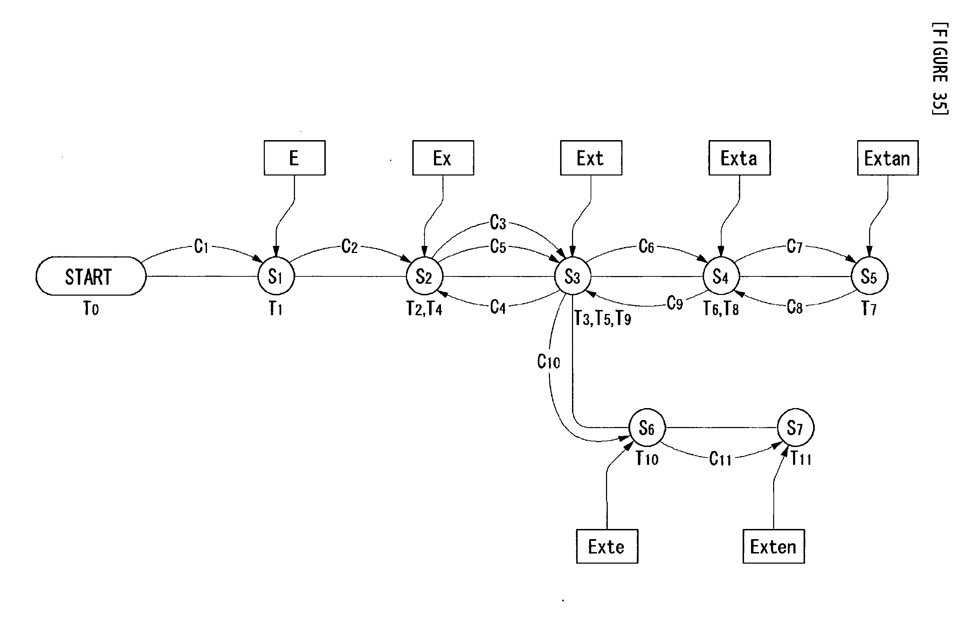

The history processing unit 3060 includes an object creating unit 3064, a state data acquisition unit 3062, and a compressing unit 3068.
The object creating unit 3064 creates a processing object that indicates the data processing content which is to be executed according to an input form the user. The processing object includes the information that indicates the data processing content. Furthermore, the processing object further includes the information that allows the reverse data processing to be performed. Also, the processing object further includes the date information that indicates the date and time at which the data processing was executed. The processing object may be created in the form of a class defined so as to indicate the data processing content, or in the form of an instance of sub-class inherited from the class. Also, the processing object may be provided in the form of a data sheet that specifies the data processing content. Description will further be made later regarding the processing object with reference to Fig. 35.

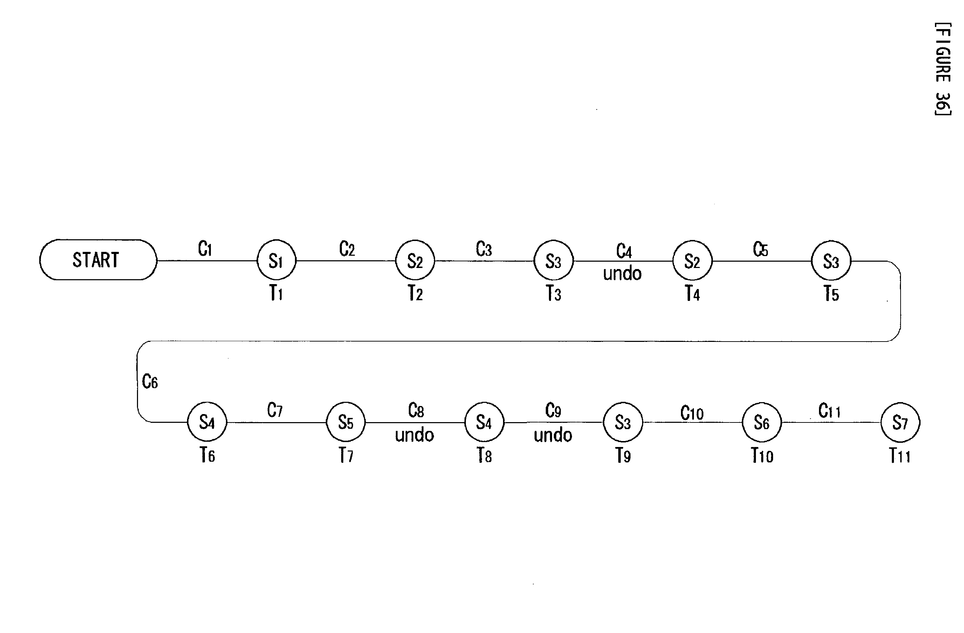

The state data acquisition unit 3062 acquires the state data which indicates the operation state obtained as a result of the data processing. The state object and the state data are stored in the undo stack 3140 in the form of the history information. The compressing unit 3068 compresses the amount of data necessary for the processing object and the state data which are to be stored in the undo stack 3140. Detailed description will be made regarding a specific compressing method with reference to Fig. 36 and so forth.

Fig. 35 is a schematic diagram for describing the management of the history information with respect to a document file.
With such an arrangement, the editing state of the document changes every time that the user executes an editing operation such as an input operation, a deletion operation, etc. The drawing shows a case in which state transitions occur among seven states, i.e., the state S₁ through the state S₇. Description will be made below regarding the states shown in the drawing, i.e., the states
S₁ through the state S₇. Note that the start state may be represented by "S₀".
S₁: The state in which one character "E" has been input.
S₂: The state in which two characters "Ex" have been input. S₃: The state in which three characters "Ext" have been input.
S₄: The state in which four characters "Exta" have been input.
S₅: The state in which five characters "Extan" have been input.
S₆: The state in which four characters "Exte" have been input.
S₇: The state in which five characters "Exten" have been input.

In the start state S₀, the user has input the character "E". Upon the user inputting the character "E", the state data acquisition unit 3062 acquires the state data with respect to the state S₁. The point in time when the state transits from the state S₀ to the state S₁ is represented by T₁. The points in time T₁ through T₁₁ shown in the drawing represent on a time basis the process of the state transition which occurs according to the user's editing operations. Description will be made below regarding the situations obtained at the points in time T₁ through T₁₁ shown the drawing. Note that the start point in time may be represented by T₀.
T₁: The character "E" is input in the start state S₀, and the state transition occurs to the state S₁. The state S₁ is created.
T₂: The character "x" is input in the state S₁, and the state transition occurs to the state S₂. The state S₂ is created.
T₃: The character "t" is input in the state S₂, and the state transition occurs to the state S₃. The state S₃ is created.
T₄: The character "t" is deleted in the state S₃, and the state transition occurs to the state S₂.
T₅: The character "t" is input in the state S₂, and the state transition occurs to the state S₃.
T₆: The character "a" is input in the state S₃, and the state transition occurs to the state S₄. The state S₄ is created.
T₇: The character "n" is input in the state S₄, and the state transition occurs to the state S₅. The state S₅ is created.
T₈: The character "n" is deleted in the state S₅, and the state transition occurs to the state S₄.
T₉: The character "a" is deleted in the state S₄, and the state transition occurs to the state S₃.
T₁₀: The character "e" is input in the state S₃, and the state transition occurs to the state S₆. The state S₆ is created.
T₁₁: The character "n" is input in the state S₆, and the state transition occurs to the state S₇. The state S₇ is created.
The state data acquisition unit 3062 acquires the state data that indicates the content of the corresponding state, i.e., one of the states S1 through S7, every time the state transition is executed. The undo stack 3140 holds such state data.

Here, the forward operation that effects the transition from Tₙ to Tₙ+1 is represented by Cₙ (n represents an integer equal to or greater than 0). On the other hand, the reverse operation that returns the point Tₙ+1 to the point Tₙ is represented by -Cₙ.
The object creating unit 3064 creates a processing object according to each of the operations, i.e., the operations C₁ through C₁₁, and stores the processing objects thus created in the undo stack 3140. For simplification of the representation, let us refer to the processing object for the operation Cₙ as "the n'th processing object" hereafter.
For example, the processing object for the operation C₂ shown in the drawing, i.e., the second processing object includes the following content for processing data.
1. The operation to move the cursor to a position after the character "E".
2. The character "x" is input.
That is to say, the processing object includes the information that indicates the position at which the operation is to be performed, and the information that indicates the kind of operation to be performed and the data object. In this example, the position at which the operation is to be performed is "the position after the character "E"". Furthermore, the kind of operation to be performed is "character input", and the data to be input is "x". Also, the position at which the operation is to be performed may be represented by the line number or the row number in a document file. Furthermore, the processing object includes the date information that indicates the date and time at which the operation C₂ was executed.
Note that the reverse operation -C₂ includes the following data content.
1. The operation to move the cursor to a position after the character "x".
2. The character at a position before the cursor is deleted.
The second object may include the data with respect to the reverse operation -C₂.

At the point in time T₃, the first through third processing objects have been stored in the undo stack 3140. In this stage, upon the user inputting an instruction to execute the undo operation, the user interface processing unit 3040 instructs the history processing unit 3060 to execute the undo operation. The history processing unit 3060 reads out the processing object for the operation C₃ from the undo stack 3140. Furthermore, the object creating unit 3064 creates the fourth processing object for the operation C₄ that corresponds to the reverse operation -C₃. In this case, it can be said that the fourth processing object is the processing object that exactly corresponds to the reverse data processing for the third processing object.
The object creating unit 3064 adds any processing object thus created to the undo stack 3140, even if the processing object thus created is the processing object for an undo operation. Accordingly, at the point in time T₄, the undo stack 3140 stores the first through fourth processing objects in order of the time at which the processing object was created.

Let us consider a case in which the user gives an instruction to delete the character "t", instead of the instruction to execute the undo operation. In this case, the object creating unit 3064 also creates the processing object for the operation C₄. In this case, the object creating unit 3064 may create the fourth processing object after determination has been made that such an operation is identical to the reverse operation of the third processing object. Alternatively, the object creating unit 3064 may create the fourth processing object for the data processing for deleting the character "t" without referring to the third processing object.

The undo manager 3120 adds the processing object to the undo stack 3140 every time the user executes an editing operation. Such an arrangement allows the user to reproduce the operation state at a desired point in time, i.e., Tₙ, by referring to the processing objects stacked in the undo stack 3140. For example, upon the user executing the reverse operation -Cₙ₋₁ at the point in time Tₙ, a state transition occurs to the state that corresponds to the point in time Tₙ₋₁. This allows the user to reproduce the past operation state. On the other hand, upon the user executing the operation Cₙ₋₁ at the point in time Tₙ₋₁, a state transition occurs to the state that corresponds to the point in time Tₙ again. This allows the user to execute a redo operation.
The object creating unit 3064 may create such a processing object according to various operations. Examples of such operations include: an operation for a component such as a graphic object embedded in a document file; an operation for a change of the active window; an operation for a menu selection other than an operation for inputting or deleting character.

Fig. 35 shows state transitions that follow two paths leading to concluding "leaf" states, one of which is a route by which the start state S₀ advances to the state S₅, which can be represented by a "leaf", and the other of which is a route by which the start state S₀ advances to the state S₇, which can be represented by a "leaf". In other words, the states S₁ through S₄, and S₆ are the intermediate states from the start state S₀ to the state S₅ or S₇. Note that the state S₃ is a branching point state branching to the state S₅ and the state S₇.
A state such as the state S₃ which serves as a branching point branching to multiple states will be referred to as a "node" or "branching point state" hereafter. In other words, the branch state is a state that allows the user to execute state transition to three or more existing states. In this drawing, the user can transit from the state S₃ to any one of the tree states S₂, S₄, and S₅- On the other hand, a state that allows the user to execute state transition to only one existing state will be referred to as a "leaf" or "end state", examples of which include the states S₅ and S₇. In this drawing, the state S₅ permits the user to execute state transition to only the state S₄. The state S₇ permits the user to execute state transition to only the state S₆. On the other hand, a state that allows the user to execute state transition to only two existing states will be referred to as a "branch state" hereafter, examples of which include the states S₁, S₂, S₄, and S₆.
Upon creating a new end state according to an editing operation, in some cases, an existing end state can become a branch state.

Fig. 36 is a diagram which shows the state transition arranged on a time basis.
The state transitions that occur in the document editing process can be handled from the time side, i.e., the time at which each editing operation was executed. As shown in the drawing, the operations Cₙ are arranged on a time basis. In this case, it can be understood that state transitions are executed among the seven states, i.e., the states S₁ through S₇, by executing eleven operations, i.e., the operations C₁ through C₁₁. Here, the operation C₄ is an undo operation. Specifically, the operation C₄ is identical to the reverse operation -C₃. In the same way, the operation C₈ is identical to the reverse operation -C₇, and the operation C₉ is identical to the reverse operation -C₆. In such a case, in order to reduce the amount of data necessary for holding the processing objects, the compressing unit 3068 may remove the pair of operations C₃ and C₄ from the undo stack 3140. The same can be said of the pair of operations C₇ and C₈, and the pair of operations C₆ and C₁₀. As described above, the compressing unit 3068 may remove the processing objects for a pair of operations, comprising data processing and reverse data processing, from the undo stack 3140, thereby reducing the amount of data.

Referring to Fig. 35 or Fig. 36, the latest state is the state S₇. That is to say, the state S₅ is an end state other than the latest state. In such a case, the compressing unit 3068 may set the processing objects which have been created in the processing up to an end state other than the latest state to be node reduction processing targets. In this case shown in Fig. 35, the processing objects for the operations C₆, C₇, C₈, and C₉ are set to be node reduction targets.

The state data for the state S₄ may include the information that allows the processing objects for the operations C₆, C₇, C₈, and C₉, to be identified. Such an arrangement allows the compressing unit 3068 to identify the processing objects for the operation C₆, C₇, C₈, and C₉, as the node reduction targets by referring to the state data for the state S₄ which is a branch state to an end state other than the latest state.

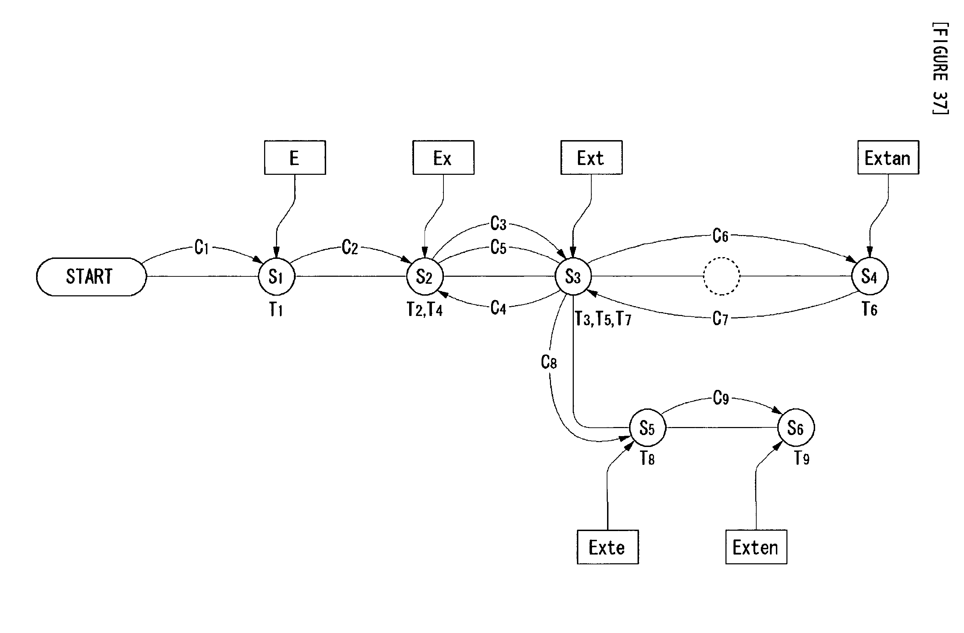

Fig. 37 is a schematic diagram for describing the operation history management in a case in which the branch state S₄ is removed from the process shown in Fig. 35 or Fig. 36.
Let us consider a case in which the processing objects for the operations C₆, C₇, C₈, and C₉ are set to be node reduction targets. That is to say, let us consider a case in which the branch state S₄ is set to be the node reduction target. In this case, the undo manager 3120 reassigns the numbers such that the old state S₅ serves as the new state S₄. In this case, the numbers are also reassigned in the same way to the old state S₆ and the old state S₇ which were created after the old state S₄ was created. At the same time, the undo manager 3120 also arranges Tₙ that represents each point in time and Cₙ that represents each operation as shown in this drawing.
In this drawing, the states at the points in time T₁ through T₉ are arranged as follows.
T₁: The character "E" is input in the start state, and the state transition occurs to the state S₁. The state S₁ is created.
T₂: The character "x" is input in the state S₁, and the state transition occurs to the state S₂. The state S₂ is created.
T₃: The character "t" is input in the state S₂, and the state transition occurs to the state S₃- The state S₃ is created.
T₄: The character "t" is deleted in the state S₃, and the state transition occurs to the state S₂.
T₅: The character "t" is input in the state S₂, and the state transition occurs to the state S₃.
T₆: The character string "an" is input in the state S₃, and the state transition occurs to the state S₄. The state S₄ is created.
T₇: The character string "an" is deleted in the state S₄, and the state transition occurs to the state S₃.
T₈: The character "e" is input in the state S₃, and the state transition occurs to the state S₅. The state S₅ is created.
T₉: The character "n" is input in the state S₅, and the state transition occurs to the state S₆. The state S₆ is created.
In this case, the operation C₆ corresponds to the operation for inputting the character string "an". Furthermore, the operation C₇ is identical to the reverse operation -C₆. With such an arrangement, the amount of data necessary for holding the processing objects is reduced.

As described above, the operations C₃ and C₄ form a pair. Accordingly, during the period that includes the points in time T₃, T₄, and T₅, the state transits from the state S₃ to the state S₂, and returns to the state S₃ again, without creating a new state. In such a case, the compressing unit 3068 may remove the processing objects for the operations C₃ and C₄. With such an arrangement, the states at the points in time T₁ through T₇ are arranged as follows.
T₁: The character "E" is input in the start state, and the state transition occurs to the state S₁. The state S₁ is created.
T₂: The character "x" is input in the state S₁, and the state transition occurs to the state S₂. The state S₂ is created.
T₃: The character "t" is input in the state S₂, and the state transition occurs to the state S₃. The state S₃ is created.
T₄: The character string "an" is input in the state S₃, and the state transition occurs to the state S₄. The state S₄ is created.
T₅: The character string "an" is deleted in the state S₄, and the state transition occurs to the state S₃.
T₆: The character "e" is input in the state S₃, and the state transition occurs to the state S₅. The state S₅ is created.
T₇: The character "n" is input in the state S₅, and the state transition occurs to the state S₆. The state S₆ is created.
The amount of data stored in the undo stack 3140 may be reduced in such a way.

The undo manager 3120 may set as the reduction target a processing object that has been or has not been explicitly specified by the user.
Also, in a case that multiple characters have been consecutively input, the processing objects created due to the input of these characters may be set to be reduction targets. Also, in a case that multiple characters have been consecutively deleted, the processing objects created due to the deletion of these characters may be set to be reduction targets. For example, let us consider a case in which the ten characters "extensible" are consecutively input. In this case, the eight processing objects created at the points at which the second character "x" through the ninth character "1" were input may be set to be reduction targets. In this case, the processing objects may be reduced to be as follows, for example.
1. The processing object for data processing created at the time when the first character "e" was input.
2. The processing object for data processing created at the time when the character string "xtensibl" was input.
3. The processing object for data processing created at the time when the last character "e" was input.

On the other hand, let us consider a case in which these ten characters are deleted by operating the backspace key or the like. In this case, the processing objects may be reduced to the processing object created at the time when the last character "e" was deleted, the processing object created at the time when the character string "xtensibl" was deleted, and the processing object created at the time when the first character "e" was deleted.
Also, an arrangement may be made in which a processing object that is created at the time of inputting a character such as a punctuation mark or special symbol, i.e., a character that differs from ordinary characters, is not set to be a reduction target.

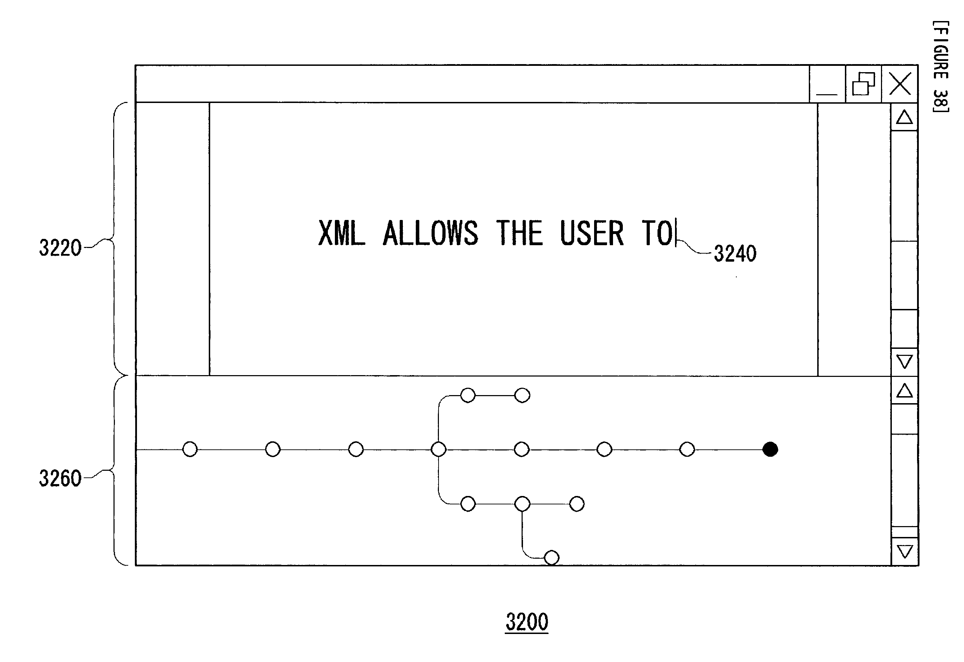

Fig. 38 is a diagram which shows a screen that allows the user to edit a document while referring to the processing objects.
During the editing of the document, the display unit 3042 displays a screen 3200. The screen 3200 is partitioned into two regions, e.g., an editing region 3220 and a state display region 3260. The editing region 3220 is a region that allows the user to edit a document. A cursor 3240 indicates the position at which the user can perform input operations. The state display region 3260 displays the state transition for the edited document in a form as shown in Fig. 35 or Fig. 37. In this drawing, the content of the editing in the state indicated by the solid circle is displayed on the editing region 3220. With such an arrangement, the processing object is created, and a state transition occurs every time the user executes editing operations via the editing region 3220. The display unit 3042 updates the content displayed on the state display region 3260 according to the state transition.

Upon the user clicking an object that indicates a state via the state display region 3260, the undo manager 3120 reproduces on the editing region 3220 the operation state that corresponds to the state thus selected. The undo stack 3140 holds the processing objects in order of the time at which the processing objects were created, as shown in Fig. 36. The data processing unit 3020 repeatedly executes the undo operations obtained from the processing objects thus read out until the state is returned from the current state to the state thus specified, thereby reproducing the state thus specified.
For example, let us consider a case in which the user selects the state S₄ in Fig. 35. In this case, the undo manager 3120 executes the reverse operations -C₁₁, -C₁₀, and -C₉, thereby reproducing the state S₄. With such an arrangement, each processing object holds the information that indicates the reverse data processing content which is the reverse of the data processing. Accordingly, the history processing unit 3060 reads out the processing objects C₁₁, C₁₀, and C₉, and instructs the data processing unit 3020 to execute the reverse data processing that is the reverse of these processing objects, thereby reproducing the state S₄.

The undo manager 3120 may execute the aforementioned node reduction processing as appropriate even during the editing operation. Also, such an arrangement allows the user to select the state which is to be removed, via the state display region 3260. Also, such an arrangement allows the user to remove a branch which includes multiple states, via the state display region 3260. Such instructions may be executed by operating a predetermined shortcut key, e.g., "ctrl + d".

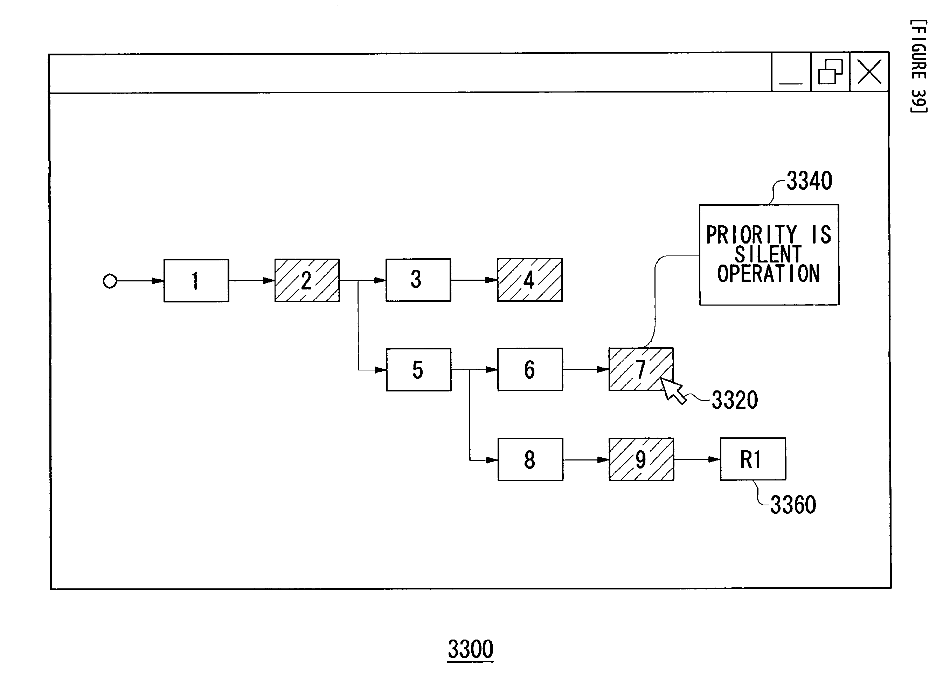

Also, instead of the aforementioned arrangement in which the object creating unit 3064 creates a processing object according to an editing operation, and the processing objects thus created are reduced as appropriate, an arrangement may be made in which the object creating unit 3064 creates the processing objects as necessary. For example, with such an arrangement, the object creating unit 3064 does not create a processing object every time that the user executes an editing operation via the editing region 3220. With such an arrangement, upon the user inputting an explicit instruction to create a processing object, the object creating unit 3064 creates the processing objects that indicate the data processing content for the process up to the current state, starting from the state immediately after the previous process for which the processing objects were created. Such a processing object creating instruction may be executed by operating a predetermined shortcut key.
The history processing unit 3060 may manage the editing history of the document file based upon the state data. Fig. 39, which is the next drawing, is a diagram for describing such an arrangement.

Fig. 39 is a diagram which shows a screen of a user interface which allows the user to select personal computer parts shown in Fig. 33.
Here, a Web page provided by a mail-order site allows the user to input to select a desired combination of parts.
A screen 3300 displayed on a Web browser displays the selection state with respect to various combinations of parts. Here, the functions of the document processing apparatus 3000 are provided in the form of a part of the functions of the Web browser. Every time the user modifies the combination of parts, the state data acquisition unit 3062 acquires the state after the modification, i.e., the state data that represents the combination of parts.

Upon the state transition occurring according to the user's selection operation, the display unit 3042 updates the display content displayed on the screen 3300. Here, the state denoted by the reference numeral "4" represents an end state. In this case, the user can select to be a reduction target the state denoted by the reference numeral "3". In this case, the compressing unit 3068 may remove the state data that corresponds to the state "3" from the undo stack 3140, thereby reducing the amount of data stored in the undo stack 3140. As described above, the node reduction processing may be executed in increments of state data sets, instead of the arrangement in which the node reduction processing is executed in increments of processing objects. With such an arrangement, the compressing unit 3068 may detect branching, and may set to be the reduction target the branch states that comprise the transition process from a branching point state up to an end state.

Upon the user positioning the cursor 3320 on an object that represents a desired state, an annotation region 3340 that provides an annotation for the state is displayed. Such an arrangement allows the user to record the reason for selecting the state in the form of the annotation region 3340. For example, in a case that the user has selected any one of the states on the screen 3300 by performing a double-clicking operation, the display unit 3042 may display a screen that allows the user to input the annotation region 3340. Such an arrangement allows the user to input information via this screen. The history processing unit 3060 stores the annotation information in the undo stack 3140 in association with the state data in the form of a part of the history information.

The information displayed in the annotation region 3340 allows the user to confirm the reasons why the user had selected the state. The annotation region 3340 improves the ease-of-use of the interface, thereby facilitating the user's selection of a desired state from among various states. Also, an arrangement may be made in which, upon the user positioning the cursor 3320 on an object that represents a state, the state data is displayed with respect to the state.

The state denoted by reference numeral "R1" represents a state defined beforehand by the undo stack 3140. Specifically, the state R1 represents a recommended combination of parts (which will be referred to as a "recommended state" hereafter) described with reference to Fig. 33. In a case that state transition has been executed to a state that is nearly the state R1, the display unit 3042 displays such a recommended state on the screen 3300. The term "a state that is nearly the state R1" as used here represents a state in which state transition to the state R1 can be made by executing a predetermined number of selection operations, e.g., by executing a single selection operation.
In addition to the finally selected state, the document processing apparatus 3000 may also transmit the end states other than the finally selected state to a server of the mail-order site. Such an arrangement allows the mail-order site manager to receive the information with respect to these end states, thereby acquiring the information with respect to the parts combination candidates which were each possible selection options for the finally selected combination of parts, in addition to the combination of parts which was selected by the user in the final stage. Such an arrangement allows more detailed marketing to be performed.
Further description will be made regarding examples of applications of the present invention.

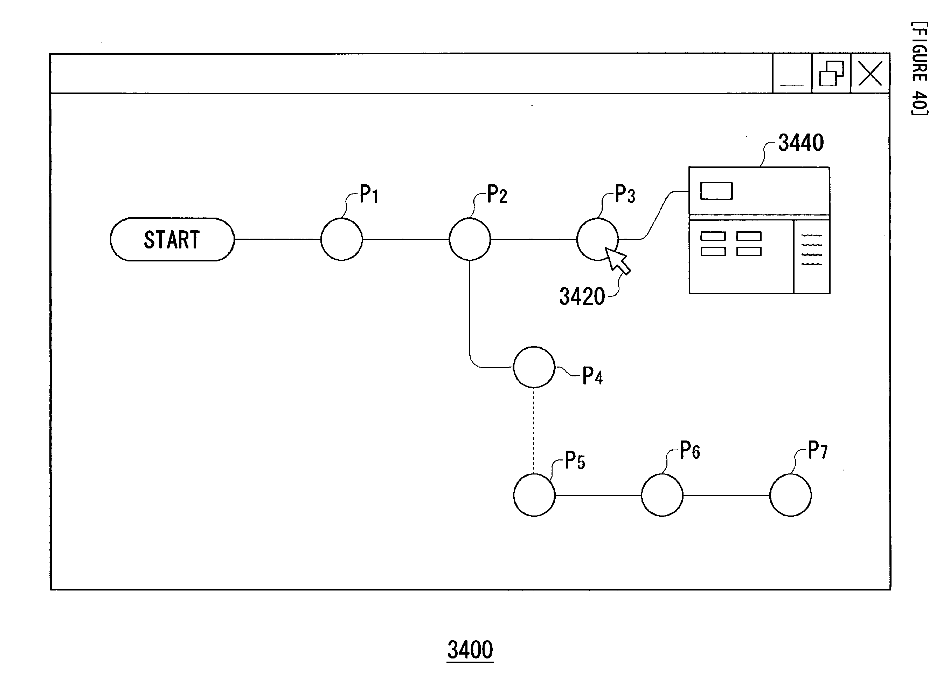

Fig. 40 is a screen diagram which shows the state transition with respect to page switching for a Web browser.
During a period when a Web browser displays home pages provided by various sites, the Web browser allows the user to jump to other home pages by following hyperlinks embedded in the form of a part of the data of the home page. The Web browser holds the page switching history. Also, such an arrangement allows the user to redisplay a home page that had been previously displayed, via a user interface such as an "undo" button or the like.
Here, let us consider a case in which, after the user jumps from the page A to the page B, the user returns to the page A, and the user then jumps to the page C. In such a case, with conventional arrangements, the selection history for the page B, which is a destination branching from the page A, is eliminated from the management target.
The present inventor has reached the conclusion that the management method for the state transition as described above can be effectively applied to the page selection in a Web browser.

The screen 3400 displays the selection history with respect to the Web pages. The reference symbols P₁ through P₇ are symbols for identifying the Web pages. Here, the user has jumped from the page P₁ to the page P₂ via a hyperlink. Furthermore, the user has jumped from the page P₂ to the page P₃. In addition, the history that has been recorded indicates that the user has jumped from the page P₂ to the page P₄.
Upon the user positioning the cursor 3420 on the page object P₃, the reduced image of the corresponding Web page is displayed on a thumbnail region 3440. Alternatively, in this case, the title of the Web page or the name of the service site may be displayed.
Here, the transition is executed from the page P₄ to the page P₅ using a method that does not involve the hyperlink. Examples of such methods include a method in which the transition is executed from the page P₄ to the page P₅ by directly specifying a URL (Uniform Resource Locator). Also, examples of such methods include a method in which the page P₅ is specified via a bookmark registered beforehand.
Such a page display history management method for a Web browser enables the past display history information to be held regardless of the page selection process.

The object creating unit 3064 creates a processing object according to the user's Web page selection operation. Such an arrangement allows the user to reproduce the display state that corresponds to a desired point in time by performing the undo operations or the redo operations with reference to these processing objects.
Also, an arrangement may be made in which the display content that corresponds to a desired point in time is reproduced with reference the state data acquired at the time of switching the display target Web page.
As described above, the operation of a Web page can be managed in increments of processing objects or in increments of state data sets in the same way as document processing.

Note that the undo manager 3120 may record for each page the content of operations performed by the user. For example, let us consider an arrangement in which a page is provided with two-way communication, i.e., in a manner that allows the user to transmit data to the site manager. With such an arrangement, the operation content of the page may be recorded. Such operation content may be managed in the form of a processing object.

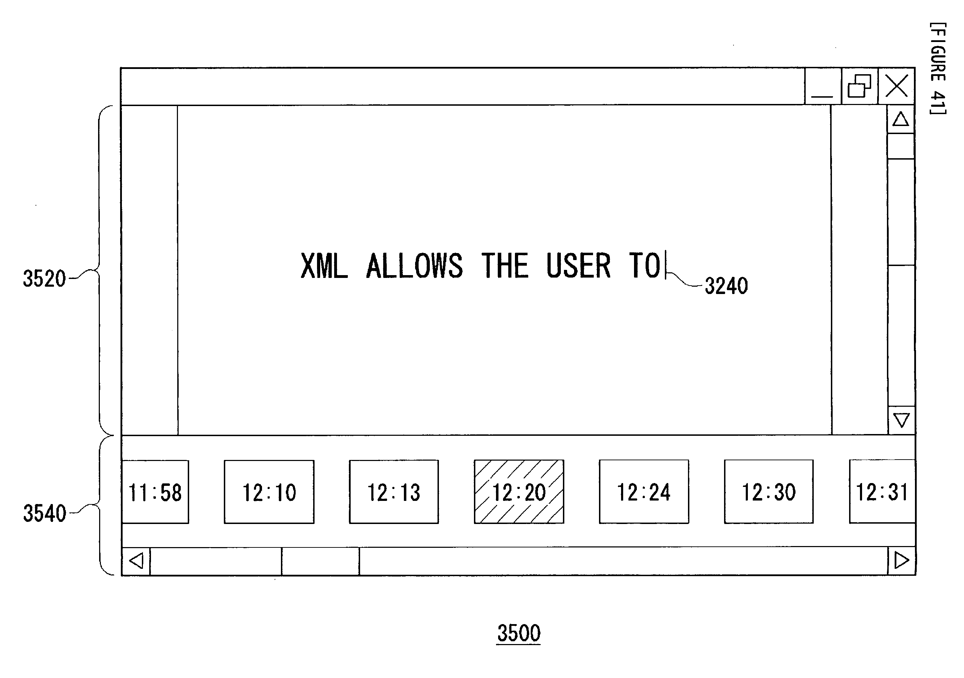

Fig. 41 is a diagram which shows a screen that allows the state transition to be managed on a time basis.
The screen 3500 is partitioned into an editing region 3520 and a time-based display region 3540. The editing region 3520 is a region for editing a document. The cursor 3240 indicates the input position. The time-based display region 3540 displays the history information with respect to the edited document on a time basis in a graphical form. Here, the operation history is displayed on a time basis according to the point in time Tₙ as shown in Fig. 36.
Fig. 32 shows an arrangement that allows the user to control the history information screen via a slider bar. On the other hand, Fig. 41 shows an arrangement in which the date and time at which the operation was performed are displayed in the form of a value, instead of the time axis 4040 being displayed. The operation date and time as used here may be the information with respect to the date and time stored in each processing object. Upon the user selecting any operation date and time via the time-based display region 3540, the display unit 3042 displays on the editing region 3520 the operation content that corresponds to the operation date and time thus selected.

Upon the user selecting any operation date and time via the time-based display region 3540, the undo operation is repeatedly performed so as to restore the operation state to the state that corresponds to the operation date and time thus selected. For example, in Fig. 36, let us consider a case in which the user inputs an instruction to restore the state to the state that corresponds to the date and time immediately after the operation C₅ was executed. In this case, the data processing unit 3020 executes the reverse operations -C₁₁, -C₁₀, ..., -C₆. thereby reproducing the operation state that corresponds to the date and time immediately after the operation C₅ was executed.
Such an arrangement allows the user to call the past operation history on a time basis. Let us consider a case
in which multiple document files were being displayed at a given operation date and time. In this case, the editing region 3520 may display the multiple document files.
Note that, in addition to displaying the operation date and time, the time-based display region 3540 may display a pickup image, which indicates the editing portion, for each operation date and time.

With the document processing apparatus 3000 described above, the operation history can be managed on a state basis as shown in Fig. 39 and so forth. Also, the operation history can be managed on a time basis as shown in Fig. 41 and so forth. Also, as described above, the present invention can also be applied to the display history management for a Web browser, in addition to the general document management.
The document processing apparatus 20 according to the background technique manages a structured document file such as an XML document file in increments of nodes. Accordingly, with such an arrangement, the processing objects can be managed in increments of node operations.

Description has been made regarding the present invention with reference to the embodiments. The above-described embodiments have been described for exemplary purposes only, and are by no means intended to be interpreted restrictively. Rather, it can be readily conceived by those skilled in this art that various modifications may be made by making various combinations of the aforementioned components or processes, which are also encompassed in the technical scope of the present invention.

Description has been made in the above embodiments regarding an arrangement for processing an XML document. Also, the document processing apparatus 20 has a function of processing other markup languages, e.g., SGML, HTML, etc.

### Industrial Applicability

The present invention provides a technique with improved ease-of-use for the user for processing data structured using a markup language.

## Claims

1. A data processing apparatus comprising:
processing means which processes data;
storage means which stores a history of the operation of said processing means; and
means which compresses an unimportant part of the history according to a predetermined condition.

2. A data processing apparatus according to Claim 1, wherein said compressing means compresses the history at the time of storing the data.

3. A data processing apparatus according to Claim 1 or 2, wherein, in a case that there are a plurality of branching operation histories, said compressing means compresses a part of the operation history that consists of the process from a first state at which branching occurred up to a second state at which the branch ends, and wherein the first state and the second state are maintained without being compressed.

4. A data processing apparatus comprising:
a data processing unit which executes data processing according to an instruction from a user;
a processing object creating unit which creates a processing object that represents the data processing content thus specified;
a processing object holding unit which holds the processing object thus created; and
a processing data compressing unit which reduces the amount of data required for holding the processing data,
wherein, in a case that the same kind of data processing is consecutively executed, said processing data compressing unit arranges a plurality of processing objects created in such processing executing steps such that they are reduced to a single processing object, thereby reducing the amount of data.

5. A data processing apparatus according to Claim 4, wherein said processing object creating unit creates the processing object in the form of an object that represents the processing content which is to be executed according to the user's editing operation for a document file,
and wherein, in a case that characters are consecutively input or deleted, said processing data compressing unit arranges a plurality of processing objects created at the time of inputting or deleting these characters such that they are reduced to a new processing object that corresponds to the input or deletion of the character string, thereby reducing the amount of data.

6. A data processing apparatus according to Claim 5, wherein said processing object creating unit creates the processing object in the form of an object that represents the data processing content according to a document object model defined in order to provide an access method for handling a document as data.

7. A data processing apparatus comprising:
a data processing unit which executes data processing according to an instruction from a user;
a processing object creating unit which creates a processing object that represents the data processing content thus specified;
a processing object holding unit which holds the processing object thus created; and
a processing data compressing unit which reduces the amount of data required for holding the processing object,
wherein, upon reception of an instruction to execute the reverse data processing for returning the state to the state before the data processing was executed from the state after the data processing was executed, said data processing unit executes the reverse data processing with reference to the processing object that corresponds to the data processing already executed,
and wherein, in a case that the data processing involved branching state transition, said processing data compressing unit arranges a plurality of processing objects created in steps that constitute a process from a first state at which the branching occurrs to a second state at which the branch ends such that they are reduced to a single processing object, thereby reducing the amount of data.

8. A data processing apparatus according to Claim 7, wherein the processing object includes the information that indicates the content of data processing and the information that indicates the content of the reverse data processing, which is the reverse of the former data processing.

9. A data processing apparatus comprising:
a data processing unit which executes data processing according to an instruction from a user;
a state data creating unit which acquires state data that indicates the state that occurred as a result of the data processing executed by the instruction;
a state data holding unit which holds the state data thus acquired; and
a state data compressing unit which reduces the amount of data required for holding the state data,
wherein, in a case that the data processing involved branching state transition, said processing data compressing unit arranges a plurality of state data sets acquired in steps that constitute a process from a first state at which the branching occurred to a second state at which the branch ends such that they are reduced to a single state data set, thereby reducing the amount of data.

10. A data processing method comprising:
executing data processing according to an instruction from a user;
creating a processing object that represents the data processing content thus specified;
holding the processing object thus created; and
reducing, in a case that the same kind of data processing is consecutively executed, plurality of processing objects created in the data processing to a single processing object, thereby reducing the amount of data required for holding the processing objects.

11. A data processing method comprising:
executing data processing according to an instruction from a user;
creating a processing object that represents the data processing content thus specified;
holding the processing object thus created;
executing, upon reception of an instruction to execute the reverse data processing for returning the state to the state before the data processing was executed from the state after the data processing was executed, the reverse data processing with reference to the processing object that corresponds to the data processing already executed; and
reducing, in a case that the data processing involved branching state transition, a plurality of processing objects, which were created in steps that constitute a process from a first state at which the branching occurred to a second state at which the branch ends, to a single processing object, thereby reducing the amount of data required for holding the processing objects.

12. A computer program product comprising:
a module which executes processing according to an instruction from a user;
a module which creates a processing object that represents the data processing content thus specified;
a module which holds the processing object thus created; and
a module which, in a case that the same kind of data processing is consecutively executed, reduces a plurality of processing objects created in the date processing to a single processing object, thereby reduces the amount of data required for holding the processing objects.

13. A computer program product comprising:
a module which executes data processing according to an instruction from a user;
a module which creates a processing object that represents the data processing content thus specified;
a module which holds the processing object thus created;
a module which, upon reception of an instruction to execute the reverse data processing for returning the state to the state before the data processing was executed from the state after the data processing was executed, executes the reverse data processing with reference to the processing object that corresponds to the data processing already executed; and
a module which, in a case that the data processing involved branching state transition, reduces a plurality of processing objects, which were created in steps that constitute a process from a first state at which the branching occurred to a second state at which the branch ends, to a single processing object, thereby reduces the amount of data required for holding the processing objects.
